# EUROPÄISCHE PATENTSCHRIFT

(11) **EP 3 557 350 B1**
(45) Veröffentlichungstag und Bekanntmachung des Hinweises auf die Patenterteilung: **02.07.2025**
(21) Anmeldenummer: 18000445.9
(22) Anmeldetag: 11.05.2018
(51) Int. Cl.: G05B 19/418

(54) **VERFAHREN UND VORRICHTUNG ZUM BEREITSTELLEN, ABRUFEN UND NUTZEN EINES DATENELEMENTS**
METHOD AND DEVICE FOR PROVIDING, RETRIEVING AND USING A DATA ELEMENT
PROCÉDÉ ET APPAREIL DE FOURNITURE, D'ACCÈS ET D'UTILISATION D'UN ÉLÉMENT DE DONNÉES

(30) Priorität: 18.04.2018 DE 102018003457
(43) Veröffentlichungstag der Anmeldung: 23.10.2019
(73) Patentinhaber: Reifenhäuser GmbH & Co. KG Maschinenfabrik, 53844 Troisdorf (DE)
(72) Erfinder: Fett, Thomas, 53840 Troisdorf (DE); Hilgers, Mark, 53844 Troisdorf (DE); Lettowsky, Christoph, 52074 Aachen (DE); Mager, Jens, 50678 Köln (DE); Rösner, Andreas, 53113 Bonn (DE); Stelter, Christian, 55218 Ingelheim (DE); Vodencarevic, Asmir, 90763 Fürth (DE); Walach, Paul, 53844 Troisdorf (DE); Geus, Hans-Georg, 53859 Niederkassel (DE)
(74) Vertreter: Meissner Bolte Partnerschaft mbB

(56) Entgegenhaltungen:
- EP-A2- 1 750 185
- US-A1- 2003 102 367
- US-A1- 2006 022 815
- US-A1- 2008 300 712
- US-B1- 6 563 417
- No Search
- STIELER SYLVIA: "Digitalisierung in der Kunststoffverarbeitenden Industrie", SONDERAUSGABE FÜR DIE IG BCE, 1 May 2015 (2015-05-01), pages 1 - 37, XP055847906, ISBN: 978-3-934859-54-8, Retrieved from the Internet <URL:https://igbce.de/resource/blob/12826/5ec061a334794f7362cd2375bc1ac2c0/digitalisierung-kunststoffverarbeitung-data.pdf> [retrieved on 20211005]
- WANG KE-SHENG: "Intelligent and integrated RFID (II-RFID) system for improving traceability in manufacturing", ADVANCES IN MANUFACTURING, vol. 2, no. 2, 1 June 2014 (2014-06-01), CN, pages 106 - 120, XP055848195, ISSN: 2095-3127, Retrieved from the Internet <URL:https://link.springer.com/content/pdf/10.1007/s40436-014-0053-6.pdf> [retrieved on 20211006], DOI: 10.1007/s40436-014-0053-6

## Beschreibung

Die Erfindung betrifft ein Verfahren zum Bereitstellen, Abrufen und Nutzen eines Datenelements und eine Vorrichtung zum Betreiben des Verfahrens.

Insbesondere betrifft die Erfindung ein Verfahren zum Bereitstellen, Abrufen und Nutzen eines Datenelements in der Wertschöpfungskette einer Bahnware aus Kunststoff zum Produzieren eines Endprodukts, mittels eines Kommunikationsprotokolls und eines Datenträgers zum stufenübergreifenden Austausch einer Mehrzahl verschiedener Datenelemente zum Produzieren des Endprodukts innerhalb der Wertschöpfungskette, wobei das Datenelement mittels des Kommunikationsprotokolls und des Datenträgers zum stufenübergreifenden Austausch einer Mehrzahl verschiedener Datenelemente abrufbar und nutzbar ist.

Die Wertschöpfungsketten industrieller Produkte unterliegen einer stetig ansteigenden Komplexität. Durch Neu- und Weiterentwicklungen bei den Rohstoffen, den Materialwissenschaften, den Technologien und Maschinen für die Rohstoffaufbereitung, den Technologien und Maschinen für die Halbzeugfertigung, den Technologien und Maschinen für die Weiterverarbeitung der Halbzeuge, den Prozessen in der Logistik und nicht zuletzt den Prozessen im Management der Wertschöpfungskette ergibt sich ein immer tiefer greifendes Geflecht untereinander abhängiger Informationen.

Die Produktion und Weiterverarbeitung von Bahnware aus Kunststoff unterliegt in jüngster Zeit einem starken Wandel. Die Möglichkeiten, bei der Produktion der Bahnware spezifische für den Endkunden wünschenswerte Eigenschaften zu erhalten, sind stark angewachsen, sodass die möglichen Eigenschaften der Endprodukte umfangreicher und die Endprodukte variantenreicher werden.

Dieser technologische Fortschritt erfordert jedoch gleichermaßen ein steigendes Maß an Abstimmung innerhalb der Wertschöpfungskette der Bahnware aus Kunststoff.

Maschinen für die Produktion von Bahnware erfordern zur robusten Umsetzung neuer Produkteigenschaften in wachsendem Umfang eine Abstimmung auf die Eigenschaften der eingesetzten Rohstoffe. Gleichermaßen müssen jedoch auch die Maschinen für die Weiterverarbeitung der Bahnware in stetig wachsendem Umfang auf die Eigenschaften der Bahnware abgestimmt werden.

Die Abstimmungsprozesse erfordern im speziellen einen Austausch von Daten, welche durch die steigende Anzahl an Eigenschaften immer individueller auf die einzelnen Waren angepasst werden müssen.

Die weitere Optimierung innerhalb der Wertschöpfungskette erfordert eine Optimierung der Einzelprozesse, welches ein höheres Maß an Interaktion zwischen den Akteuren in der Wertschöpfungskette erfordert. Diesem Maß an Interaktion kann in Folge der stetig steigenden und sich beschleunigenden Detailtiefe in Zukunft nur noch mit Verfahren und Vorrichtungen der Informationstechnologie begegnet werden.

Es ist also für alle Akteure innerhalb der Wertschöpfungskette von Bahnware aus Kunststoff wünschenswert, über die relevanten Daten der anderen Glieder in der Wertschöpfungskette verfügen zu können, und zwar idealerweise sowohl der zeitlich vorher in der Wertschöpfungskette liegenden Daten als auch der zeitlich später in der Wertschöpfungskette liegenden Daten, mit einfachen Worten also Daten sowohl der Zulieferer als auch der Abnehmer. Dazu ist die Verwendung einheitlicher Standards der Datenkommunikation wünschenswert.

Die WO 2017/174232 A1 offenbart ein Verfahren zum Bewerten eines Prozesses zum Herstellen einer Folienbahn, wobei eine Korrelation zwischen den Herstellprozessdaten und den Weiterverarbeitungsprozessdaten bei einer Folienherstellung hergestellt wird.

Die WO 2017/174223 A1 offenbart eine Vorrichtung und ein Verfahren für einen industriellen automatisierten Prozess, wobei ein Prozessdatenwert an eine im Prozess vor- oder nachgelagerte Einzelmaschine über eine Schnittstelle weitergegeben wird.

Die DE 10 2016 014 690 A1 offenbart ein Verfahren, bei welchem den Anlagenbedienern eine Vielzahl an Informationen von an der Extrusionsanlage ablaufenden Verfahrensprozessen angezeigt werden, wobei zumindest einige Informationen bezüglich erzielter Extrusionsergebnisse eines ersten Anlagenbedieners wenigstens einem weiteren Anlagenbediener derart angezeigt werden, dass die von dem wenigstens einem weiteren Anlagenbediener bediente Extrusionsanlage in Abhängigkeit von diesen Informationen betrieben wird, um hierdurch die Effektivität des Extrudierverfahrens zu steigern.

Die PCT/DE2017/000350 (nachveröffentlicht, von der selben Anmelderin) offenbart zahlreiche erfinderische Aspekte.

Der Beitrag Stieler Sylvia: "Digitalisierung in der Kunststoffindustrie" Sonderausgabe für die IG BCE, Mai 2015, Seiten 1-37 offenbart ein Verfahren zum Bereitstellen, Abrufen und Nutzen eines Datenelementes in einer Wertschöpfungskette einer Bahnware aus Kunststoff. Dort wird mittels eines RFID-Chips Daten entlang der Wertschöpfungskette aufgenommen und ausgewertet bzw. weiterverarbeitet.

Die US 2003/102 367 A1 offenbart ein Verfahren zum Austausch und Bereitstellen von Daten in einer Wertschöpfungskette. Hierzu werden Datenträger an dem Objekt (Zwischenprodukt) befestigt, welche Identifikations-, Material- und Produktionsdaten für die nächsten Stationen speichern.Der Erfindung liegt die Aufgabe zugrunde, dem Stand der Technik eine Verbesserung oder eine Alternative zur Verfügung zu stellen bzw. der PCT/DE2017/000350 eine Konkretisierung zu verleihen.

Nach einem ersten Aspekt der Erfindung wird die Aufgabe durch ein Verfahren nach Anspruch 1 gelöst.

Optionale Ausgestaltungen sind den Unteransprüchen zu entnehmen. Begrifflich sei hierzu Folgendes erläutert:
Ein "Datenelement" bezeichnet insbesondere den Singular von "Daten". Unter einem "Datenelement" wird eine Angabe, ein Zahlenwert oder im Allgemeinen eine Information verstanden, die durch Messung oder Beobachtung gewonnen wurde. Insbesondere werden elektronisch vorliegende Informationen als "Daten" bezeichnet. Ein "Datenelement" ist in diesem Sinn eine elektronische Information. Ein "Datenelement" ist dabei nicht auf die Art einer Information beschränkt. Insbesondere kann es sich um eine Zahl, ein Datum, einen Namen, einen Begriff oder eine beliebige andere Art einer elektronisch vorliegen den Information handeln. Ein Datenelement ist auf eine einzelne Information beschränkt.

Ein Datenelement kann ebenso kontextbedingt auch eine Mehrzahl von Informationen umfassen.

Auf ein "Datenelement" kann mittels einer Kennung zugegriffen werden.

Insbesondere kann ein Datenelement so aus dem Speicher, insbesondere einem standortunabhängigen Datenspeicher, geladen werden (Datenbankabfrage) oder in einem Datenspeicher gespeichert werden.

Insbesondere ist denkbar, dass ein Datenelement auf einem mobilen Datenträger weitergegeben oder ausgetauscht werden kann.

Eine "Information" ist eine Teilmenge an Wissen.

Ein "Datenträger" ist eine physische oder virtuelle Einrichtung zum Speichern von Daten.

Ein Datenträger kann einen "standortunabhängigen Speicher" oder im weitesten Sinne eine "Datenwolke" sein, die in der Wissenschaft und umgangssprachlich auch als "Cloud" bezeichnet wird. Eine Aufgabe des Datenträgers ist es, große Datenmengen effizient, widerspruchsfrei und dauerhaft zu speichern und benötigte Teilmengen der gespeicherten Daten in unterschiedlichen, bedarfsgerechten Darstellungsformen für Benutzer und Anwendungsprogramme bereitzustellen. In einer speziellen Ausführung kann der Datenträger zwar eine Datenübermittlung bewirken, aber keine Speicherung. Dies ist beispielsweise bei Computernetzwerk der Fall, sei es kabellos oder kabelbehaftet.

Ein "standortunabhängiger Speicher" ist ein Datenspeicher, der nicht von einem Standort abhängig ist oder in irgendeiner Weise an einen Standort gebunden ist. Vielmehr ist unter einem standortunabhängigen Speicher ein Speicher zu verstehen, welcher nicht ortsgebunden ist, insbesondere ist er nicht an eine Maschine oder eine Anlage oder einen Herstellungsprozess oder eine Produktionshalle oder ein Unternehmen oder ein Staatsgebiet oder eine Wertschöpfungskette gebunden.

Unter "Bereitstellen" eines Datenelements wird das Einspeichern einer Information auf dem Datenträger verstanden, sodass diese wieder abrufbar ist. Unter dem "Schreiben" eines Datenelements wird ebenfalls das "Bereitstellen" eines Datenelements verstanden.

Unter "Abrufen" eines Datenelements wird das Lesen einer Information auf dem Datenträger verstanden, sodass diese innerhalb vernetzter Systeme "nutzbar" ist.

Unter "Nutzen" eines Datenelements wird das Einsetzen der Information verstanden, die das Datenelement enthält. Beispielsweise kann die Information insbesondere innerhalb vernetzter Systeme zum Steuern und/oder zum Optimieren der Produktionsprozesse, zum Steuern und/oder zum Optimieren der Logistikprozesse oder zum Steuern und/oder zum Optimieren der Managementprozesse eingesetzt werden.

Eine "Wertschöpfungskette" stellt die "Stufen" der Produktion als eine geordnete Reihung von Tätigkeiten dar. Diese Tätigkeiten schaffen Werte, verbrauchen Ressourcen und sind in Prozessen miteinander verbunden. Unter "stufenübergreifend" wird verstanden, dass in die Tätigkeit mehrere Stufen involviert sind, insbesondere beim Austausch von Datenelementen.

Mit "Bahnware" wird eine Gattung von Produkten bezeichnet, insbesondere in Bahnen produzierte Halbzeuge aus Kunststoff. Beispiele für Bahnware sind einlagige Folienbahnen, schlauchförmige Folienbahnen, wobei der Schlauch aufgetrennt oder schlauchförmig belassen werden kann, zusammengelegte Folienschläuche und in Bahnen produzierte Flächengebilde aus Fasern begrenzter oder endloser Länge. Folienbahnen können einschichtig oder mehrschichtig sein. Beispiele für Produkte aus Bahnware sind Verpackungen von Süßwaren, Windeln, landwirtschaftliche Folien und Tragetaschen.

Generell sei bei "Kunststoff' insbesondere an thermoplastischen und/oder duroplastischen Kunststoff gedacht.

Ein "Produkt" bezeichnet ein auf einem technischen Weg hergestelltes Erzeugnis. Ein "Endprodukt" ist ein Fertigerzeugnis und eine Teilmenge des Produkts, welches vom Endkunden verwendet wird. Das Wort "Produkt" wird auch für alle Vorstufen des Endprodukts verwendet, insbesondere für Kunststoffgranulat, Bahnware, Rollenware und/oder andere Halbzeuge.

Unter dem "Produzieren" eines "Produkts" oder der "Produktion" wird ein durch Arbeit bewirkter Transfonnationsprozess verstanden, der aus natürlichen oder bereits weiterverarbeiteten Ausgangsstoffen unter Einsatz von Arbeitsmitteln und/oder Energie ein "Produkt" hhervorbringt.

Ein "Kommunikationsprotokoll" ist eine Vereinbarung, nach der ein Datenaustausch zwischen zwei Parteien und/oder Geräten stattfindet. Ein Kommunikationsprotokoll kann als eine Menge von Regeln definiert werden, die Syntax, Semantik und Synchronisation der Kommunikation bestimmen. Kommunikationsprotokolle können durch Hardware, Software oder eine Kombination von beiden implementiert werden. Auf der untersten Ebene definiert ein Protokoll das Verhalten der miteinander verbundenen Hardware. Insbesondere kann ein industrielles Kommunikationsprotokoll für den automatisierten Informationsaustausch beispielsweise zwischen Endgeräten wie Maschinen, Automaten, Fahrzeugen oder Containern untereinander oder mit einer zentralen Leitstelle zum Einsatz kommen, welches das Internet mit den verschiedenen Zugangsnetzen, wie dem Mobilfunknetz, nutzt. Ein Kommunikationsprotokoll wird unter anderem bei dem innerhalb einer Systemintegration notwendigen Datenaustausch benötigt, damit einzelne gegebenenfalls autonomen Systeme in die Lage versetzt werden Informationen mit Hilfe elektronischer Daten auszutauschen.

Konkret sei bei einem "Kommunikationsprotokoll" insbesondere an OPC-UA, insbesondere nach IEC 62541 und/oder DIN EN 62541 Teil 8, MQTT, insbesondere nach ISO/IEC 20922, und/oder AMQP, insbesondere nach ISO/IEC 19464 gedacht.

Eine "Maschine" ist ein technisches Gebilde mit beweglichen Bauteilen.

Unter "Cloud Computing" (deutsch Rechnerwolke oder Datenwolke) versteht man eine Bereitstellung von IT-Infrastruktur wie beispielsweise Speicherplatz, Rechenleistung oder Anwendungssoftware als Dienstleistung über das Internet. Eine "Cloud" ist daher ein Speicherplatz mit der besonderen IT-Infrastruktur über ein Rechnernetz zur Verfügung zu stehen, ohne dass sie auf einem lokalen Rechner installiert sein muss. Die Nutzung einer Cloud erfolgt dabei durch technische Schnittstellen und Protokolle. Eine IoT (Internet of Things) Cloud ist eine Plattform, die dazu designed ist Internet der Dinge (aka. Industrie 4.0) Daten zu speichern und zu prozessieren. Diese sind meistens Echtzeit-skalierbare Prozessierungseinheiten mit überdurchschnittlichen Speichervolumen.

Ein "Nachrichten Broker" (Nachrichten Vermittler, Message Broker) beschreibt eine Software-Einheit, die Nachrichten (Messages) innerhalb der IoT Cloud distribuiert. Der Nachrichten Broker kann zum Beispiel das Nachrichtenprotokill für M2M-Kommunikationen MQTT (Message Queue Telemetry Transport) benutzen. Diese ermöglicht die Übertragung von Telemetriedaten in Form von Nachrichten zwischen Geräten trotz hoher Verzögerungen oder beschränkten Netzwerken. Interessant ist, dass ein MQTT-Server ("Broker") die gesamte Datenlage seiner Kommunikationspartner hält, und so als Zustands-Datenbank benutzt werden kann. So ist es möglich, kleine unperformante MQTT-Geräte mit einem MQTT-Broker zu verbinden, wobei die Geräte Daten einsammeln und/oder Befehle entgegennehmen, während ein komplexes Lagebild nur auf dem MQTT-Broker entsteht und hier oder durch einen leistungsfähigen Kommunikationspartner ausgewertet werden kann. Stelleingriffe können so von einer oder mehreren leistungsfähigen Instanzen an den MQTT-Broker übermittelt und auf die einzelnen Geräte verbreitet werden. Durch diese Eigenschaft eignet sich MQTT sehr gut für Automatisierungslösungen und findet im Bereich IoT große Verbreitung.

Unter "Datenbankmanagementsysteme" (Abk: DBMS, English: Database Engines) versteht man Software, die für die Verwaltung (Speicherung, Abfrage) von logisch zusammengehörenden Daten zuständig ist. Dazu gehört zum Beispiel die "Time Series" DBMS, die für die Verwaltung von Zeitserien optimiert ist. Eine Zeitserie ist dadurch gekennzeichnet, dass zu jedem Eintrag ein zugehöriger Zeitstempel vorhanden ist. Time Series DBMS ermöglichen das effiziente Speichern und Abfragen von beliebigen Zeitserien und haben den Vorteil mit anderen DBMS-Typen (von Key-Value stores bis zu relationalen Systemen) verwaltet werden zu können. SQL kann als Programmierungssprache benutzt werden, um auf die DBMS und die Datenbänke zuzugreifen.

"Big Data" ("Massendaten") bezeichnet Datenmengen, welche beispielsweise zu groß, zu komplex, zu schnelllebig oder zu schwach strukturiert sind, um sie mit manuellen und herkömmlichen Methoden der Datenverarbeitung auszuwerten. Auch können Anonymisierungsverfahren von Big Data angewandt werden.

Big Data können in verschiedenen "Big Data Datenbanken" gespeichert werden und zwar unabhängig von der Größe, vom Format und von der Geschwindigkeit der Daten. Darüber hinaus können die Daten auf verschiedene Art, auf verschiedenen Plattformen und unter Verwendung verschiedener Sprachen verarbeitet und analysiert werden. Analysen der Daten können z.B. mit Batch-, Streaming- und interaktiven Analysen ausgeführt werden.

Zu Big Data Datenbanken gehören zum Beispiel BLOB Speicher ("binary large object storage"), im folgenden auch "Blob Storage" genannt. In Blob Storage können große Mengen unstrukturierter Objektdaten wie etwa Text- und Binärdaten gespeichert werden.

Über HTTP oder HTTPS kann von überall auf der Welt auf die Daten in Blob Storage zugegriffen werden. Blob Storages können als Cloudspeichersystem implementiert sein und können demnach verwendet werden, um Daten öffentlich auf der ganzen Welt zur Verfügung zu stellen oder um Anwendungsdaten privat zu speichern.

Auch gehören Data Lakes zu den Big Data Datenbanken. Ein Data Lake ist eine von Repositories zur Datenspeicherung. Der Data Lake speichert strukturierte und unstrukturierte Rohdaten in der Form, in der sie von der Datenquelle bereitgestellt werden. Data Lakes haben den Vorteil, dass nicht vorher bekannt sein muss, welche Analysen voraussichtlich durchgeführt werden sollen. Ein Data Lake kann demnach riesige Mengen an Rohdaten in ihrem Ursprungsformat in einer flachen Architektur speichern und bereithalten, bis diese benötigt werden.

Unter "maschinelles Lernen" (Englisch: Machine Learning) versteht man eine Prozessierung von großen Datenmengen (Big Data) mit variablen Parametern, die mit Hilfe von Trainingsdaten ständig angepasst werden, um aus diesen großen Datenmengen Schlussfolgerungen zu ziehen, die den Ergebnissen einer klassischen Analyse überlegen sind.

Dies geschieht auf Basis von Simulationen von künstlichen, neuronalen Prozessen, die eigenständig wiederkehrende Muster und Objekte anhand von Betriebsdaten erkennen können.

Es hat sich gezeigt, dass die Informationsdichte moderner Wertschöpfungsketten in der kunststoffverarbeitenden Industrie stetig zunimmt, insbesondere im Bereich der Bahnware. Ausgangsstoffe, Halbzeuge, Produkte und Endprodukte weisen stetig mehr bewertete Eigenschaften mit wachsenden Anforderungen an die gewünschten Spezifikationen auf Produktionsmaschinen, Weiterverarbeitungsmaschinen und die zugehörigen Produktions- und Weiterverarbeitungsprozesse werden stetig komplexer und ermöglichen eine immer weiter steigende Produktvielfalt. Gleichermaßen hat auch die Komplexität der Logistik mit den zugehörigen Prozessen sowie diejenige der Managementaufgaben stetig zugenommen, wodurch insgesamt ein immer dichter miteinander verflochtenes und immer stärker ineinandergreifendes Geflecht untereinander abhängiger Informationen entstanden ist.

Nachdem in der nahen Vergangenheit die Möglichkeiten, bei der Produktion von Bahnware spezifische für den Endkunden wünschenswerte Eigenschaften zu erhalten, stark angewachsen sind, sind auch die möglichen Eigenschaften der Endprodukte umfangreicher und die Endprodukte variantenreicher geworden. Damit einhergehend ist auch die Vielfalt der zu verarbeitenden Informationen in der Wertschöpfungskette der kunststoffverarbeitenden Industrie, insbesondere im Bereich der Bahnware, stetig gewachsen.

Der Stand der Technik sah bislang vor, dass insbesondere die Koordination von Produktion, Produkteigenschaften, Logistik und Management innerhalb der Wertschöpfungskette der kunststoffverarbeitenden Industrie überwiegend manuell durchgeführt wird, insbesondere im Bereich der Bahnware. Die Verarbeitung der beteiligten Informationen und die zu treffenden Entscheidung innerhalb der Prozesskette der Herstellung eines überwiegend aus Kunststoff bestehenden Halbzeugs oder Endprodukts wird erfolgt durch Menschen, die betreffende Informationen untereinander austauschen und weitergeben.

Abweichend wird hier eine Synchronisation des Waren- und Informationsflusses vorgeschlagen.

Dabei wird vorgeschlagen die Wertschöpfungskette von kunststoffbasierter Bahnware mit Informations- und Kommunikationstechnik zu verzahnen, insbesondere in den Bereichen Forschung und Entwicklung, Ausgangsstoff, Produktion von Bahnware, Weiterverarbeitung von Bahnware, Produktion von Endprodukten, Marktgeschehen, Logistik und Management.

Konkret wird unter anderem eine intelligente Vernetzung von Informationen auch mit Hilfe eines einheitlichen Kommunikationsprotokolls in der Wertschöpfungskette von kunststoffbasierter Bahnware vorgeschlagen, die vorteilhaft eine Automatisierung von Prozessen erlaubt, insbesondere eine Automatisierung von Produktionsprozessen, Logistikprozessen und Managementprozessen.

Durch das hier vorgeschlagene Management von Daten und Informationen mit Hilfe von einem standardisierten Datenelement, wird insbesondere die Darstellung, die Abwicklung und die Automatisierung von Prozessen besonders vorteilhaft vereinfacht. Zusätzlich kann hierdurch vorteilhaft erreicht werden, dass die Generierung integriert ausgewerteter Zusatzinformationen deutlich vereinfacht wird. So kann beispielsweise anhand der wertschöpfungskettenübergreifend gesammelten und ausgetauschten Informationen der energetische Aufwand pro Produkt oder die freigesetzte Menge an CO2 bestimmt werden.

Hiermit kann unter anderem eine schnelle Anpassungsfähigkeit von Produktionsanlagen vorteilhaft erreicht werden, wodurch die Individualisierung von Produkten ökonomisch vorangetrieben werden kann und insbesondere auch Kleinserien von auf die individuellen Kundenwünsche maßgeschneiderten Produkten zu attraktiven Kosten erreicht werden können.

Gemeinsam mit dem wertschöpfungskettenübergreifenden Austausch von Informationen unter Hilfestellung eines einheitlichen Kommunikationsprotokolls soll entsprechend dem hier vorgeschlagenen Verfahren auch über die Rechte der Daten bestimmt werden, sodass vorteilhaft erreicht werden kann, dass nur berechtigte Kreise Informationen lesen, schreiben oder löschen können. Insbesondre wird konkret unter anderem vorgeschlagen, dass derjenige in der Wertschöpfungskette, der eine Information bereitstellt, auch darüber entscheiden kann, wer auf diese Information Zugriff erhalten soll.

Insbesondere wird vorgeschlagen, das sowohl Personen als auch Datenverarbeitungsanlagen, beispielsweise diejenige einer Produktionsanlage, auf die Informationen zugreifen können sollen, sodass Daten sowohl von Personen als auch von Datenverarbeitungsanlagen geschrieben, gelesen und gelöscht werden können.

So wird unter anderem vorgeschlagen, den Waren- und Informationsfluss in der Wertschöpfungskette von kunststoffbasierter Bahnware stufenübergreifend mit Hilfe eines Datenelements zu synchronisieren, wobei Informationen in einer Stufe der Wertschöpfungskette auf das Datenelement bereitgestellt werden können und diese Informationen auch in einer zweiten Stufe der Wertschöpfungskette abgerufen und genutzt werden können.

Dabei ist es denkbar, dass eine Information von einem Datenelement auf jeder Stufe der Wertschöpfungskette abgerufen und genutzt werden kann, sofern eine entsprechende Berechtigung zum Abrufen und Nutzen der Information vorliegt.

Es wird konkret vorgeschlagen, dass ein Zugriff auf eine Information in einem Datenelement im Rahmen einer statistischen Auswertung auch anonymisiert geschehen kann, sofern eine entsprechende Berechtigung vorliegt. So ist es möglich mehrere Informationen statistisch auszuwerten, ohne eine einzelne Information einem konkreten Warenfluss zuordnen zu können.

Weiterhin ist ein digitales Rollenprotokoll erfindungsgemäß, welches eines oder mehrere Datenelemente aufweist und eindeutig mit einer Rolle verknüpft ist, die für den Transport von Bahnware sowie das Aufrollen und das Abrollen von Bahnware eingerichtet ist.

Dabei stellt das digitale Rollenprotokoll eine Art von einem digitalen Beipackzettel dar, welcher alle relevanten und/oder interessanten Informationen enthält, die mit der der Rolle zugehörigen Bahnware verknüpft sind.

Insbesondere ist das digitale Rollenprotokoll eindeutig mit der Identifikation der Rolle verküpft. So wird hier konkret unter anderem vorgeschlagen, dass die Rolle einen Identifikationscode aufweist, insbesondere einen Strichcode, einen QR-Code oder einen Matrix-Code, oder die Rolle mit einem RFID-Chip ausgestattet ist.

So wird unter anderem vorgeschlagen, dass der Identifikationscode oder der RFID-Chip mit einem entsprechend geeigneten elektronischen Datenerfassungsgerät ausgelesen werden kann, wodurch die Verknüpfung zwischen der Rolle und dem digitalen Rollenprotokoll beispielsweise eindeutig hergestellt werden kann, sodass bei vorliegender Berechtigung des elektronischen Datenerfassungsgeräts ein Datenelement bereitgestellt, abgerufen oder genutzt werden kann. Entsprechend dem hier gemachten Vorschlag befindet sich ein dem digitalen Rollenprotokoll zugehöriges Datenelement auf einem standortunabhängigen Speicher.

Konkret ist auch denkbar, dass das dem digitalen Rollenprotokoll zugehöriges Datenelement auf einem Datenspeicher vorliegt, der in das elektronische Datenerfassungsgerät eingeführt ist oder mit dem das elektronische Datenerfassungsgerät zum Datenaustausch vernetzt ist.

Insbesondere wird beansprucht, dass das digitale Rollenprotokoll Informationen aus der Wertschöpfungskette der Bahnware enthält die im Zusammenhang mit der Bahnware auf der Rolle stehen. Insbesondere wird vorgeschlagen, dass die Informationen den Zeitraum zwischen Rollenwechsel und Rollenwechsel betreffen, also dem Zeitraum ab dem die Rolle mit der Bahnware bewickelt wurde und bis zu dem die Rolle mit Bahnware bewickelt wurde.

Dabei wird auch vorgeschlagen die entsprechenden Zeiten in einem Datenelement des digitalen Rollenprotokolls bereitzustellen.

Weiter wird vorgeschlagen, dass die Informationen auf dem digitalen Rollenprotokoll bei Bedarf verdichtet werden können. Ändert sich eine Prozesseigenschaft die auf dem digitalen Rollenprotokoll festgehalten werden soll beispielsweise nicht, so reicht es aus diesen konstanten Wert nur einmal auf dem digitalen Rollenprotokoll festzuhalten. Ändert sich eine Größe hingegen im Zeitverlauf, so wird vorgeschlagen die Information in einem konstanten Zeitintervall in dem digitalen Rollenprotokoll bereitzustellen, wobei das Zeitintervall für unterschiedliche Größen unterschiedlich sein kann.

Ebenfalls wird vorgeschlagen, dass mehrere Rollen über ihre Identifikation der Rolle über ein Datenelement zu einem Auftrag zugeordnet werden können, wodurch die Logistik im Rahmen eines konkreten Kundenauftrags vorteilhaft vereinfacht werden kann.

Vorteilhaft kann damit insgesamt erreicht werden, dass eine Synchronisation von Waren und digitalem Informationsfluss erreicht werden kann. So kann eine eindeutige Zuordnung der aufgezeichneten Information über die Identifikation der Rolle zur Bahnware der Rolle durchgeführt werden. Diese Informationen können im Folge des erfindungsgemäßen Verfahrens in z.B. SQL Datenbanken hinterlegt werden.

Erreichbare Vorteile der vorliegenden Erfindung sind ein gesteigertes Maß an Informationsaustausch, der eine Prozessoptimierung der Wertschöpfungskette von Bahnware aus Kunststoff in den Bereichen Rohstoffe, Halbzeugproduktion, Weiterverarbeitung der Halbzeuge, Logistik und Management der Wertschöpfungskette ermöglicht. So können beispielsweise seriell durchlaufene Maschinen auf die individuellen Wareneigenschaften vorteilhaft abgestimmt werden. Insbesondere können Variationen in den Prozessparametern auf einer Stufe der Wertschöpfungskette in den Folgestufen vorteilhaft berücksichtigt werden. Mit anderen Worten liefert das Datenelement auf dem digitalen Rollenprotokoll relevante Informationen für die weitere Verwendung, sodass beispielsweise die Weiterverarbeitungsmaschine bereits automatisch auf die entsprechend benötigten Parameter für die nächsten Weiterverarbeitungsschritte eingestellt werden kann. Außerdem kann eine optimierte Produktionsplanung und -steuerung aller Akteure eine Weiterverarbeitung von B-Ware in einem anderen nicht so anspruchsvollen Endprodukt dazu führen, dass der Ausschuss von Ware vorteilhaft reduziert werden kann.

Eine Prozessoptimierung über ein einzelnes Glied der Wertschöpfungskette hinweg erlaubt ferner vorteilhaft, dass der Energiebedarf bis zum Endprodukt reduziert werden kann.

Insgesamt kann die Erfindung maßgeblich vorteilhaft dazu beitragen, dass die Effizienz innerhalb der Wertschöpfungskette um das Halbzeug Bahnware deutlich verbessert werden kann.

Bevorzugt weist das Datenelement eine Stoffeigenschaft auf, insbesondere eine Stoffeigenschaft eines Produkts, insbesondere eines Ausgangsstoffs und/oder eines Halbzeugs und/oder eines Endprodukts.

Begrifflich sei hierzu Folgendes erläutert:
Eine "Stoffeigenschaft" ist eine stoffspezifische, charakteristische Größe, die einen Stoff kennzeichnet. Jeder Stoff zeichnet sich durch eine einzigartige Kombination von Stoffeigenschaften aus, anhand derer er identifiziert werden kann. Eingesetzte Stoffe sind beispielsweise ein Kunststoffgranulat sowie Hilfsstoffe und Zusatzstoffe.

Ein "Ausgangsstoff' wird als Ausgangsmaterial für weitere Verarbeitungsstufen in der Produktion verwendet. Ein Beispiel für einen Ausgangsstoff für die Produktion von Bahnware ist granulierter Kunststoff sowie ein Hilfsstoff und/oder ein Zusatzstoff.

Insbesondere ist ein Ausgangsstoff ein polymerer Rohstoff (Polyolefine, Polykondensate, PP, PE, PA, PET, PBT, PLA). Ein Ausgangsstoff kann insbesondere durch MFI (melt flow index), intrinsische Viskosität und/oder eine Schmelztemperatur definiert werden.

Ein Ausgangsstoff kann ein Additiv aufweisen, insbesondere eine Farbe, ein Antiblock, ein Antifog, ein slip additive, einen Füllstoff (beispielsweise CaCo3) und/oder einen Haftvermittler.

Ein "Halbzeug" ist ein Erzeugnis im Produktionsprozess und ebenfalls ein Produkt, welches so lange als Halbzeug bezeichnet werden kann, bis das Endprodukt fertiggestellt ist oder bis es zu einem Endprodukt weiterverarbeitet wurde.

Halbzeuge sind insbesondere Blasfolien, Flachfolien, Kunststoffplatten, Kunststofftafeln und Vliese aus Kunststofffasern, insbesondere Spunbond-Vliese oder Meltblown-Vliese oder Composite-Vliese. Alle hier genannten Halbzeuge sind Bahnware oder werden aus dieser hergestellt, sodass alle hier bezeichneten Halbzeuge im Zuge dieser Anmeldung als Bahnware zu verstehen sind und der Begriff Bahnware separat für jedes der genannten Halbzeuge benutzt wird.

Nach der Definition bleibt ein Halbzeug so lange ein Halbzeug, bis es ein Endprodukt ist, welches verpackt zum Endkunden (Verbraucher) unterwegs ist. Insbesondere sind Halbzeuge:
- Vliese, insbesondere Vliese die noch zu einer Windel verarbeitet werden,
- Folien, insbesondere Folien, die noch bedruckt werden,
- Bedruckte Folien, insbesondere bedruckte Folien, die noch in ein Verpackungsprodukte umgeformt werden.

So wird hier unter anderem vorgeschlagen, dass eine Stoffeigenschaft in einem Datenelement bereitgestellt wird, wodurch auch eine Stoffeigenschaft, insbesondere eine Stoffeigenschaft eines Produkts, insbesondere eines Ausgangsstoffs und/oder eines Halbzeugs und/oder eines Endprodukts in die Synchronisation des Waren- und Informationsflusses der Wertschöpfungskette für Bahnware einbezogen werden kann.

Dadurch wird ermöglicht, auch Eigenschaften von Stoffen, die beispielsweise inline in einer Produktionsvorrichtung oder offline in einem Labor ermittelt wurden, in das digitale Rollenprotokoll aufzunehmen oder allgemein mit einem Datenelement verfügbar zu machen.

Vorteilhaft kann damit erreicht werden, dass auch Stoffeigenschaften, insbesondere Stoffeigenschaften die ein einem Labor ermittelt wurden, mit der Bahnware zu synchronisieren und diese für eine Optimierung in der Wertschöpfungskette der Bahnware bereitstellen zu können.

Insbesondere kann eine Stoffeigenschaft mit einer Identifikation einer Rolle verknüpft werden.

Optional weist das Datenelement eine Produkteigenschaft auf, insbesondere eine Produkteigenschaft eines Ausgangsstoffs und/oder eines Halbzeugs und/oder eines Endprodukts.

Begrifflich sei hierzu Folgendes erläutert:
Eine "Produkteigenschaft" ist eine physikalische oder chemische Eigenschaft eines Produktes, insbesondere eines Halbzeugs oder eines Endprodukts. Beispiele von Produkteigenschaften von Bahnware sind Dichte, Geometrie, Transparenz und vieles mehr. Die Summe mehrerer Produkteigenschaften kann auch als "Qualität" eines Produkts bezeichnet werden.

Unter einer "Produkteigenschaft" einer Bahnenware, insbesondere einer Folie oder eines Vlieses, sei beispielsweise eine Festigkeit, eine Dehnung, ein Flächengewicht, eine Luftdurchlässigkeit, eine Barriereeigenschaft, eine optische Eigenschaft einer Folie, eine Oberflächenenergie oder eine Klebrigkeit verstanden. Weiterhin kann eine Produkteigenschaft auch Inspektionsdaten aufweisen, die Aufschluss darüber geben, ob eine Bahnware fehlerfrei ist oder ob eine insbesondere definierte Stelle nicht fehlerfrei ist.

Ähnlich verhält sich eine Eigenschaft eines Produkts, wobei in einem der letzten Prozessschritte ein Halbzeug in ein Endprodukt konvertiert. Auch hier ist es möglich, dass die beschreibenden Eigenschaften des Halbzeugs nicht direkt ersichtliche Eigenschaften sind, sondern in einer Weitervereinbearbeitungsmaschine beschrieben werden, insbesondere ein sogenanntes Laufverhalten. Unter einem Laufverhalten versteht man wie eine Rolle abgewickelt werden kann und wie gerade diese, ohne Falten, ohne Knicke durch die Weiterverarbeitung smaschine laufen. Eine Rückmeldung dieses Laufverhaltens und eine Analyse eines Datenelements kann Einstellwerte für Prozessparameter identifizieren, die das Laufverhalten optimieren.

Es ist optional denkbar eine Produkteigenschaft, insbesondere eine Produkteigenschaft eines Ausgangsstoffs und/oder eines Halbzeugs und/oder eines Endprodukts in ein Datenelement aufzunehmen, sodass vorteilhaft erreicht werden kann, dass eine Produkteigenschaft mit der Bahnware synchronisiert und für Prozessoptimierungen in der Wertschöpfungskette Verwendung finden kann.

Weiter wird vorgeschlagen, dass die Produkteigenschaft entweder inline mit einem geeigneten Sensor oder offline in einem Labor anhand einer Materialprobe bestimmt wird.

Insbesondere kann so vorteilhaft erreicht werden, dass eine Produkteigenschaft in das digitale Rollenprotokoll der Bahnware aufgenommen werden kann.

Vorzugsweise weist das Datenelement eine Prozesseigenschaft auf, insbesondere eine Produktionsprozesseigenschaft und/oder eine Logistikprozesseigenschaft und/oder eine Managementprozesseigenschaft.

Begrifflich sei hierzu Folgendes erläutert:
Eine "Prozesseigenschaft" ist eine Eigenschaft eines Prozesses, insbesondere eines Produktionsprozesses, eines Logistikprozesses oder eines Managementprozesses.

Eine Prozesseigenschaft ist beispielsweise eine Temperatur, ein Druck, eine Drehzahl, eine Geschwindigkeit oder deren jeweilige Abweichung über der Zeit oder daraus berechnete weitere Prozesskenngrößen.

Die Eigenschaften einer im "Produktionsprozess" eingesetzten Maschine sind "Produktionsprozesseigenschaften". Beispiele für Produktionsprozesse sind Produktion und Produktweiterverarbeitung.

Eigenschaften eines "Logistikprozesses" fallen ebenfalls in die Gattung der Prozesseigenschaften, werden als "Logistikprozesseigenschaften" bezeichnet und sind beispielsweise Distributionswege, Lagerorte, Lagerhaltung und Transportarten.

Eine "Logistikprozesseigenschaft" ist insbesondere auch eine Infomation über eine Lagerbedingung, insbesondere eine Lagerzeit, eine Lagertemperatur und/oder eine Feuchtigkeit, eine Transportbedingung, insbesondere eine Temperatur und/oder eine relative Feuchtigkeit, eine Verpackungsinformation, insbesondere eine Information darüber wieviele Rollen auf der Palette befindlich sind und/oder wie ein Produkt oder ein Halbzeug etikettiert ist.

Weiterhin fallen die Eigenschaften eines "Managementprozesses" unter die Prozesseigenschaften und werden als "Managementprozesseigenschaften" bezeichnet. Beispiele für einen Managementprozess sind die Durchführung einer Datenanalyse, einer Erzeugung von Expertenwissen, einer Produktionsplanung, einer Produktionssteuerung und einer Steuerung von Forschungs- und Entwicklungsaktivitäten.

Eine Datenanalyse im Rahmen eines Managementprozesses kann verschiedene Aspekte verfolgen:
- Absichern einer gewünschten Prozesseigenschaft (Soll-/Ist-Vergleich), statistische Prozesskontrolle,
- Rückführung eines Datenelements in die Produktionsanlage, welches dort insbesondere verwendet wird, um mittels machine learning die Prozesseinstellungen zu optimieren,
- Generieren von Expertenwissen durch Big Data Analyse und Ableiten von Prozesskettenübergreifenden und/oder wertschöpfungsstufenübergreifenden Korrelationen.

Aus diesen Ergebnissen werden Forschungs- und Entwicklungsprozesse angestoßen und/oder unterstützt.

Insbesondere ist konkret unter anderem denkbar, dass ein Managementprozess eine Produktionsplanung umfasst, wobei dazu die Ist-Daten mindestens eines Prozesses verwendet werden können, sodass jederzeit eine Produktionsplanung auf Basis der realen Bedingungen in der Prozesskette möglich ist. Ziel einer Produktionsplanung ist es die Produktionsprozesse zu optimieren.

Dies ist insbesondere wichtig, wenn sich dynamische Änderungen ergeben, beispielsweise im Hinblick auf Lieferengpässe bei den Ausgangstoffen oder in ähnlicher Weise wichtig im Zusammenhang mit Abrufaufträgen oder bei Just In Time Lieferungen.

So wird hier konkret angeregt, dass eine Prozesseigenschaft, insbesondere eine Produktionsprozesseigenschaft und/oder eine Logistikprozesseigenschaft und/oder eine Managementprozesseigenschaft mit einem Datenelement in die Synchronisation von Waren- und Informationsfluss aufgenommen wird, beispielsweise mittels des digitalen Rollenprotokolls der Bahnware.

Mit der hier unter anderem vorgeschlagenen Aufnahme einer Logistikprozesseigenschaft in den wertschöpfungskettenübergreifenden Datenaustausch, kann vorteilhaft erreicht werden, dass ein Ausgangsstoff, ein Halbzeug, ein Produkt oder ein Endprodukt in seinem Weg durch die Wertschöpfungskette nachverfolgt werden kann, wodurch es auch vorteilhaft einfacher aufgefunden werden kann.

Durch die Bereitstellung einer Produktionsprozesseigenschaft ist konkret unter anderem denkbar, dass die Wartung einer Produktionsmaschine oder einer Weiterverarbeitungsmaschine automatisiert und entsprechend frühzeitig geplant werden kann, wodurch insgesamt auch die Prozesskette innerhalb der Wertschöpfungskette vorteilhaft optimiert werden kann.

Ebenfalls ist denkbar, dass eine Rolle mit Bahnware in einem Weiterverarbeitungsprozess gestückelt wird und diese Stückelung in einer Produktionsprozesseigenschaft bereitgestellt wird.

Für den Fall einer Stückelung einer Rolle aus Bahnware wird konkret unter anderem vorgeschlagen, jedes Stück mit einer separaten abweichenden Identifikation auszustatten.

Weiterhin wird für diesen Fall konkret unter anderem vorgeschlagen, einen Vererbungsprozess von Datenelementen einzuführen, sodass ein Datenelement von einer Eltern-Rolle automatisiert auf eine gestückelte Kinder-Rolle übertragen werden kann. Ebenfalls wird vorgeschlagen sowohl bei dem digitalen Rollenprotokoll der Eltern-Rolle als auch bei den digitalen Rollenprotokollen der Kinder-Rollen eine Eltern-Kinder Beziehung in einer Prozesseigenschaft bereitzustellen.

Weiterhin wird hier vorgeschlagen, in einer Logistikprozesseigenschaft eine Information darüber bereitzustellen, auf welcher Weiterverarbeitungsmaschine die Bahnware entsprechend der Produktionsprozessplanung weiterverarbeitet werden soll. Auf diese Weise kann vorteilhaft erreicht werden, dass die Zuordnung einer Bahnware innerhalb des Logistikprozesses vereinfacht werden kann.

So kann insgesamt vorteilhaft erreicht werden, dass eine Prozesseigenschaft in einer abweichenden Stufe der Wertschöpfungskette insbesondere für die Prozessoptimierung genutzt werden kann.

Innerhalb der Logistik, die im Zusammenhang mit der Produktion eines Endprodukts steht, müssen in der Prozesskette immer wieder Informationen über den Standort eines Halbzeugs und/oder einer Menge einer fertigen Ware und/oder eines benötigten Rohstoffs oder Halbzeugs bereitgestellt werden.

Die Randbedingungen an einen solchen Produktionsplanungsprozess bei dem die Logistikabläufe in die Planung integriert sind, sind unbestritten umfangreich und wächst mit einer steigenden Anzahl an Weiterverarbeitungsschritten stetig an. Hier wird konkret unter anderem vorgeschlagen, dass die Randbedingungen der Warenströme in die Produktionsplanung integriert werden. Dies wird hier vorteilhaft dadurch ermöglicht, dass die Synchronisation der Waren- und Dienstleistungsströme die für eine solche logistikübergreifende Planung benötigten Informationen in entsprechenden Datenelementen bereitstellen und/oder hinterlegen kann.

Konkret wird hier also vorgeschlagen, bereits während der Produktionsplanung die zum Planen notwendigen und die sich bei der Planung ergebenden Randbedingungen aus der Koordination des Logistikprozesses in den entsprechenden Datenelementen anzulegen und diese so für eine Optimierung der Planung verwenden zu können. Dabei ist insbesondere denkbar, dass der Planungsprozess bei dem gewünschten Fertigstellungsdatum des Endproduktes beginnt und ausgehend von dort, sowie von den jeweiligen Verfügbarkeiten von Transportkapazitäten, von Lagerkapazitäten, von Weiterverarbeitungsmaschinen, von Produktionsmaschinen, von Ausgangsstoffen sowie die jeweiligen variablen Kosten berücksichtigend die Produktionsplanung optimiert.

Insbesondere betrifft dies beispielsweise zunächst die Menge der im Lager zur Verfügung stehenden Rohstoffe und den entsprechenden Bedarf, insbesondere spezifiziert nach Menge und Zeitfenster, für die geplante Produktion und gegebenenfalls eine je nach Verfügbarkeit bevorzugt angepasste Produktion.

Typischerweise wird das hergestellte Halbzeug vor der Weiterverarbeitung zwischengelagert. Dazu ist der Transport von einer Produktionsmaschine in ein Lager erforderlich.

Der Transport kann als einzelne Rolle oder als Bündel von Rollen auf einer Palette erfolgen. In jedem Fall ist eine Information an den Transporteur für den Transport aus der Maschine erforderlich. Für den Transport aus der Maschine in ein Lager und/oder aus einem Lager an einen Transportunternehmer sind wieder Informationen erforderlich.

Diese Gedankenkette lässt sich ebenso auf andere Logistikprozesse übertragen, welche ebenso vorteilhaft mit der Kenntnis der entsprechenden Informationen über den Produktionsprozess optimiert werden können.

Ein weiteres Beispiel ist bezogen auf die Weiterverarbeitung der Halbzeuge, bei welcher in der Prozesskette erneut Informationen hinsichtlich des Abrufes aus dem Lager und der Verfügbarkeit der Weiterverarbeitungsmaschine benötigt werden. Dabei kann es ebenfalls erforderlich sein, dass die Informationen von mehreren Halbzeugarten berücksichtigt werden müssen. So etwa wenn in einem Weiterverarbeitungsschritt zwei Rollen unterschiedlicher Halbzeuge zu einer Bahn laminiert werden.

Weiterhin ist es gängige Praxis, dass bei der Herstellung von Rollen häufig sogenannte Nutzenschnitte gemacht werden, sodass nicht eine große Mutterrolle hergestellt wird, die später der Weiterverarbeitung zugeführt wird, sondern es werden Rollen hergestellt, welche kleinerer Liegebreiten aufweisen als die extrudierte Breite.

Die hier konkret unter anderem vorgeschlagene Synchronisation der Waren- und Informationsströme ermöglicht es vorteilhaft, dass eine logistikübergreifende Produktionsplanung durchgeführt werden kann, wodurch einerseits die Planungssicherheit vergrößert und andererseits die Prozesskosten durch Nutzung unter anderem von synergistischen Effekten sowie von Kostenmodellen reduziert werden können.

Bevorzugt weist das Datenelement eine Markteigenschaft auf.

Begrifflich sei hierzu Folgendes erläutert:
Eine "Markteigenschaft" ist eine Eigenschaft des Markts. Ein "Markt" bezeichnet den Ort des Zusammentreffens von Angebot und Nachfrage von und nach einem Produkt. In der Wertschöpfungskette der Bahnware besteht eine Vielzahl unterschiedlicher Märkte für die unterschiedlichen Produkte, insbesondere ist dieser Markt global. Beispiele für Markteigenschaften sind beispielsweise die Nachfrage, das Angebot und der Preis.

Bei einem "Marktmodell" sei insbesondere an ein Modell zum Konsumverhalten gedacht.

Insbesondere kann dabei beschrieben werden, wann was von wem gekauft wird und/oder welcher Konsument legt die Produktauswahl fest und/oder wie beeinflusst Marketing und Werbung die Kaufentscheidung des Konsumenten.

Unter einer "Markteigenschaften" eines Produkts wird eine Eigenschaft verstanden, welche im engeren Sinn wie aus Sicht des Konsumenten ersichtlich, fühlbar, erlebbar, sichtbar ist.

Hier wird konkret unter anderem vorgeschlagen, dass eine Markteigenschaft unmittelbar, wenn auch nur aus dem Konsumverhalten ablesbar, an den Endprodukthersteller zurückfließt.

Ebenfalls ist konkret unter anderem denkbar, dass Markteigenschaften durch Kundenbefragungen in Daten verwandelt werden können, sodass diese fühlbaren, erlebbaren Produkteigenschaften als Daten vorliegen und ausgewertet werden können.

Vorteilhaft kann damit erreicht werden, dass für die wertschöpfungskettenübergreifende Datenanalyse und Modellbildung auch Eigenschaften des Marktes einbezogen werden können, wodurch beispielsweise die Markterfordernisse oder das Verhalten der Konsumenten oder Käufern analysiert werden kann. Markteigenschaften können dabei vorteilhafterweise auch statistisch ausgewertet werden.

Optional erfolgt der Austausch von einem Datenelement ortsübergreifend, insbesondere ist der Austausch von einem Datenelement weltweit möglich.

Begrifflich sei hierzu Folgendes erläutert:
Unter "ortsübergreifend" wird verstanden, dass der Austausch von einem Datenelement nicht an einen Ort gebunden ist, sondern über die Grenzen eines einzelnen Orts hinausgehend möglich ist.

So wird vorgeschlagen, dass das Datenelement auf einem standortunabhängigen Datenspeicher abgespeichert wird, der derart vernetzt ist, dass auf ihn ortsübergreifend, in besonderes bevorzugter Weise weltweit zugegriffen werden kann.

Vorteilhaft kann damit erreicht werden, dass die Synchronisation von Waren- und Informationsfluss auch ortsübergreifend, insbesondere weltweit, gewährleistet werden kann, wobei ein Datenspeicher nicht mit der Bahnware oder dem Warenfluss im Allgemeinen mittransportiert werden muss. Somit kann auch vorteilhaft erreicht werden, dass die Logistik des Waren- und Informationsflusses vereinfacht werden kann.

Vorzugsweise erfolgt der Austausch von einem Datenelement parteiübergreifend, insbesondere erfolgt der Austausch von einem Datenelement unternehmensübergreifend.

Begrifflich sei hierzu Folgendes erläutert:
Unter "parteiübergreifend" wird verstanden, dass der Austausch von einem Datenelement nicht an eine Partei gebunden ist, sondern über die Grenzen einer einzelnen Partei hinausgehend möglich ist. Eine "Partei" ist dabei eine Gruppe gleichgesinnter. Ebenfalls sind eine Produktionseinheit und/oder eine wirtschaftliche Einheit und/oder eine Liegenschaft eines Unternehmens und/oder ein Unternehmen als eine Partei zu verstehen.

Unter "unternehmensübergreifend" wird verstanden, dass der Austausch von einem Datenelement nicht an ein Unternehmen gebunden ist, sondern über die Grenzen eines einzelnen Unternehmens hinausgehend möglich ist. Ein "Unternehmen" ist eine wirtschaftlich selbstständige Organisationseinheit.

Hier wird konkret unter andrem vorgeschlagen, dass die Synchronisation des Waren- und Informationsflusses auch über eine Unternehmensgrenze hinaus stattfindet.

Vorteilhaft kann damit erreicht werden, dass Informationen einer vollständigen wertschöpfungskette auch denn genutzt werden können, wenn mehr als ein Unternehmen an der Wertschöpfungskette eines Produktes beteiligt ist.

Bevorzugt erfolgt der Austausch von einem Datenelement mit Hilfe einer standardisierten Softwareschnittstelle.

Begrifflich sei hierzu Folgendes erläutert:
Eine "Softwareschnittstelle" ist der Teil eines elektronischen Systems, welcher der Kommunikation zwischen verschiedenen Einheiten dient.

Dabei wird ein auszutauschendes Datenelement über eine Softwareschnittstelle und ein daraus resultierendes Kommunikationsprotokoll übergeben.

Beispielsweise wird ein Datenelement von einer Produktionsmaschine mittels eines Kommunikationsprotokolls insbesondere an einen standortunabhängigen Datenspeicher übertragen. Konkret sei bei einem Kommunikationsprotokoll insbesondere an OPC-UA, insbesondere nach IEC 62541 und/oder DIN EN 62541 Teil 8, MQTT, insbesondere nach ISO/IEC 20922, und/oder AMQP, insbesondere nach ISO/IEC 19464 gedacht. In diesem Falle sind Sender und Empfänger im gleichen Netzwerk und eine Authentifizierung ist systematisch gegeben.

In allen anderen Fällen wird ein Datenelement mit einer Kennung versehen über eine Softwareschnittstelle und ein zugehöriges Kommunikationsprotokoll übergeben. Grundsätzlich besteht eine Softwareschnittstelle aus
- einem geeigneten Ein- und/oder Ausgabegerät, insbesondere einem elektronischen Datenerfassungsgerät,
- einer zur Weitergabe der Daten oder zur Abfrage der Daten notwendigen Authentifizierung
- gegebenenfalls einer Möglichkeit die Daten zu verschlüsseln
- und einem Kommunikationsprotokoll welches die sichere Übertragung von Daten ermöglicht und Feedback über die Übertragungsqualität gibt.

Vorteilhaft kann damit erreicht werden, dass das Bereitstellen, Abrufen und Nutzen von Informationen aus einem oder mehreren Datenelementen durch eine einheitliche standardisierte Softwareschnittstelle zu den Informationen vereinfacht und vergünstigt werden kann.

Optional können sowohl die erste Stufe als auch die zweite Stufe das Datenelement lesen und/oder schreiben.

Konkret ist bei entsprechender Berechtigung der beteiligten Parteien denkbar, dass eine Information von einem Datenelement stufenübergreifend in der Wertschöpfungskette für Bahnware bereitgestellt, abgerufen und genutzt werden kann.

Vorteilhaft kann damit erreicht werden, dass die Synchronisation des Waren- und Informationsaustauschs auch stufenübergreifend in einer Wertschöpfungskette durchgeführt und genutzt werden kann.

Vorzugsweise erfolgt das Nutzen des Datenelements seitens der zweiten Stufe zum Weiterverarbeiten desjenigen Produkts, anhand dessen Produktion auf der ersten Stufe das Datenelement generiert und in den Datenspeicher bereitgestellt worden ist, wobei die zweite Stufe chronologisch nach der ersten Stufe liegt.

Vorteilhaft kann damit erreicht werden, dass ein während der Produktion eines Halbzeugs oder eines Produkts bereitgestelltes Datenelement auch für die Prozessoptimierung der Weiterverarbeitung genutzt werden kann.

Bevorzugt ist die Reihenfolge der Stufen nicht chronologisch, wobei die erste Stufe wie auch die zweite Stufe jeweils eine unterschiedliche beliebige und nicht notwendigerweise benachbarte Stufe in der Wertschöpfungskette sein können.

Hier wird also vorgeschlagen, dass ein Datenelement bei einer etwaigen Berechtigung durch einen Nutzer oder eine Datenverarbeitungseinrichtung wertschöpfungskettenübergreifend genutzt werden kann. Dabei ist beispielsweise auch möglich, dass der Lieferant eines Ausgangsstoffs auf eine Markteigenschaft zugreifen kann, die in einer chronologischen Betrachtung erst weit nach der Lieferung des Ausgangsstoffes bereitgestellt werden kann. Insbesondere ist hier auch denkbar, dass sich ein Lieferant eines Ausgangsstoffs oder ein anderer Teilnehmer an der Wertschöpfungskette über einen geeigneten Zugang mit einem digitalen Rollenprotokoll verbinden kann und die dort gespeicherten Informationen zu jedem Zeitpunkt einsehen, auslesen und nutzen kann.

Vorteilhaft kann damit erreicht werden, dass die wertschöpfungskettenübergreifende Integration der Informationsnutzung verbessert werden kann.

Optional wird das Produkt, insbesondere das Endprodukt, mit einer individuellen Produktkennung versehen und weist diese nachfolgend auf.

Begrifflich sei hierzu Folgendes erläutert:
Eine "Kennung" ist ein mit einer bestimmten Identität verknüpftes Merkmal zur eindeutigen Identifizierung des die Kennzeichnung tragenden Objekts. Eine "Produktkennung" ist die Kennung eines Produkts. Eine "Maschinenkennung" ist die Kennung einer Maschine. Eine "Logistikkennung" ist eine Kennung eines Logistikdienstleisters, eines Lagers, eines Transportfahrzeugs oder vergleichbarem. Eine "Managementkennung" ist die Kennung eines Managementmitarbeiters, einer Managementabteilung, einer automatisierten Datenauswerteroutine oder etwas Vergleichbares.

Eine "Kennung", ebenfalls als "Identifikator" (ID) bezeichnet, kann individuelle Merkmale enthalten. So kann eine Kennung chronologische Daten, individuelle ID des Herstellers/Produzenten, Stück-ID und individuelle Auftrags ID des Endabnehmers enthalten. Diese Information ist sowohl optisch als auch maschinenlesbar gemäß dem Stand der Technik. Weitere Informationen sind individuell auf den Endabnehmer anpassbar einer Kennung hinzufügbar. Weitere Merkmale, die nicht in einer Kennung direkt enthalten sind, lassen sich individuell über den Datenspeicher und/oder das wertschöpfungsüber greifende Management System lokal oder global abrufen, indem nach einem herstellerspezifischen Verfahren der Abruf ermöglicht wird, insbesondere durch ein proprietäres Verfahren. Die Kennung zeigt dann vergleichbar eines programmiertechnischen Zeigers auf einen Datensatz im Speicher.

Es wird konkret vorgeschlagen, ein Datenelement neben der Information, insbesondere neben einer Eigenschaft, mit der spezifischen Kennung der Produktionsmaschine, des Logistikers oder vergleichbarem zu befüllen, sodass eine Zuordnung zwischen Information und Kennung innerhalb eines Datenelements besteht. Diese kann dann für nachgelageite Prozessschritte zur sicheren Identifikation der Herkunft einer Information genutzt werden.

Konkret wird hier also vorgeschlagen, dass ein Endprodukt mit einer individuellen Produktkennung versehen wird, die vergleichbar mit den Möglichkeiten einer Identifikation einer Rolle einer Bahnware verwendet werden kann. So ist konkret unter anderem denkbar, dass eine Information in einem Datenelement über eine Kennung des Endproduktes verknüpft ist und über diese Verknüpfung bereitgestellt, ausgelesen oder genutzt werden kann.

Vorteilhaft kann damit erreicht werden, dass eine Synchronisation des Waren- und Informationsflusses bis hin zum Endprodukt ermöglicht werden kann.

Außerdem ist vorteilhaft erreichbar, dass eine Information aus einem Datenelement bei vorliegender Berechtigung über die Verknüpfung mit einer Endproduktkennung bereitgestellt, ausgelesen und genutzt werden kann.

Vorzugsweise wird eine Produktionsmaschine für Bahnware aus Kunststoff mit einer individuellen Produktionsmaschinenkennung versehen und weist diese nachfolgend auf.

Begrifflich sei hierzu Folgendes erläutert:
Eine "Produktionsmaschine" ist eine Maschine zur Produktion einer Bahnware aus Kunststoff Ausgangsmaterial der Produktionsmaschine ist ein granulierter Kunststoff, gegebenenfalls ein Hilfsstoff und gegebenenfalls ein Zusatzstoff.

Eine "Produktionsmaschinenkennung" ist die Kennung einer Produktionsmaschine.

Es wird hier vorgeschlagen, dass eine Produktionsmaschine mit einer Produktionsmaschinenkennung versehen wird.

Vorteilhaft kann damit erreicht werden, dass über die Produktionsmaschinenkennung alle Datenelemente alles Halbzeuge, Produkte oder Endprodukte verknüpft werden können, die die Produktionsmaschinenkennung in einem Datenelement aufweisen.

Ebenfalls kann so erreicht werden, dass die Produktionsmaschine für ein Halbzeug, ein Produkt oder ein Endprodukt identifiziert werden kann, die an dem Produktionsprozess beteiligt war, sofern ein entsprechendes Datenelement des Halbzeugs, des Produkts oder des Endprodukts eine Produktionsmaschinenkennung aufweist.

Bevorzugt wird eine Weiterverarbeitungsmaschine für Bahnware aus Kunststoff mit einer individuellen Weiterverarbeitungsmaschinenkennung versehen und weist diese nachfolgend auf

Begrifflich sei hierzu Folgendes erläutert:
Eine "Weiterverarbeitungsmaschine" ist einer Maschine zur Weiterverarbeitung von Bahnware, die Kunststoff aufweist oder überwiegend aus Kunststoff besteht.

Eine "Weiterverarbeitungsmaschinenkennung" ist die Kennung einer Weiterverarbeitungsmaschine.

Es versteht sich, dass sich die Vorteile, wie für die Produktionsmaschinenkennung der Produktionsmaschine vorstehend beschrieben, auch auf eine Weiterverarbeitungsmaschine mit einer Weiterverarbeitungsmaschinenkennung erstrecken.

Ebenfalls wird hierdurch wird eine Verknüpfung der jeweiligen Anlagenkomponente unmittelbar mit den Informationsquellen erreicht. So ist es beispielsweise möglich, vor Ort (beispielsweise unmittelbar vor der Anlagenkomponente selber) folgende Informationen auf beispielsweise einem Bildschirm mit einer Nutzerschnittstelle anzuzeigen: Momentane Verfahrensparameter und/oder Verläufe von Verfahrensparametern und/oder Steuereinstellungen und/oder in Frage kommende Ersatzteile für die Produktionsmaschine oder Weiterverarbeitungsmaschine und/oder eine Kommunikationsmöglichkeit des Anbieters und/oder eines Rohstofflieferanten (Telefonnummer, automatisch entworfene E-Mail zwecks Bestellungen oder dergleichen) und/oder kaufmännische Daten (noch im Lager vorrätige Rohstoffmenge, bereits getätigte Nachbestellungen und dergleichen) und/oder eine Kommunikationsmöglichkeit eines Kunden.

Optional wird ein Transportfahrzeug für einen Transport des Produkts mit einer individuellen Transportfahrzeugkennung versehen und weist diese nachfolgend auf.

Begrifflich sei hierzu Folgendes erläutert:
Ein "Transportfahrzeug" ist ein Fahrzeug, welches für den Transport des Produkts geeignet ist.

Eine "Transportfahrzeugkennung" ist die Kennung eines Transportfahrzeugs.

Es wird somit angeregt, dass ein Transportfahrzeug mit einer individuellen Transportfahrzeugkennung versehen wird. So ist konkret unter anderem denkbar, dass eine Information in einem Datenelement über eine Kennung des Transportfahrzeugs verknüpft ist und über diese Verknüpfung bereitgestellt, ausgelesen oder genutzt werden kann.

Vorteilhaft kann damit erreicht werden, dass eine Synchronisation des Waren- und Informationsflusses auch innerhalb der Logistikprozesse ermöglicht werden kann.

Außerdem ist vorteilhaft erreichbar, dass eine Information aus einem Datenelement bei vorliegender Berechtigung über die Verknüpfung mit einem Transportfahrzeug bereitgestellt, ausgelesen und genutzt werden kann.

Erfindungsgemäß wird das Datenelement über das Datenerfassungsgerät mit dem Produkt und einer Produktionsmaschine und/oder der Weiterverarbeitungsmaschine und/oder Transportfahrzeug als zumindest zweiter Stufe verknüpft und bereitgestellt und/oder genutzt.

Begrifflich sei hierzu Folgendes erläutert:
Ein Datenelement wird mit Hilfe mobiler Endgeräte angezeigt, erfasst und verknüpft Ein anzeigen von Daten ist dabei auch als lesen von Daten zu verstehen. Ein derartiges mobiles Endgerät wird als "Datenerfassungsgerät" bezeichnet.

Ein "Datenerfassungsgerät" kann ein mobiles Datenerfassungsgerät sein oder mit einer Maschine stationär verbunden sein. Es ist eine elektronische Einheit, die organisiert mit einem Datenelement und/oder einer Vielzahl von Datenelementen (Datenmenge) umgeht und dabei das Ziel verfolgt, Informationen über diese Datenmenge zu gewinnen oder diese Datenmenge zu verändern. Dabei werden die Daten in Datensätzen erfasst, nach einem vorgegebenen Verfahren durch Mensch oder Maschine verarbeitet und als Ergebnis ausgegeben.

Vorteilhaft kann damit erreicht werden, dass ein Datenelement mit einem mobilen oder stationären elektronischen Datenerfassungsgerät einfach bereitgestellt, ausgelesen oder genutzt werden kann.

Bevorzugt wird die Produktkennung und/oder die Produktionsmaschinenkennung und/oder die Weiterverarbeitungsmaschinenkennung und/oder die Transportfahrzeugkennung optoelektronisch und/oder elektromagnetisch gelesen.

Begrifflich sei hierzu Folgendes erläutert:
Unter "optoelektronisch" werden alle Verfahren verstanden, die die Umwandlung von elektronisch erzeugten Daten und Energien in Lichtemissionen ermöglichen und umgekehrt.

Vorteilhaft kann damit erreicht werden, dass eine Identifikation einer Rolle oder einer Kennung, insbesondere eines Strichcodes, eines QR-Codes oder eines Matrix-Codes, sein kann und optoelektronisch in einfacher Art und Weise gelesen werden kann, beispielsweise mit einem mobilen elektronischen Datenerfassungsgerät, wobei beim Lesen des Codes eine Verknüpfung mit dem Datenelement hergestellt wird, sofern eine entsprechende Nutzungsberechtigung vorliegt.

Ebenfalls kann vorteilhaft erreicht werden, dass ein Datenerfassungsgerät elektromagnetisch den RFID-Chip einlesen kann, der zur Kennzeichnung einer Ware, eines Produkts, einer Produktionsmaschine, einer Weiterverarbeitungsmaschine oder eines Transportfahrzeugs eingesetzt wird.

Optional ist der Datenträger ein standortunabhängiger Datenspeicher, der ortsübergreifend und/oder parteiübergreifend verfügbar ist.

Vorteilhaft kann damit erreicht werden, dass eine Information eines Datenelements standortunabhängig bereitgestellt, ausgelesen oder genutzt werden kann.

Erfindungsgemäß ist die Bahnware aus Kunststoff ein Spunbond-Vlies oder ein Meltblown-Vlies oder ein Composite-Vlies oder eine Blasfolie oder ein Flachfolie oder eine Kunststoffplatte oder eine Kunststofftafel.

Begrifflich sei hierzu Folgendes erläutert:
Ein "Vlies" ist insbesondere ein Gebilde aus Fasern begrenzter Länge, Endlosfasern oder geschnittenen Garnen jeglicher Art und jeglichen Ursprungs, die auf irgendeine Weise zu einer Faserschicht oder einem Faserflor zusammengefügt und auf irgendeine Weise miteinander verbunden worden sind, insbesondere ein Spunbond-Vlies oder ein Meltblown-Vlies oder ein Composite-Vlies.

Beim "Spunbond-Vlies" werden die Filamente oder Fasern wie beim herkömmlichen Spinnverfahren aus Schmelze oder Lösung ersponnen. Dazu wird ein Polymergranulat aufgeschmolzen und einer Spinndüse zugeführt. Die austretenden Fäden (Filamente) wer den unmittelbar aerodynamisch oder mechanisch abgezogen und dabei verstreckt. Die Filamente werden in kreisförmigen Bögen abgelegt.

Es versteht sich, dass sich die Vorteile des ersten Aspekts der Erfindung. wie vorstehend beschrieben, von einer Bahnware auch auf Spunbond-Vlies erstrecken.

Beim "Meltblown-Vlies" werden die Filamente oder Fasern wie beim herkömmlichen Spinnverfahren aus Schmelze oder Lösung ersponnen. Dazu wird ein Polymergranulat aufgeschmolzen und einer Spinndüse zugeführt. Die austretenden Fäden (Filamente) werden noch flüssig durch einen Heißluftstrom zerrissen. Dadurch entstehen feine Einzelfasern.

Es versteht sich, dass sich die Vorteile des ersten Aspekts der Erfindung, wie vorstehend beschrieben, von einer Bahnware auch auf Meltblown-Vlies erstrecken.

Beim "Composite-Vlies" handelt es sich um ein Vlies, welches aus einer Komponente aus Spunbond-Vlies und einer Komponente aus Meltblown-Vlies besteht.

Es versteht sich, dass sich die Vorteile des ersten Aspekts der Erfindung, wie vorstehend beschrieben, von einer Bahnware auch auf Composite -Vlies erstrecken.

Eine "Blasfolie" ist eine Folienbahn aus Kunststoff, die im Blasfolienverfahren hergestellt worden ist.

Es versteht sich, dass sich die Vorteile des ersten Aspekts der Erfindung, wie vorstehend beschrieben, von einer Bahnware auch auf Blasfolie erstrecken.

Eine "Flachfolie" ist eine Folienbahn aus Kunststoff, die im Gießfolienverfahren hergestellt worden ist.

Es versteht sich, dass sich die Vorteile des ersten Aspekts der Erfindung, wie vorstehend beschrieben, von einer Bahnware auch auf Flachfolie erstrecken.

Eine "Kunststoffplatte" ist eine Kunststoffbahn, die in einem Kunststoffgießverfahren hergestellt worden ist.

Es versteht sich, dass sich die Vorteile des ersten Aspekts der Erfindung, wie vorstehend beschrieben, von einer Bahnware auch auf eine Kunststoffplatte erstrecken.

Eine "Kunststofftafel" ist eine Tafel aus Kunststoff, die in einem Kunststoffgießverfahren hergestellt worden ist. Kunststofftafeln können aus Bahnware hergestellt werden und werden hier auch unter den Begriff der Bahnware gefasst.

Es versteht sich, dass sich die Vorteile des ersten Aspekts der Erfindung, wie vorstehend beschrieben, von einer Bahnware auch auf eine Kunststofftafel erstrecken.

Die wertschöpfungskettenübergreifende Synchronisation der Waren- und Informationsströme weist einen oder mehrere zentrale und/oder dezentrale Datenspeicher auf. Das Ein- und Auslesen der Informationsströme erfolgt über ein Datenerfassungsgerät. Das Datenerfassungsgerät kann dabei ein mobiles tragbares oder ein festinstalliertes Gerät sein, welches einen Identifikator, insbesondere mittels einem RFID-Chip, einem QR-Code, einem Bar-Code, einem Strich-Code und dergleichen einlesen und/oder erzeugen kann. Das Gerät kann dabei eine Authentifizierung vornehmen und somit individuelle kontextsensitive Lese- und/oder Schreibrechte erlauben. Teilnehmer aus der Wertschöpfungskette sind entweder handelnde Personen und/oder Maschinen und/oder Einrichtungen wie z.B. Rohstoff und Rohstoffhersteller, Reaktoren zur Herstellung von Ausgangsprodukten der Extrusion, Kunststoffverarbeitungsanlagen, Bediener von Kunststoffverarbeitungsanlagen, Halbzeuge, genauer gesagt Rollen von Bahnware, Weiterverarbeitungsmaschinen (Schrumpf-Verpackungsanlage, Prüfvorrichtung, Schrumpftunnel, Schrumpfhaubenanlage, Beschichtungsanlage, Kaschieranlage, Lamineranlage, Folienanlage, Umrollmaschine bestehend aus z.B. Abwickler und/oder Aufwickler, Metallisierer, Druckmaschine, Tiefziehanlage, Absackanlage, Haubenstretcher, Wickelstretchautomat, Windelmaschine, etc.), Bediener von Weiterverarbeitungsmaschinen, Labor zur Ermittlung von offline Kennwerten, Mitarbeiter eines Labors zur Ermittlung von offline Kennwerten und/oder Eigenschaften, Insepektionsanlagen zur Ermittlung von inline und/oder offline Kennwerten und/oder Eigenschaften, Lager, Mitarbeiter im Lager, Transport, Mitarbeiter im Transportwesen innerhalb eines Betriebes oder zwischen verschiedenen Betriebsstätten derselben oder mindestens zwei er verschiedener Firmen, Produktionsplaner und Management zur Steuerung und Optimierung einzelner Prozesses oder gesamter Prozessketten. Dabei ist es vorgesehen, dass die Daten aus dem Lebenszyklus einer Ware in der Wertschöpfungskette jederzeit kontextsensitiv visualisierbar und auswertbar sind. Die Menge an einsehbarer und/oder abrufbarer Information hängt dabei von der Berechtigung des einzelnen Teilnehmers der Prozesskette ab und wird von dem Datenerfassungsgerät gemäß eines einstellbare Berechtigungsprofils gesteuert, welches über die entsprechende Authentifikation entscheidet.

Gemäß der Erfindung ist es zum Beispiel bei der Anlieferung von neuen Rohstoffen, beispielsweise Kunststoffgranulaten vorgesehen, damit verbundene Informationen wie z.B. die Art des Rohstoffs, das Herstellungsdatum und den Herstellungsort, den Reaktor, die bei der Produktion eingesetzten Filter, Zustand des Granulierers, die Chargen-/Lotnummer, die Qualität des Granulats selber (Stippen), die Eigenschaften der Ausgangsstoffe (Molekulargewichtsverteilung, MFI, Viskosität), ein vom Hersteller empfohlenes spätestes Verarbeitungsdatum und so weiter, einzulesen. Das Einlesen der Information(en) kann nach der Anlieferung der Ware in Form von Säcken oder Oktabins mit einem im elektronischen Datenerfassungsgerät integrierten Scanner direkt am verpackten Rohmaterial selber erfolgen oder aber durch die Bereitstellung der Informationen im Speicher durch den Rohstoffhersteller, sodass zu Produktionsbeginn nur eine Referenzierung der abgelegten Informationen zu den aktuell zur Verarbeitung anstehenden Rohmaterial erfolgt. So kann auf Basis der Qualität der Ware im Lager die Produktion hinsichtlich der zu erreichenden Qualität des Halbzeugs geplant werden. In ähnlicher Art und Weise können die Informationen von Ware die zur Anlieferung in Silos vorgesehen ist, in den Speicher eingelesen werden.

Die Anlage zur Herstellung einer aufgewickelten Bahn, also einer Rolle. ist eine Extrusionsanlage. Die Extrusionsanlage kann zur Produktein- und/oder Produktumstellung Informationen aus dem Speicher anfordern. Der Trigger zur Anforderung dieser Information kann entweder durch einen Bediener der Anlage, eine Mitarbeiter in der Arbeitsvorbereitung oder automatisch erfolgen. Die Information enthält Angaben zur Rezeptur (Genaue Benennung von Art und Menge der verwendeten Rohstoffe, usw.) sowie Maschineneinstellgrößen. Das Einlesen derartiger Informationen über eine Schnittstelle gegenüber der manuellen Eingabe durch einen Bediener bietet den Vorteil, dass Fehler und damit Ausschuss in der Produktion durch falsch eingestellte Parameter reduziert werden.

Genauso, wie die Anlage Informationen über ein geeignetes Erfassungsgerät aus einem Speicher liest, schreibt es diese Informationen in den Speicher, die für die Weiterverarbeitung des/der Halbzeuge relevant sind. Informationen können unter anderem sein: Herstelldatum, Herstellzeit, d.h. Startzeitpunkt und Endzeitpunkt der Rolle, Herstellort, die verwendeten Maschine (Typ, Hersteller, Maschinennummer, Wartungszustand), Rezeptur (Genaue Benennung von Art und Menge der verwendeten Rohstoffe), Umgebungsbedingungen bei der Herstellung (Luftfeuchte, Temperatur und Luftdruck), Maschineneinstellgrößen, Prozesskenngrößen und inline erfasste Qualitätsparameter des hergestellten Halbzeugs (z.B. Stippen).

Das Produkt des Extrusionsprozesses ist ein sogenanntes Halbzeug. Je Rollenschnitt kann ein Halbzeug entweder eine Rolle sein oder es entstehen mehrere Halbzeuge, d.h. mehrere Rollen im Fall von einem oder mehreren sogenannten Nutzenschnitten. In jedem Fall soll gemäß der Erfindung jedes Halbzeug, d.h. jede Rolle, mit mindestens einem Identifikator versehen werden. Ein Identifikator wird dabei bevorzugt sowohl am Anfang als auch am Ende der Rolle auf der Bahn aufgebracht. Das Aufbringen der Kennung erfolgt dabei besonders bevorzugt auf den ersten und letzten Metern der Bahn redundant. In einer besonders bevorzugten Ausführungsform wird ein Identifikator sowohl längs- als auch quer zur Maschinenrichtung zwei oder mehrfach aufgebracht. So kann vorteilhaft verhindert werden, dass bei Beschädigung oder Verlust eines Identifikators eine Referenzierung einer Rolle zu einem zugehörigen Datenelement und damit mittelbar zu einer Information nicht mehr möglich ist.

Die Erfindung sieht weiter vor, dass auch eine Referenzierung zu einem offline in einem Labor ermittelten Qualitätsparameter, insbesondere einer Eigenschaft, möglich ist. Dazu ist es zum Beispiel vorgesehen, von einer hergestellten Rolle an der Extrusionsanlage eine oder mehrere Proben (d.h. z.B. einen kurzen Abschnitt oder Ausschnitt aus der Bahn) zu entnehmen, jede dieser Proben mit einem Identifikator zu versehen und an diesen jeweils in einem Labor die gewünschten Prüfungen vorzunehmen. Über den jeweils aufgebrachten Identifikator ist dabei eine eindeutige Zuordnung einer Rolle zu einer Probe und zu der/den durchgeführten Prüfungen im Labor möglich, da auch an den Laborgeräten ein Datenerfassungsgerät vorgesehen ist. Damit ist vorteilhaft eine eindeutige Zuordnung von hergestellter Ware zu der offline ermittelten Qualität möglich. Die eindeutige Speicherung und Zuordnung von einer Information, die die Herstellung einer Rolle betreffen, insbesondere die erreichte Qualität, sind zum Einen ein wichtiger Baustein bei der Dokumentation der Qualität und zum Anderen Ausgangspunkt für die Weiterverarbeitung der Halbzeuge. Auf Basis dieser Informationen kann eine Weiterverarbeitungsmaschinen vorteilhaft eingestellt werden, da diese wie die Extrusionsanlage über ein Datenerfassungsgerät verfügt, welches den Austausch von Information mittels eines Datenelements ermöglicht.

Bei der Herstellung und Weiterverarbeitung von Halbzeugen nimmt die Logistik eine zentrale Rolle ein. Es ist für die Teilnehmer dieser Teile der Prozesskette je nach Perspektive vorteilhaft stets zu wissen, wann wieviele Rollen wo produziert, zwischengelagert, abtransportiert oder angeliefert werden. Daher ist es vorgesehen, dass auch ein Bereich wie Lager und Transport/Logitstik über ein Datenerfassungsgerät Informationen mittels eines Datenelements austauschen. Es ist zum Beispiel im Sinn der Erfindung vorgesehen, dass eine Produktionsmaschine die Fertigstellung einer Rolle über ein geeignetes Datenerfassungsgerät meldet und in Abhängigkeit der Bestückung eines Zwischenlagers an der Extrusionsmaschine ein Transport der hergestellten Rolle (verpackt oder unverpackt) in ein Lager erfolgt. Die Transportanforderung für die Auslagerung von Halbzeugen weg von der Extrusionsanlage in ein Zweischenlager und/oder Lager kann entweder durch einen Maschinenbediener oder automatisch erfolgen. In jedem Fall erfolgen die Anforderung des Transports, die Dokumentation des Transports und die Einlagerung der Rollen über einen Informationsaustausch über entsprechend geeignete Datenerfassungsgeräte. Beispielsweise kann ein Staplerfahrer den Empfang einer Rolle und der Einlagerung in einen bestimmten Lagerort mit einem elektronischen Datenerfassungsgerät mittels dem eingebauten Scanner erfassen bzw. dokumentieren.

Nach einem zweiten Aspekt der Erfindung löst die Aufgabe ein Verfahren zum Klassifizieren einer Prozessqualität in der mehrere Stufen aufweisenden Wertschöpfungskette einer Bahnware aus Kunststoff, beispielsweise einer Blasfolienbahn, einer Flachfolienbahn oder einer Vliesbahn, zum Produzieren eines Endprodukts, beispielsweise einer Verpackungsfolie, einer Landwirtschaftsfolie, einer Thennoformfolie, einer Kunststoffplatte oder einer Windel, wobei das Klassifizieren anhand von Informationen und/oder Eigenschaften über die Stufen und/oder einen Rohstoff und/oder ein Halbzeug und/oder das Endprodukt erfolgt, insbesondere mittels einem Verfahren nach einem ersten Aspekt der Erfindung, und zwar dergestalt, dass für mindestens eine Information oder Eigenschaft, bevorzugt für mehrere, besonders bevorzugt für alle, ein Gutbereich und/oder ein Schlechtbereich definiert werden, wobei entlang der Stufen Informationen und/oder Eigenschaften ermittelt und - bevorzugt authentifiziert mittels eines Kennzeichens oder eines Identifikators - als Datenelement lokal oder vor allem entfernt in einem Datensatz über ein Kommunikationsprotokoll übertragen und gespeichert werden, und zwar entweder als die reine Information und/oder Eigenschaft, oder nur als enthalten im Gutbereich oder Schlechtbereich, oder beides gemeinsam, oder je nach Stufe unterschiedlich, wobei anhand des Datensatzes das Klassifizieren eines Prozesses der Stufe, einer Prozesskette entlang mehrerer Stufen, des Endprodukts und/oder eines Herstellers erfolgt, bevorzugt mit mindestens einer Klasse aus den Klassen "In allen Stufen im Gutbereich", "In einer bestimmten Anzahl von Klassen im Gutbereich", "In bestimmten besonders wichtigen Klassen im Gutbereich".

Auf diese Weise kann eine Zertifizierung für die Produkte, für Prozessschritte und/oder für die Hersteller auf den verschiedenen Stufen ermöglicht werden.

Es ist im Sinne der Erfindung vorgesehen, dass Informationen aus der gesamten Herstellungskette angefangen bei den Ausgangstoffen hin bis zum Enderzeugnis beim Verbraucher als Informationen in mindestens einem Datenelement einem oder mehreren Wertschöpfungsstufen der Wertschöpfungskette zugeordnet werden können. Auf diese Weise wird unter anderem eine Synchronisation von Waren- und Informationsströmen ermöglicht. Es ist dabei ausdrücklich vorgesehen, dass eine Information kontextbezogen ist; d.h. den Bedürfnissen des jeweiligen Bausteins der Prozesskette zur Verfügung steht. Durch die Verknüpfung einer Information mit einer Kennung in einem Datenelement kann dieser Kontextbezug hergestellt werden.

Weiterhin ist konkret unter anderem vorgesehen, dass Informationen, die die Herstellung des Halbzeugs betreffen, im Sinne eines Zertifikats oder eines Garantiezertifikats an in der Prozesskette nachgelagerte Teilnehmer sowie gegebenenfalls auch an vorgelagerte Teilnehmern bereitgestellt werden kann. Genauer gesagt ist es vorgesehen, dass Informationen, die von einem Teilnehmer der Prozesskette spezifiziert werden, und somit von einem anderen Teilnehmer der Prozesskette einzuhalten sind, als Signatur auf einem Datenelement abgelegt werden. Dieses Datenelement kann als Grundlage für ein Zertifikat dienen, welches einem oder mehreren Teilnehmern der Prozesskette zur Verfügung gestellt werden kann. Dabei ist es entscheidend, dass Informationen über eine entsprechende Schnittstelle zwischen zwei Wertschöpfungsstufen dem Datenelement additiv hinzugefügt werden, wodurch ein Lebensprotokoll entsteht.

Insbesondere ist so konkret unter anderem denkbar, dass der Rohstofflieferant, welcher die Ausgangsstoffe zuliefert, ein Garantiezertifikat ausstellt, welches die Eigenschaften eines Ausgangsstoffs garantiert.

Eine Information über einen Ausgangsstoff betrifft beispielsweise dessen Rohstoffklasse.

Dabei wird unter anderem zwischen Polymeren, Füllstoffen, Haftvermittlern, Additiven (Anti-Melt Fracture, Anti-Block) und anderen unterschieden. Es ist ausdrücklich vorgesehen, dass diese Informationen nicht nur die Art des Rohstoffs selber betreffen, sondern auch das Herstellungsdatum und den Herstellungsort, den Reaktor, die Chargen-/Lotnummer, die Qualität der Ausgangsstoffe (Stippen), die Eigenschaften der Ausgangsstoffe (Molekulargewichtsverteilung, MFI, Viskosität), ein vom Hersteller empfohlenes spätestes Verarbeitungsdatum und vergleichbares.

Weitere Informationen, die einem Datenelement als Information hinzugefügt werden, können das Herstelldatum, die Herstellzeit, d.h. Startzeitpunkt und Endzeitpunkt der Rolle, den Herstellort, die verwendete Maschine (Typ, Hersteller, Maschinennummer, Wartungszustand), Rezeptur (genaue Benennung von Art und Menge der verwendeten Rohstoffe), Umgebungsbedingungen bei der Herstellung (Luftfeuchte, Temperatur und Luftdruck), Maschineneinstellgrößen, Prozesskenngrößen und Qualitätsparameter des hegestellten Halbzeugs betreffen.

Zu den in einem Datenelement abgelegten Informationen können im Sinne der Erfindung auch Informationen hinsichtlich des Transports und der Lagerung (Umgebungsbedingungen, Lagerdauer) gehören, da diese häufig die Weiterverarbeitung beeinflussen können.

So ist es zum Beispiel bekannt, dass Folie nur in einem bestimmten Zeitraum nach ihrer Herstellung in einem gewissen Zeitfenster in einem zweiten Schritt in einer MDO prozessstabil verstreckt werden können, da es ansonsten vermehrt zu einer unzulässig starken Lochbildung als Folge der fortschreitenden Nachkristallisation kommt. Auf der anderen Seite erfordern gewisse Schritte in der Prozesskette bei der Verarbeitung laminierter Folienverbunde Ablagerzeiten bevor diese in kleinere Einheiten geschnitten werden. Somit erlaubt der Identfikator diese Information in der Produktionsplanung sowie der Prozessplanung nutzen zu können.

Die gesammelten Informationen werden über die Prozesskette kumulativ gesammelt.

So wird hier beispielsweise nach diesem Aspekt der Erfindung ermöglicht, dass innerhalb einer Stufe ein Zertifikat über die in der jeweiligen Stufe erlangten Eigenschaften automatisiert ausgestellt und den nachgelagerten Stufen der Wertschöpfungskette zugänglich gemacht werden kann.

Weiterhin wird ermöglicht, dass auch ein Zertifikat ausgestellt werden kann, welches die Eigenschaften aus mehreren Wertschöpfungsstufen der Wertschöpfungskette enthält.

Damit kann vorteilhaft ermöglicht werden, dass den nachgelagerten Stufen in der Wertschöpfungskette mittels eines Zertifikats garantiert werden kann, welche Eigenschaften ein Halbzeug oder ein Produkt oder ein Endprodukt aufweist. Damit kann weiterhin vorteilhaft erreicht werden, dass eine nachgelagerte Stufe der Wertschöpfungskette etwaige Mängel in dem erzeugten Produkt, welche auf mangelhafte und fehlerhaft zertifizierte Eigenschaften einer vorgelagerten Wertschöpfungsstufe zurückzuführen sind, auf die vorgelagerte Stufe zurückführen kann und im Falle eines Garantiezertifikats dort auch den entsprechenden Schadensersatz herbeiführen kann.

Nach einem dritten nicht erfindungsgemäßen Aspekt löst die Aufgabe eine Verwendung von Daten, die mittels eines Verfahrens nach dem ersten Aspekt der Erfindung bereitgestellt worden sind, zum Konstruieren einer Produktionsmaschine oder einer Weiterverarbeitungsmaschine oder einer Anlage, welche in der Wertschöpfungskette von Bahnware aus Kunststoff, insbesondere einem Spunbond-Vlies, einem Meltblown-Vlies, einem Composite-Vlies, einer Blasfolie, einer Flachfolie, einer Kunststoffplatte oder einer Kunststofftafel, zum Produzieren eines Endprodukts eingesetzt wird.

Die durch eine wertschöpfungskettenübergreifende Synchronisation des Waren- und Informationsflusses vorhandenen Informationen können beispielsweise dazu eingesetzt werden, um durch eine Analyse der Informationen neue Erkenntnisse für die optimale Gestaltung einer Produktionsmaschine oder einer Weiterverarbeitungsmaschine oder einer Anlage, welche zum Produzieren eines Endprodukts eingesetzt wird, zu gewinnen.

Die gewonnenen Erkenntnisse können beispielsweise vorteilhaft für die Konstruktion einer solchen Maschine genutzt werden.

Die Informationen können beispielsweise auch aus anderen Stufen der Wertschöpfungskette, von anderen Standorten und/oder anderen Unternehmen stammen, wodurch die Anzahl an Daten gesteigert werden kann und auch Erkenntnissen aus anderen Bereichen oder den Erfahrungen anderer Unternehmen oder Standorte genutzt werden können.

Es versteht sich, dass sich die Vorteile eines Verfahrens zum Bereitstellen, Abrufen und Nutzen eines Datenelements in der Wertschöpfungskette einer Bahnware aus Kunststoff zum Produzieren eines Endprodukts, mittels eines Kommunikationsprotokolls und eines Datenträgers zum stufenübergreifenden Austausch einer Mehrzahl verschiedener Datenelemente zum Produzieren des Endprodukts innerhalb der Wertschöpfungskette, wobei das Datenelement in der Wertschöpfungskette stufenübergreifend verwendet wird, nämlich von einer ersten Stufe mittels des Kommunikationsprotokolls am Datenträger bereitgestellt und von einer zweiten Stufe mittels des Kommunikationsprotokolls vom Datenträger abgerufen und an einer Maschine der zweiten Stufe genutzt wird, wie vorstehend beschrieben unmittelbar auf eine Verwendung von Daten, die mittels eines Verfahrens nach dem ersten Aspekt der Erfindung bereitgestellt worden sind, zum Konstruieren einer Produktionsmaschine oder einer Weiterverarbeitungsmaschine oder einer Anlage, welche in der Wertschöpfungskette von Bahnware aus Kunststoff, insbesondere einem Spunbond-Vlies, einem Meltblown-Vlies, einem Composite-Vlies, einer Blasfolie, einer Flachfolie, einer Kunststoffplatte oder einer Kunststofftafel, zum Produzieren eines Endprodukts eingesetzt wird, erstrecken.

Es sei ausdrücklich darauf hingewiesen, dass der Gegenstand des dritten Aspekts mit dem Gegenstand der vorstehenden Aspekte der Erfindung vorteilhaft kombinierbar ist, und zwar sowohl einzeln oder in beliebiger Kombination kumulativ.

Nach einem vierten nicht erfindungsgemäßen Aspekt löst die Aufgabe ein Verfahren zum Verbessern einer Qualität eines Prozesses, insbesondere eines Produktionsprozesses, eines Logistikprozesses oder eines Managementprozesses, innerhalb der Wertschöpfungskette von Bahnware aus Kunststoff, insbesondere der Wertschöpfungskette von einem Spunbond-Vlies, einem Meltblown-Vlies, einem Composite-Vlies, einer Blasfolie, einer Flachfolie, einer Kunststoffplatte oder einer Kunststofftafel, zum Produzieren eines Endprodukts, wobei ein Datenelement mittels eines Kommunikationsprotokolls und eines Datenträgers zum stufenübergreifenden Austausch einer Mehrzahl verschiedener Datenelemente abgerufen und genutzt wird, wobei eine Qualität des Prozesses in Abhängigkeit einer Information des Datenelements beschrieben ist, das Datenelement zum Verbessern der Qualität des Prozesses verwendet wird und durch das Verbessern der Qualität des Prozesses dieser derart verändert wird, dass eine gewünschte Eigenschaft, insbesondere eine Stoffeigenschaft, eine Produkteigenschaft, eine Prozesseigenschaft oder eine Markteigenschaft, in ihrer Ausprägung verstärkt und/oder eine ungewünschte Eigenschaft, insbesondere eine Stoffeigenschaft, eine Produkteigenschaft, eine Prozesseigenschaft oder eine Markteigenschaft, in ihrer Ausprägung reduziert wird.

Begrifflich sei hierzu Folgendes erläutert:
Die "Qualität" umfasst alle objektiv und subjektiv wahrnehmbaren Eigenschaften eines Prozesses. In diesem Zusammenhang wird insbesondere zwischen Stoffeigenschaften, Produkteigenschaften, Markteigenschaften und Prozesseigenschaften, insbesondere Prozesseigenschaften des Produktionsprozesses, des Logistikprozesses oder des Managementprozesses, differenziert. Die Ausprägung einer Eigenschaft wird zahlenmäßig in einem "Eigenschaftswert" erfasst, welcher variiert und hinsichtlich festgelegter Zielvorgaben optimiert werden kann.

Eine Qualität kann insbesondere eine Produktquaität oder eine Prozessqualität sein.

Dabei kann eine Produktqualität sowohl absolut als auch relativ definiert werden. Eine relative Produktqualität ergibt sich aus dem Vergleich der von einem Vlies oder von einer Folie geforderten Produkteigenschaft (Soll) und der erreichten Produkteigenschaft (Istin einer Abweichung der Mittelwerte (Soll/Ist) und in Abweichung der Messwerte (Ist) untereinander. So kann beispielsweise als Produktqualität gefordert sein, dass eine Folie eine Dicke von 20 µm +/- 0,5 µm aufweisen soll, die mit dem erreichten Mittelwert von 19,8 µm erreicht werden soll. Gleichzeitig kann gefordert sein, dass eine Abweichung aller Messungen (nach geforderter Meßmethode) in +/- 5% ist, d.h. alle Meßpunkte müssen größer 19,8 µm -5% oder kleiner 19,8 µm+ 5 % sein.

Eine absolute Produktqualität kann damit definiert werden, dass beispielsweise bestimmte spezifische Festigkeitswerte eines Vlieses erreicht werden sollen. Unter spezifischen Festigkeitswerten versteht man, dass ein gemessener Festigkeitswerte (bei Vlieses üblicherweise angegeben als N/5 cm) auf das Flächengewicht (g/m2) bezogen wird. Ein Vlies hat insofern eine höhere Qualität, wenn höhere spezifische Festigkeiten möglich sind.

Eine "Prozessqualität" ist beispielsweise eine OEE (over equipment efficiency), ein First yield, eine Qualität einer Maschine, insbesondere ein Wartungszustand. Weiterhin kann unter einer Prozessqualität verstanden werden, ob beispielsweise eine präventive Wartung durchgeführt wird.

Es hat sich gezeigt, dass die Information aus den Stufen der Wertschöpfungskette eine Vielzahl von neuen über die wertschöpfungskette von Bahnware integrierte Erkenntnissen ermöglicht.

So wird hier konkret unter anderem vorgeschlagen, dass die Information aus mindestens einem Datenelement für die Optimierung eines Prozesses verwendet wird, der an einer Stelle des Wertschöpfungsprozesses von Bahnwahre durchgeführt wird.

Dabei wird hier ebenfalls vorgeschlagen, dass die Qualität des Prozesses, der optimiert wird, in Abhängigkeit mindestens einer Information eines Datenelements beschrieben wird.

Zielsetzung der Optimierung eines Prozesses ist unter anderem, dass eine gewünschte Eigenschaft in ihrer Ausprägung verstärkt und/oder eine ungewünschte Eigenschaft in ihrer Ausprägung reduziert wird.

Ein Schluss auf die Änderung der finalen Eigenschaften des Endprodukts aus Bahnware in Folge der angestrebten Vernetzung des Informationsaustauschs ist bisher nur eingeschränkt möglich.

Jedoch hat sich gezeigt, dass die Potenziale einer Prozessoptimierung in Abhängigkeit mindestens einer Information, insbesondere aus einer abweichenden Stufe der Wertschöpfungskette für Bahnware, umfangreich sind.

Somit wird also insbesondere vorgeschlagen, bei der Optimierung eines Prozesses, der an einer Stelle des Wertschöpfungsprozesses von Bahnwahre durchgeführt wird, auch mindestens eine Information aus einer von der mit dem zu optimierenden Prozess abweichenden Stufe der Wertschöpfungskette für die Beschreibung der Qualität des Prozesses zu verwenden.

Vorteilhaft kann damit erreicht werden, dass die Qualität eines Prozesses und insbesondere eine Eigenschaft eines Halbzeugs, eines Produkts oder eines Endprodukts optimiert werden kann. Dadurch kann erreicht werden, dass ein Halbzeug, ein Produkt oder ein Endprodukt bessere Eigenschaften aufweist, die Kosten der Produktion von Bahnware oder Produkten aus Bahnware gesenkt werden können und die Umwelt entlastet werden kann.

Vorteile des Nutzen der Daten, die mittels eines Verfahrens nach dem ersten Aspekt der Erfindung bereitgestellt worden sind, zum Konstruieren einer Produktionsmaschine oder einer Weiterverarbeitungsmaschine oder einer Anlage sind ein gesteigertes Maß an Informationsaustausch, der eine Prozessoptimierung der Wertschöpfungskette von Bahnware aus Kunststoff in den Bereichen Rohstoffe, Halbzeugproduktion, Weiterverarbeitung der Halbzeuge, Logistik und Management der Wertschöpfungskette ermöglicht. So können beispielsweise seriell durchlaufene Maschinen auf die individuellen Wareneigenschaften abgestimmt werden. Insbesondere können Variationen in den Prozessparametern auf einer Stufe der Wertschöpfungskette in den anderen Stufen der Wertschöpfungskette berücksichtigt werden.

Außerdem kann eine optimierte Produktionsplanung und -steuerung aller Akteure eine Weiterverarbeitung von B-Ware in einem anderen nicht so anspruchsvollen Endprodukt dazu führen, dass der Ausschuss von Ware reduziert werden kann.

Eine Prozessoptimierung über ein einzelnes Glied der Wertschöpfungskette hinweg erlaubt ferner, dass der Energiebedarf bis zum Endprodukt reduziert werden kann.

Insgesamt kann die Erfindung maßgeblich dazu beitragen, dass die Effizienz innerhalb der Wertschöpfungskette um das Halbzeug Bahnware deutlich verbessert werden kann.

Bevorzugt wird die Qualität eines Produktionsprozesses verbessert.

Konkret wird hier unter anderem vorgeschlagen insbesondere Geschäftsprozesse, Produktionsprozesse oder Entwicklungsprozesse sowie den Einsatz der hierfür benötigten Ressourcen kontinuierlich zu verbessern. Dabei soll als Grundlage auch eine prozessorientierte Betrachtungsweise der gesamten Abläufe bis hin zum Endprodukt dienen.

Vorteilhaft kann damit erreicht werden, dass die Kosten eines Produktionsprozesses und/oder die Durchlaufzeiten eines Produktionsprozesses von Bahnware reduziert werden können.

Weiterhin kann vorteilhaft erreicht werden, dass die Produkteigenschaften, die aus einem Produktionsprozess hervorgehen, verbessert werden können, insbesondere können positive Produkteigenschaften verbessert und negative Produkteigenschaften reduziert werden.

Optional wird die Qualität einer Produktweiterverarbeitung verbessert.

Vorteilhaft kann damit erreicht werden, dass ein Halbzeug oder ein Produkt aus Bahnware schneller und günstiger weiterverarbeitet werden können.

Außerdem kann so vorteilhaft erreicht werden, dass die positiven Eigenschaften eines weiterverarbeiteten Produkts aus Bahnware verbessert und die negativen Eigenschaften eines Produkts aus Bahnware reduziert werden können.

Vorzugsweise wird die Qualität einer Prozesskette verbessert.

Begrifflich sei hierzu Folgendes erläutert:
Unter einer "Prozesskette" wird der chronologische Ablauf mehrerer Prozesse verstanden. Dabei ist eine Prozesskette nicht lediglich als serieller Ablauf von Prozessen zu verstehen. Ebenfalls ist unter anderem denkbar, dass ein Halbzeug oder ein Produkt zwischen zwei Verarbeitungsschritten gestückelt wird und der nachfolgende Arbeitsschritt parallel auf einer Mehrzahl an Produktionsmaschinen oder Weiterverarbeitungsmaschinen ausgeführt wird.

Dabei ist denkbar, dass ein Halbzeug oder ein Produkt vor dem Transport gestückelt wird und mit mehreren Transportfahrzeugen oder mit einem Transportfahrzeug Stück für Stück an seinen Zielort transportiert wird.

Weiterhin ist denkbar, dass ein Halbzeug oder ein Produkt nach seiner Weiterverarbeitung oder nach seinem Transport wieder zusammengefügt wird. Dabei ist auch denkbar, dass ein Halbzeug oder ein Produkt nur teilweise wieder zusammengefügt wird.

So wird hier unter anderem vorgeschlagen, den Ablauf einer Prozesskette zu optimieren.

Dabei ist auch unter anderem denkbar, dass die Reihenfolge von zwei Prozessen innerhalb einer Prozesskette verändert wird.

Vorteilhaft kann damit erreicht werden, dass die Kosten und die Produktdurchlaufzeiten einer Prozesskette reduziert werden können. Außerdem kann vorteilhaft erreicht werden, dass die Eigenschaften eines Produkts verbessert werden.

Bevorzugt wird die Qualität einer Prozesseinstellung verbessert.

Begrifflich sei hierzu Folgendes erläutert:
Unter einer "Prozesseinstellung" wird die Einstellung eines Prozesses verstanden. Ein Beispiel für eine Prozesseinstellung ist beispielsweise die Einstellung der Bahngeschwindigkeit mit der eine Bahnware produziert oder weiterverarbeitet wird.

Es wird hier unter anderem vorgeschlagen, dass eine veränderliche Prozessgröße zu variieren, um damit die Qualität eines Prozesses und/oder eines Halbzeugs und/oder eines Produkts und/oder eines Endprodukts zu erhöhen.

Optional wird die Produktqualität durch Verändern einer Maschineneinstellung verbessert.

Begrifflich sei hierzu Folgendes erläutert:
Unter einer "Maschineneinstellung" wird die Einstellung aller Einstellgrößen einer Maschine verstanden. Beispiele für Einstellgrößen einer Produktionsmaschine für Bahnware aus Kunststoff sind beispielsweise eine eingestellte Zylinderwandtemperatur, eine eingestellte Extrusionsgeschwindigkeit und eine eingestellte Drehzahl des Extruders.

Vorteilhaft kann damit erreicht werden, dass durch die Variation einer Einstellgröße einer Maschine, insbesondere die Variation einer Einstellgröße einer Produktionsmaschine oder einer Weiterverarbeitungsmaschine, die Qualität eines Halbzeugs oder eines Produkts oder eines Endprodukts verbessert werden.

Weiterhin können die Produktionskosten durch eine Variation einer Einstellgröße einer Maschine vorteilhaft gesenkt werden.

Vorzugsweise wird die Produktqualität durch Verändern einer Prozesseinstellung verbessert.

Vorteilhaft kann damit erreicht werden, dass die Qualität eines Produkts durch die Variation einer Prozesseinstellung verbessert wird, sodass die Eigenschaften eines Produkts optimiert werden können.

Bevorzugt wird die Qualität durch eine Auswahl eines Ausgangsstoffs verbessert.

Vorteilhaft kann damit erreicht werden, dass durch eine optimierte Auswahl der Ausgangsstoffe die Kosten der Produktion reduziert werden können. Weiterhin kann vorteilhaft erreicht werden, dass die Eigenschaften eines Halbzeugs, eines Produkts oder eines Endprodukts verbessert werden können.

Optional wird die Qualität des Produktionsprozesses durch Reduktion des Energieverbrauchs verbessert.

So wird hier konkret vorgeschlagen den Energieverbrauch innerhalb der Wertschöpfungskette für Bahnware anhand der Informationen aus der Wertschöpfungskette zu analysieren und den Energieverbrauch zu senken, indem beispielsweise die Durchlaufgeschwindigkeiten erhöht werden, oder die Transportwege reduziert werden oder weitere Prozessparameter so optimiert werden, dass der Energieverbrauch reduziert werden kann.

Vorteilhaft kann damit erreicht werden, dass der Energieverbrauch der Produktion reduziert werden kann.

Vorzugsweise wird die Qualität des Managementprozesses durch Analyse eines oder mehrerer Datenelemente zur Erzeugung von Expertenwissen verbessert.

Hier wird unter anderem vorgeschlagen die Informationen aus der Wertschöpfungskette von Bahnware zu analysieren und anhand der gewonnenen Erkenntnisse die Qualität des Managementprozesses zu verbessern.

Vorteilhaft kann damit erreicht werden, dass die Qualität der Managementprozesse verbessert werden kann.

Bevorzugt wird die Qualität einer Produktionsplanung verbessert.

Begrifflich sei hierzu Folgendes erläutert:
Unter einer "Produktionsplanung" wird insbesondere die operative, zeitliche, mengenmäßige und räumliche Planung, Steuerung, Verwaltung und Kontrolle aller Vorgänge, die bei der Produktion von Waren und Gütern notwendig sind. Die Rahmenbedingungen der Produktionsplanung werden vielfach in der Arbeitsvorbereitung geplant. Im Vordergrund der Produktionsplanung steht die Optimierung des gesamten Produktionssystems, wodurch die Effektivität und die Effizienz des gesamten Produktionsablaufs gesteigert werden soll.

So wird hier konkret unter anderem vorgeschlagen, dass die Durchlaufzeiten in den einzelnen Verarbeitungsschritten und in den Logistikprozessen so optimiert werden, dass auftretenden Totzeiten reduziert werden können.

Weiterhin wird vorgeschlagen, dass der Produktionsplaner die Maschine mit dem geeigneten Betriebsfenster auswählt, sodass die Durchlaufzeiten optimal zu der ausgewählten Maschine passen.

Vorteilhaft kann damit erreicht werden, dass die Herstellkosten eines Halbzeugs, eines Produkts oder eines Endprodukts reduziert werden können.

Außerdem kann so vorteilhaft erreicht werden, dass die Materialmengen reduziert werden können, die an einem Standort einer Maschine gelagert werden müssen.

Optional wird die Qualität einer Produktionssteuerung verbessert.

Begrifflich sei hierzu Folgendes erläutert:
Unter einer "Produktionssteuerung" wird die direkte Steuerung aller Abläufe einer Produktion einer Produktion verstanden. Streng genommen ist die "Produktionssteuerung" damit ein Teilbereich der "Produktionsplanung". Während hier jedoch unter der Produktionsplanung ein eher statischer Prozess verstanden wird, der zeitlich vor Beginn der Produktion abgeschlossen sein sollte, grenzt sich die "Produktionssteuerung" durch ihren engen zeitlichen Bezug zur Produktion ab. Die Produktionsplanung entwirft einen Plan über die durchzuführenden Abläufe und die Produktionssteuerung modifiziert diesen Plan wenn notwendig mit hoher Dynamik und kann so auf unvorhergesehene Ereignisse reagieren.

So wird hier vorgeschlagen, dass beispielsweise in Fällen in denen es zu Störungen des eigentlich geplanten Prozessablaufs in einer Stufe der Wertschöpfungskette kommt, anhand der Informationen über die Prozesse innerhalb der Wertschöpfungskette die Produktionssteuerung durch eine dynamische Anpassung der Prozesse der Wertschöpfungskette eingreift und damit situationsbedingt die Qualität der Produktionssteuerung verbessert wir, sodass die Störungssituation so schnell wie möglich und mit dem geringsten möglichen monetären Schaden wieder behoben werden kann.

Vorteilhaft kann damit erreicht werden, dass die Produktionsabläufe in Sondersituationen so schnell und so kostengünstig wie möglich wieder in den geplanten Rhythmus zurückversetzt werden können.

Vorzugsweise wird die Qualität durch eine Steuerung von Forschungs- und Entwicklungsaktivitäten verbessert.

Begrifflich sei hierzu Folgendes erläutert:
Unter einer "Steuerung von Forschungs- und Entwicklungsaktivitäten" wird ein aus mehreren Schritten bestehender Prozess der Planung, Steuerung und Kontrolle von Forschungs- und Entwicklungsaktivitäten verstanden, wobei die einzelnen Schritte engmaschig miteinander verzahnter sind und stetig den sich verändernden Gegebenheiten angepasst werden müssen. Insbesondere werden in einem Schritt Erkenntnislücken und damit Forschungs- und Entwicklungsbedürfnisse identifiziert. In einem anderen Schritt werden mögliche Forschungs- und Entwicklungsmaßnahmen identifiziert, bewertet und ausgewählt. In einem weiteren Schritt werden die Forschungs- und Entwicklungsaktivitäten durchgeführt und überwacht. Außerdem beinhaltet ein Schritt die Integration gewonnener Erkenntnisse in alle relevanten Prozessabläufe, sodass erreichte Innovationen nutzbar gemacht werden.

Vorteilhaft kann damit erreicht werden, dass die Kosten der Forschungs- und Entwicklungsaktivität reduziert und der Anteil der marktwirtschaftlich verwertbaren Innovationen gesteigert werden kann.

Außerdem kann erreicht werden, dass benötigte technologische Innovationen so schnell und so günstig wie möglich umgesetzt werden können.

Bevorzugt wird die Qualität durch Optimierung eines Distributionsweges verbessert.

Begrifflich sei hierzu Folgendes erläutert:
Unter "Optimierung" einer Optimierung wird die Suche nach dem besten erreichbaren Resultat unter Berücksichtigung aller gegebenen Randbedingungen. Insbesondere soll die Optimierung erreichen, dass eine gewünschte Eigenschaft, insbesondere eine Stoffeigenschaft, eine Produkteigenschaft, eine Prozesseigenschaft, eine Logistikeigenschaft oder eine Markteigenschaft, in ihrer Ausprägung verstärkt und/oder eine ungewünschte Eigenschaft, insbesondere eine Stoffeigenschaft, eine Produkteigenschaft, eine Prozesseigenschaft, eine Logistikeigenschaft oder eine Markteigenschaft, in ihrer Ausprägung reduziert wird.

Unter einem "Distributionsweg" wird der Weg eines Halbzeugs und/oder eines Produkts und/oder eines Endprodukts zu seinem Bestimmungsort verstanden. Dieser Distributionsweg kann ein direkter Weg zwischen Startpunkt und Zielpunkt sein. Es kann jedoch auch ein nicht geradliniger Weg zwischen Startpunkt und Zielpunkt ein Distributionsweg sein.

Insbesondere kann ein Distributionsweg mehrere Zwischenstopps enthalten. So ist beispielsweise denkbar, dass ein Halbzeug und/oder ein Produkt und/oder ein Endprodukt zu einem Zwischenstopp verbracht wird, dort für eine Totzeit verweilt, gegebenenfalls zumindest teilweise auf ein anderes Transportfahrzeug umgeladen wird und von dort aus weitertransportiert wird. Ebenfalls ist konkret unter anderem denkbar, dass ein Halbzeug und/oder ein Produkt und/oder ein Endprodukt an einem Zwischenstopp zumindest teilweise zwischengelagert wird.

Die Distributionswege können innerhalb der Wertschöpfungskette von Bahnware optimiert werden.

Einerseits können die Distributionswege so optimiert werden, dass einzelne Distanzen so kurz wie möglich sind.

Als Variante wird vorgeschlagen, dass bei der Optimierung der Tourenplanung von Transportfahrzeugen die Ladekapazität der Transportfahrzeuge mitberücksichtigt werden und diese bestmöglich ausgenutzt werden.

Als weitere Variante wird hier vorgeschlagen, dass zusätzlich bei der Tourenplanung die Verfügbarkeit von Transportfahrzeugen und kompatiblen Kraftfahrern mitberücksichtigt wird.

Ebenfalls wird als weitere Variante konkret unter anderem vorgeschlagen, dass bei der Optimierung eines Distributionsweges die benötigte Zeit des Transportfahrzeugs mitberücksichtigt wird.

Als weiter vorgeschlagene Variante wird die Optimierung des Distributionsweges anhand der Logistikkosten durchgeführt.

Es versteht sich, dass die vorgeschlagenen Varianten hinsichtlich der Kriterien ihrer Optimierung sowohl einzeln als auch in beliebiger Kombination miteinander kumulativ Berücksichtigung finden können.

Vorteilhaft kann damit erreicht werden, dass die Transportzeiten und die Transportkosten insgesamt gesenkt werden können.

Optional wird die Qualität durch Auswahl eines Lagerorts verbessert.

Begrifflich sei hierzu Folgendes erläutert:
Unter einem "Lagerort" wird der Ort eines Lagers verstanden.

Hier wird unter anderem vorgeschlagen, dass die geographischen Positionen der Lagerorte innerhalb eines Distributionsnetzwerks einer Wertschöpfungskette von Bahnware so festgelegt und/oder verlegt werden, dass die Logistikkosten minimiert werden können.

Dabei wird vorgeschlagen zu berücksichtigen, dass Waren an den einzelnen Lagerorten umgeladen werden können, dass Waren an den einzelnen Lagerorten eingelagert werden können, dass Waren an den einzelnen Lagerorten auf andere Fahrzeuge umgeladen werden können und dass dabei die Konfiguration der Fahrzeuge mit Waren geändert und an andere Randbedingungen angepasst werden kann.

Vorteilhaft kann damit erreicht werden, dass die Logistikkosten gesenkt werden können und die benötigen Zeiten für die Logistik reduziert werden können.

Vorzugsweise wird die Qualität durch Optimierung einer Lagerhaltung verbessert.

Begrifflich sei hierzu Folgendes erläutert:
Unter einer "Lagerhaltung" versteht man das Lagern von Ausgangsstoffen und/oder von Halbzeugen und/oder von Produkten und/oder von Endprodukten.

So wird vorgeschlagen, dass die Menge einer zu lagernden Ware optimiert werden. Dabei ist zu berücksichtigen, dass die Lagerhaltung einerseits Kosten verursacht, andererseits jedoch auch bei der Umrüstung einer Produktionsmaschine oder einer Weiterverarbeitungsmaschine Rüstzeiten entstehen können.

Hier wird also unter anderem vorgeschlagen, die Menge einer zu lagernden Ware anhand der optimalen Gesamtkosten für die Lagerung, für die Logistik und die Produktion der Ware zu bestimmen.

Vorteilhaft kann damit erreicht werden, dass die Summe der Kosten für die Produktion, die Logistik und die Lagerung eines Ausgangsstoffs, eines Halbzeugs, eines Produkts oder eines Endprodukts reduziert werden kann.

Bevorzugt wird die Qualität durch Optimierung von Transportkosten verbessert.

Begrifflich sei hierzu Folgendes erläutert:
Unter "Transportkosten" werden die Kosten des Transports eines Halbzeugs und/oder eines Produkts und/oder eines Endprodukts verstanden.

Hier wird vorgeschlagen die Transportkosten zu minimieren, indem Prozesse innerhalb der Wertschöpfungskette von Bahnware optimiert werden.

Vorteilhaft kann damit erreicht werden, dass die Transportkosten reduziert werden können.

Optional wird die Qualität durch Optimierung eines Logistikprozesses verbessert.

Konkret wird hier unter anderem vorgeschlagen, eine Information aus der Wertschöpfungskette einer Bahnware für die Optimierung eines Logistikprozesses einzusetzen.

Vorteilhaft kann damit erreicht werden, dass die Logistikkosten innerhalb der Wertschöpfungskette von Bahnware gesenkt werden kann.

Vorzugsweise wird die Qualität durch Optimierung von Managementkosten verbessert.

Begrifflich sei hierzu Folgendes erläutert:
Unter "Managementkosten" werden die Kosten des Managementprozesses verstanden.

Den Managementkosten werden hier beispielsweise die Kosten der Produktionsplanung zugerechnet.

Es wird hier unter anderem vorgeschlagen, eine Information aus der Wertschöpfungskette einer Bahnware für die Optimierung eines Managementprozesses einzusetzen.

Vorteilhaft kann damit erreicht werden, dass die Managementkosten innerhalb der Wertschöpfungskette von Bahnware gesenkt werden kann.

Beispielsweise kann vorgesehen sein, dass der Datenaustausch stufenübergreifend über die Wertschöpfungskette hinweg dazu genutzt wird, den spezifischen Energiebedarf zur Herstellung eines Endprodukts zu minimieren. Dafür werden die ermittelten Daten bei der vorgelagerten, ersten Stufe zur Herstellung des Halbzeugs in einem Datenelement abgespeichert und dem nachgelagerten, zweiten oder jedem weiteren Prozessschritt zum Abruf bereitgestellt. Beispielsweise kann beim nachgelagerten Prozessschritt Bedrucken eines Halbzeugs durch den Austausch der Produktions- und Herstelldaten auf eine wiederholte, energieintensive Vorbehandlung oder Oberflächenaktivierung durch eine Plasma- oder Coronabehandlung verzichtet werden oder diese in Ihrer Leistung minimiert werden, wenn dem nachgelagerten Prozessschritt die Information bereitgestellt wird, welchen spezifischen Aktivierungsgrad das Halbzeug bei dessen Produktion im ersten Herstellungsschritt erfahren hat.

Weiterhin ist denkbar, dass durch das Bereitstellen der Herstellungsdaten ein wiederholtes Aufheizen eines hergestellten Halbzeugs, bevorzugt einer Folie oder eines Vlieses, vor einer Laminierung des Halbzeugs zu einem Fertigprodukt, beispielsweise einem Laminat, verzichtet werden kann oder die Vor- oder Aufheizung mit reduzierter Leistung durchgeführt werden kann.

Drüber hinaus ist es denkbar, die gesamte Menge an verbrauchter Energie an einem Standort oder einem Teilstandort so zu steuern, dass das Auftreten von Peaks im Energieverbrauch vermieden wird. Dies kann durch das Zusammenführen und Auswerten von Informationen aus mehreren Prozessketten hinsichtlich des Energiebedarfs und der Abstimmung von Produktionsprozessen genauer gesagt der Anpassung von Produktionsparametern erfolgen. Eine Optimierung des Energiebedarfs kann z.B. dadurch erfolgen, dass der Ausstoß einzelner Prozesse unter Berücksichtigung der geforderten Liefertermine reduziert wird.

Vorteilhaft kann hierdurch erreicht werden, dass der Energiebedarf zur Herstellung von Halbzeugen und/oder Produkten wertschöpfungskettenübergreifend gesenkt werden kann. Dazu werden unter anderem vorteilhaft Synergieeffekte zwischen den einzelnen Stufen der Wertschöpfungskette genutzt.

Ebenfalls wird hier konkret unter anderem vorgeschlagen, dass der wertschöpfungskettenübergreifende Austausch von Daten, insbesondere die Synchronisation von Warenund Informationsströmen, zur Verwaltung von Fehlstellen in einer Bahnware genutzt wird.

Beispielsweise kann vorgesehen sein, dass die Datenübermittlung zwischen vorgelagerten Produktionsschritten zur Herstellung des Halbzeugs und nachgelagerten Produktionsschritten zur Weiterverarbeitung, Endbearbeitung oder Veredelung des Halbzeugs dazu genutzt wird, die Qualität des Endprodukts zu steigern. Oberflächenfehler wie Stippen, Schlieren, Gels, Black Spots, Fischaugen, Aufreissungen der Oberfläche, Schmelzbruch, Fließlinien, Hard Pieces, Insekten werden von einem Inspektionssystem, bevorzug einem Inline-Oberflächeninspektionssystem, beispielsweise mittels Kameratechnik, Infrarot, Ultraschall, Röntgen, detektiert und als Datenelement dem hergestellten Halbzeug zugeordnet. Durch den Abruf des Datenelements bei der Weiterverarbeitung, Endbearbeitung oder Veredelung des Halbzeugs, wie beispielsweise Breitstreckrahmen, Beschichtungsanlagen oder Rollenschneidern, wird dann die fehlerhafte Stelle oder der fehlerbehaftete Bereich der Bahnware manuell, teilautomatisiert oder vollautomatisch aus der Bahnware entfernt.

Bei einer ganzheitlichen Integration können zudem Auftragsdaten aus einem Betriebsdatenerfassungssystem dazu genutzt werden, die Produktionsmenge des hergestellten Halbzeugs darüber zu bestimmen, wie hoch der Anteil des Ausschusses ist. Mit anderen Worten kann so die Produktionsmenge des Halbzeuges entsprechend der Ausschussquote gesteigert werden.

Vorteilhaft kann so eine Optimierung der Auftragssteuerung derart erreicht werden, dass die Zielmenge des fehlerfrei hergestellten Halbzeugs in der Kenntnis der Fehlstellen in dem Halbzeug so angepasst wird, dass die vorgegebene Menge an fehlerfreiem Halbzeug möglichst exakt erreicht wird. So können die Unzufriedenheit auf Seiten der Kunden und die Kosten für die Herstellung des Halbzeugs reduziert werden.

Vorteilhaft kann hierdurch erreicht werden, dass der Ausschuss innerhalb der Wertschöpfungskette reduziert werden kann. Weiterhin kann der Umgang mit Fehlstellen im Halbzeug vorteilhaft vereinfacht werden kann. Insbesondere kann so vorteilhaft erreicht werden, dass die Arbeitseffizienz und damit mittelbar auch die Kosteneffizienz in der Wertschöpfungskette gesteigert werden kann, da unvermeidbare Fehlstellen in dem Halbzeug automatisiert berücksichtigt werden können und nicht wie zuvor individuell durch menschlichen Eingriff berücksichtigt werden müssen.

Nach einem fünften, nicht erfindungsgemäßen Aspekt löst die Aufgabe ein Verfahren zum Produzieren einer Bahnware aus Kunststoff, insbesondere einem Spunbond-Vlies, einem Meltblown-Vlies, einem Composite-Vlies, einer Blasfolie, einer Flachfolie, einer Kunststoffplatte oder einer Kunststofftafel, wobei ein Extruder zum Plastifizieren eines Kunststoffs betrieben wird, wobei während des Produzierens ein Verfahren nach dem ersten Aspekt der Erfindung durchgeführt wird.

Begrifflich sei hierzu Folgendes erläutert:
Unter einem "Extruder" wird eine "Schnecken-Plastifiziermaschine" verstanden, insbesondere werden unter einem Extruder alle bekannten Ausführungsformen von Plastifiziermaschinen verstanden, die eine Schnecke zum Fördern, Aufschmelzen und Homogenisieren einsetzen. Somit fallen sowohl Einschnecken-Plastifiziermaschinen, als auch Doppelschnecken-Plastifiziermaschinen sowie im Allgemeinen auch Mehrschnecken-Plastifiziermaschinen in die Gattung der Schnecken-Plastifiziermaschinen und damit unter die Begrifflichkeit eines Extruders.

Es versteht sich, dass sich die Vorteile eines Verfahrens zum Bereitstellen, Abrufen und Nutzen eines Datenelements in der Wertschöpfungskette einer Bahnware aus Kunststoff zum Produzieren eines Endprodukts, mittels eines Kommunikationsprotokolls und eines Datenträgers zum stufenübergreifenden Austausch einer Mehrzahl verschiedener Datenelemente zum Produzieren des Endprodukts innerhalb der Wertschöpfungskette, und/oder die Vorteile einer Verwendung von Daten zum Konstruieren einer Produktionsmaschine oder einer Weiterverarbeitungsmaschine und/oder die Vorteile eines Verfahrens zum Verbessern einer Qualität eines Prozesses, insbesondere eines Produktionsprozesses, eines Logistikprozesses oder eines Managementprozesses, innerhalb der Wertschöpfungskette von Bahnware aus Kunststoff zum Produzieren eines Endprodukts, wobei das Datenelement mittels des Kommunikationsprotokolls und des Datenträgers zum stufenübergreifenden Austausch einer Mehrzahl verschiedener Datenelemente abrufbar und nutzbar ist, wie vorstehend beschrieben unmittelbar auf ein Verfahren zum Produzieren einer Bahnware aus Kunststoff, insbesondere einem Spunbond-Vlies, einem Meltblown-Vlies, einem Composite-Vlies, einer Blasfolie, einer Flachfolie, einer Kunststoffplatte oder einer Kunststofftafel, wobei ein Extruder zum Plastifizieren eines Kunststoffs betrieben wird, wobei während des Produzierens ein Verfahren nach dem ersten Aspekt der Erfindung durchgeführt wird, erstrecken.

Nach einem sechsten Aspekt der Erfindung löst die Aufgabe ein elektronisches Datenerfassungsgerät einer Vorrichtung zum Betreiben des beschriebenen Verfahrens, wobei das Datenerfassungsgerät eine Programmierung zum Durchführen des Verfahrens der beschriebenen aufweist, wobei das Datenerfassungsgerät zum Schreiben eines Datenelements zum Bereitstellen des Datenelements und/oder zum Lesen eines Datenelements zum Abrufen des Datenelements eingerichtet ist, und zwar jeweils mittels des Kommunikationsprotokolls.

Hier wird unter anderem ein elektronisches Datenerfassungsgerät vorgeschlagen, welches einen Identifikationscode optoelektronisch oder einen RFID-Chip elektromagnetisch auslesen kann.

Insbesondere soll das elektronische Datenerfassungsgerät optoelektronisch einen Strichcode, einen QR-Code und einen Matrix-Code auslesen können.

Unter anderem wird hier vorgeschlagen, dass beim Auslesen eines Identifikationscodes oder eines RFID-Chips eine Verknüpfung zu einem Datenträger oder über ein Netzwerk zu einem standortunabhängigen Datenspeicher hergestellt wird, so dass eine Information in einem Datenelement über die Verknüpfung zugänglich gemacht wird, wobei nach einer hergestellten Verknüpfung eine Information in dem Datenträger und/oder dem standortunabhängigen Datenspeicher bereitgestellt, ausgelesen oder nutzbar gemacht werden kann.

Weiterhin wird hier vorgeschlagen, dass der Identifikationscode oder der RFID-Chip mit einem entsprechend geeigneten elektronischen Datenerfassungsgerät ausgelesen werden kann, wodurch die Verknüpfung zwischen der Rolle und dem digitalen Rollenprotokoll beispielsweise eindeutig hergestellt werden kann, sodass bei vorliegender Berechtigung des elektronischen Datenerfassungsgeräts ein Datenelement bereitgestellt, abgerufen oder genutzt werden kann.

Entsprechend dem hier gemachten Vorschlag befindet sich ein dem digitalen Rollenprotokoll zugehöriges Datenelement auf einem standortunabhängigen Speicher.

Konkret ist aber denkbar, dass das dem digitalen Rollenprotokoll zugehöriges Datenelement auf einem Datenspeicher vorliegt, der in das elektronische Datenerfassungsgerät eingeführt ist oder mit dem das elektronische Datenerfassungsgerät zum Datenaustausch vernetzt ist.

Vorteilhaft kann damit erreicht werden, dass das elektronische Datenerfassungsgerät eine Identifikation einer Rolle oder einer Kennung, insbesondere eines Strichcodes, eines QR-Codes oder eines Matrix-Codes, vornehmen kann und optoelektronisch in einfacher Art und Weise gelesen werden kann, wobei beim Lesen des Codes oder der Kennung eine Verknüpfung mit einem Datenelement hergestellt wird, sofern eine entsprechende Nutzungsberechtigung vorliegt.

Ebenfalls kann vorteilhaft erreicht werden, dass ein Datenerfassungsgerät elektromagnetisch einen RFID-Chip einlesen kann, der zur Kennzeichnung einer Ware, eines Produkts, einer Produktionsmaschine, einer Weiterverarbeitungsmaschine oder eines Transportfahrzeugs eingesetzt wird und wobei beim Lesen des RFID-Chips eine Verknüpfung mit einem Datenelement hergestellt wird, sofern eine entsprechende Nutzungsberechtigung vorliegt.

Weiterhin wird vorgeschlagen, dass das elektronische Datenerfassungsgerät dazu eingerichtet ist, eine zugängliche Information von einem Datenelement darzustellen, zu analysieren und zu editieren, insbesondere in dem Datenelement.

Ein Schluss auf die Änderung der finalen Eigenschaften des Endprodukts aus Bahnware in Folge der angestrebten Vernetzung des Informationsaustauschs ist bisher nur eingeschränkt möglich.

Vorteile der vorliegenden Erfindung sind ein gesteigertes Maß an Informationsaustausch, der eine Prozessoptimierung der Wertschöpfungskette von Bahnware aus Kunststoff in den Bereichen Rohstoffe, Halbzeugproduktion, Weiterverarbeitung der Halbzeuge, Logistik und Management der Wertschöpfungskette ermöglicht. So können beispielsweise seriell durchlaufene Maschinen auf die individuellen Wareneigenschaften abgestimmt werden. Insbesondere können Variationen in den Prozessparametern auf einer Stufe der Wertschöpfungskette in den Folgestufen berücksichtigt werden.

Außerdem kann eine optimierte Produktionsplanung und -steuerung aller Akteure eine Weiterverarbeitung von B-Ware in einem anderen nicht so anspruchsvollen Endprodukt dazu führen, dass der Ausschuss von Ware reduziert werden kann.

Eine Prozessoptimierung über ein einzelnes Glied der Wertschöpfungskette hinweg erlaubt ferner, dass der Energiebedarf bis zum Endprodukt reduziert werden kann.

Insgesamt kann die Erfindung maßgeblich dazu beitragen, dass die Effizienz innerhalb der Wertschöpfungskette um das Halbzeug Bahnware deutlich verbessert werden kann.

Bevorzugt ist das elektronische Datenerfassungsgerät mobil, wobei es eine Batterie, einen Stromanschluss oder einen Spannungsgenerator aufweist.

Vorteilhaft kann damit erreicht werden, dass das elektronische Datenerfassungsgerät autark von einer stationären Stromübertragung genutzt werden kann. Insbesondere ist das elektronische Datenerfassungsgerät so leicht und ergonomisch dimensioniert, dass es von einem Menschen bequem mitgeführt werden kann und vom Menschen gerne als Begleiter wahrgenommen wird.

Die Mobilität des elektronischen Datenerfassungsgeräts ermöglicht vorteilhaft eine leichte Zugänglichkeit auch zu nicht im direkten Sichtbereich liegenden Identifikationscodes oder Kennungen oder RFID-Chips.

Ebenfalls erweist sich die Mobilität bei der Darstellung und Analyse einer Information eines Datenelements als vorteilhaft, da man einerseits, vergleichbar einfach eines Tablet-Computers, mit dem elektronische Datenerfassungsgerät arbeiten kann und andererseits auch die Möglichkeit hat, die Darstellung und/oder die Analyse einer Information, vergleichbar mit der Einfachheit eines Tablet-Computers, mit anderen Personen teilen zu können.

Weiterhin wird hier vorgeschlagen, dass das elektronische Datenerfassungssystem eine kontextbasierte Benutzeroberfläche und eine kontextbasierte Benutzerführung aufweist.

Optional ist das elektronische Datenerfassungsgerät stationär an einer Produktionsmaschine und/oder einer Weiterverarbeitungsmaschine und/oder einem Transportfahrzeug installiert.

So wird unter anderem vorgeschlagen, dass ein elektronisches Datenerfassungsgerät direkt an einer Produktionsmaschine und/oder einer Weiterverarbeitungsmaschine und/oder einem Transportfahrzeug angebracht ist.

Ebenfalls ist denkbar, dass ein ansonsten mobiles elektronisches Datenerfassungsgerät mit einer Sicherungsleine oder einem Sicherungsseil fest an einer Produktionsmaschine und/oder einer Weiterverarbeitungsmaschine und/oder einem Transportfahrzeug installiert ist. So kann beispielsweise sichergestellt werden, dass ein elektronisches Datenerfassungsgerät beispielsweise immer an dem Ort vorrätig ist, an dem normalerweise Informationen anfallen oder gebraucht werden. Dies garantiert unter anderem einen schnellen Umgang mit dem Synchronisierten Waren- und Informationsaustausch, da insbesondere in der Einführungsphase des elektronischen Datenerfassungsgeräts immer eines zur Stelle ist, wenn man es braucht.

Vorteilhaft kann damit erreicht werden, dass ein elektronisches Datenerfassungsgerät stets dort vorrätig ist, wo Informationen entstehen und bereitgestellt werden sollen und wo Informationen abgerufen und analysiert werden sollen.

Vorzugsweise ist das elektronische Datenerfassungsgerät stationär am Halbzeug, am Produkt und/oder Endprodukt am installiert.

Insbesondere wird hier eine Miniaturausfiihrung eines elektronischen Datenerfassungsgeräts vorgeschlagen, welches keinen eigenen Bildschirm aufweist, sondern für die Darstellung von Informationen einen separaten Monitor benötigt oder welches die Informationen zum Zweck der Analyse und der Darstellung sowie zum Zweck der Benutzerführung auf einen externen Tablet-Computer, einen Laptop, einen stationären Personal Computer oder ein Smartphone schickt.

Weiterhin wird vorgeschlagen, dass die Miniaturausführung eines elektronischen Datenerfassungsgeräts einen Datenträger aufweist, der mindestens ein Datenelement aufweist, sodass eine Information stets mit der Miniaturausführung eines elektronischen Datenerfassungsgeräts und damit insbesondere mit der Ware mittransportiert wird.

Vorteilhaft kann damit erreicht werden, dass die IVliniaturausführung eines elektronischen Datenerfassungsgeräts so klein und kompakt ist, dass sie einfach an einem Halbzeug, an einem Produkt oder an einem Endprodukt befestigt werden kann. Dabei weist die die Miniaturausfiihrung eines elektronischen Datenerfassungsgeräts vorteilhafterweise so viel Datenspeicher intern auf, dass es im übertragenen Sinne wie ein digitaler Beipackzettel mit dem Halbzeug, dem Produkt oder dem Endprodukt transportiert werden kann und dabei alle Informationen aufnehmen kann, die im Rahmen der Wertschöpfungskette für Bahnware anfallen können.

Ebenfalls kann durch die Miniaturausführung eines elektronischen Datenerfassungsgeräts erreicht werden, dass die relevanten und interessanten wertschöpfungskettenübergreifen den Informationen der Bahnware stets bei dem Halbzeug, dem Produkt oder dem Endprodukt verbleiben können und immer genau dort vorliegen, wo sie gerade gebraucht und gesucht werden.

Optional kann ein elektronisches Datenerfassungsgerät einen Trigger zum Senden und/oder Vervollständigen eines Datensatzes aufweisen, somit ein entsprechender Trigger vorgesehen sein.

Unter einem "Trigger" sei ein auslösendes Ereignis im Einzelfall zu verstehen.

Der "Datensatz" umfasst eine Mehrzahl verschiedener Datenelemente. Dabei kann der Datensatz insbesondere auf eine vorgegebene Material-, Halbzeug- oder Produktmenge individuell bezogen sein.

Der Datensatz kann dazu verwendet werden, die verschiedensten Einflüsse auf ein Produkt in der Herstellhistorie zu erfassen. Im Idealfall erfasst der Datensatz - wie bereits beschrieben - alle relevanten Daten zum Produkt und/oder seinem Herstellprozess.

Sobald der Trigger auslöst, wird ein Datenelement zum Datensatz hinzugefügt. Dies kann lokal geschehen, indem den bisherigen oder übrigen Datenelementen lokal ein oder mehrere Datenelemente hinzugefügt werden, und der so ergänzte Datensatz wird weitergegeben; oder es werden das oder die neuen Datenelemente an eine entfernt stehende Datenverarbeitungseinheit mit Datenspeicher übermittelt, wobei der Datensatz dort ergänzt und dort zur weiteren Verfügbarkeit vorgehalten wird.

Unabhängig davon, ob das Ergänzen zentral oder dezentral erfolgt, kann eine Plausibilitätsprüfung erfolgen, bevor ein Datenelement dem Datensatz hinzugefügt wird.

Der Trigger kann je nach Ausgestaltung eine vollautomatische oder halbautomatische Aktion auslösen.

### Eine vollautomatische Aktion führt dazu, dass das Auslösen des Triggers zu einer

Zwangsergänzung des Datensatzes führt. Diese Aktion ist dann bevorzugt durch einen Benutzer nicht mehr aufhaltbar. Als Beispiel sei daran gedacht, dass ein Datensatz automatisch um die Luftfeuchtigkeit oder die Umgebungstemperatur ergänzt wird, wenn eine Folienbahn einer Weiterbehandlung unterzogen wird.

Bei einer halbautomatischen Aktion würde - insbesondere vom Datenerfassungsgerät - einem Bediener vorgeschlagen, ein Datenelement zum Datensatz hinzuzufügen. Entweder auf Bestätigung oder auf ausbleibendes Unterbinden hin des Bedieners würde das Hinzufügen erfolgen.

Der Trigger kann eine mechanische Auslösung aufweisen. So ist beispielsweise denkbar, dass ein Transportfahrzeug, zum Beispiel ein Hubwagen, durch einen Taster oder durch einen Gewichtssensor erkennt, dass er beladen worden ist oder entladen worden ist. Oder es kann erkannt werden, dass eine Walze dreht, ein Band läuft, Granulat aus einem Silo läuft, etc. Dies kann den Trigger auslösen.

Wenn der Trigger eine elektronische Auslösung aufweist, insbesondere mittels eines optischen Sensors und/oder eines Funksensors, dann kann er auf mannigfaltigere Geschehnisse hin ausgelöst werden.

Insbesondere ist denkbar, dass ein elektronisches Koppelglied zum Datenaustausch mit einer Maschine vorgesehen ist. Dies können beispielsweise ein Näherungssensor wie ein RFID-Chip oder ein Magnet oder eine Funkausstrahlung wie beispielsweise eine Bluetooth-Datenverbindung sein.

Es sein vor allem - also ausdrücklich nicht abschließend - daran gedacht, den Trigger bei folgenden Ereignissen auslösen zu lassen: Bedienerwechsel, Rohstoffwechsel, Produktionsprozess verlässt gesetzte Grenzen, Transportmittelbeladung, Druckschalter, Gewichtssensor, Auftragswechsel, Maschinenanlauf, Start der Gutproduktion, manuelles Auslösen zum Beispiel für Stichproben, Beschleunigungssensor, Ändern der Produktionsparameter innerhalb einer Produktion, Abweichung von einer Korrelation außerhalb eines vorgegebenen Toleranzfensters, Schwankung von Umgebungsparametern, oder Ausfall von Maschinenkomponenten.

Es sei ausdrücklich darauf hingewiesen, dass der Gegenstand des sechsten Aspekts mit dem Gegenstand der vorstehenden erfindungsgemäßen Aspekte der Erfindung vorteilhaft kombinierbar ist, und zwar sowohl einzeln oder in beliebiger Kombination kumulativ.

Nach einem siebten, nicht erfindungsgemäßen Aspekt löst die Aufgabe eine Anlage zum Produzieren einer Bahnware aus Kunststoff, insbesondere einem Spunbond-Vlies, einem Meltblown-Vlies, einem Composite-Vlies, einer Blasfolie, einer Flachfolie, einer Kunststoffplatte oder einer Kunststofftafel, wobei ein Extruder zum Plastifizieren eines Kunststoffs betrieben wird, wobei während des Produzierens ein Verfahren nach dem ersten Aspekt der Erfindung durchgeführt wird und/oder die Anlage ein Elektronisches Datenerfassungsgerät nach dem fünften Aspekt der Erfindung aufweist.

In diesem Zusammenhang sei ausdrücklich betont, dass sich die "Aspekte der Erfindung" miteinander so zu kombinieren verstehen, dass jegliche Ausgestaltung eines Aspekts der Erfindung mit jeglicher Ausgestaltung eines oder mehrerer Aspekte der Erfindung gemeinsam verwirklichen lassen, insofern nicht im Einzelfall zwei Merkmale in Widerspruch zueinander stehen. Es seien also die Kumulationen der Merkmale zweier (oder jeglicher mehrerer) Aspekte der Erfindung als ausdrücklich mit offenbart zu verstehen.

Im Kontext von "Optimierung", "optimieren", "verbessern", "minimieren", "maximieren" oder vergleichbarem wird konkret darauf hingewiesen, dass wann immer ein Prozess oder eine Eigenschaft, insbesondere eine Stoffeigenschaft, eine Produkteigenschaft, eine Prozesseigenschaft, eine Produktionsprozesseigenschaft, eine Logistikprozesseigenschaft und/oder eine Managementprozesseigenschaft, optimiert, verbessert, minimiert, maximiert oder vergleichbares durchgeführt wird, dann kann dies insbesondere modellbasiert erfolgen. Denkbar ist dabei insbesondere die Anwendung heuristischer Modelle, statistischer Modelle, direkt oder indirekt optimierender Modelle, evolutionärer Strategien, evolutionärer Algorithmen, von Modellen der differentiellen Evolution, neuronaler Netze oder vergleichbare Modelle. Weiterhin ist konkret unter anderem denkbar, dass selbstlernende Modelle zum Einsatz kommen.

Die Auswertung eines Datenelements kann modellbasiert erfolgen. Dabei kommt insbesondere ein heuristisches Modell, ein korrelationsbasiertes Modell, ein Optimierungsmodell oder ein anderes Modell zur Datenanalyse zum Einsatz. Vorzugsweise kommt dabei ein lernfähiges Modell zum Einsatz. Weiterhin ist konkret unter anderem vorstellbar, dass ein Modell auf bestehende Informationen zugreift oder ein Modell modellprädiktiv ist.

Insbesondere ist ein Modell dann modellprädiktiv, wenn es ein zeitdiskretes dynamisches Modell ist, welches das zukünftige Verhalten des Prozesses in Abhängigkeit von den Eingangssignalen berechnet.

Bei der Auswertung oder Analyse eines Datenelements ist konkret unter anderem denkbar, dass eine Methode des maschinellen Lernens zum Einsatz kommt. Unter "maschinellem Lernen" wird dabei die Generierung von Wissen aus Erfahrung bezeichnet. Dabei lernt ein künstliches System aus Beispielen und kann diese nach Beendigung der Lernphase verallgemeinern. Das bedeutet ganz konkret, dass nicht einfach die Beispiele auswendig gelernt werden, sondern künstliche System erkennt Muster und Gesetzmäßigkeiten in den Lerndaten. So kann das System auch unbekannte Daten beurteilen (Lerntransfer) oder aber am Lernen unbekannter Daten scheitern (Überanpassung).

Nachstehend wird die Erfindung anhand eines Ausführungsbeispiels unter Bezugnahme auf die Zeichnung näher erläutert. Dort zeigen
- Fig. 1 in schematischer Darstellung eine Wertschöpfungskette von Bahnware,
- Fig. 2 in schematischer Darstellung ein orts- und wertschöpfungskettenstufenübergreifendes System zur Synchronisation von Waren- und Informationsströmen,
- Fig. 3a, 3b schematisch die Übergabe von Informationen unter Nutzung eines Kornmunikationsprotokolls, wobei die Figuren 3a, 3b ein Ausführungsbeispiel bilden, welches nur aus Gründen der besseren Zeichenbarkeit hier in zwei Figurenteile 3a, 3b aufgeteilt dargestellt ist,
- Fig. 4, 5 schematisch eine Trennung bzw. eine Vereinigung, sowie
- Fig. 6 schematisch eine Bahnware.
- Fig. 7 Schema für die Verarbeitung von Datenelementen

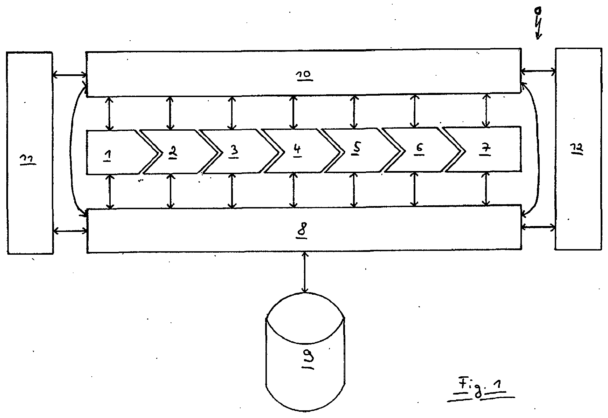

Die Wertschöpfungskette 0 für Bahnware (nicht dargestellt) in Figur 1 besteht im Wesentlichen aus den Wertschöpfungsstufen eines Ausgangsstoffs 1, einer Produktionsmaschine 2, eines Halbzeugs aus Bahnware 3, einer Weiterverarbeitungsmaschine 4, eines Endprodukts 5, des Handels 6 und eines Endverbrauchers 7.

Dabei produziert die Produktionsmaschine 2 aus einem Ausgangsstoff 1 ein Halbzeug aus Bahnware 3. Anschließend wird das Halbzeug aus Bahnware 3 zu einer Weiterverarbeitungsmaschine 4 transportiert, welche aus dem Halbzeug aus Bahnware 3 ein Endprodukt 5 produziert. Schließlich wird das Endprodukt 5 in den Handel 6 transportiert und dort vom Endverbraucher 7 erworben.

Alle Wertschöpfungsstufen 1, 2, 3, 4, 5, 6, 7 der Wertschöpfungskette 0 können zum Informationsaustausch mit einem elektronische Datenerfassungsgerät 8 verknüpft werden. Das elektronischen Datenerfassungsgerät 8 kann mit einem standortunabhängigen Speicher 9 verknüpft werden, welcher dazu eingerichtet ist, Informationen standortunabhängig zu speichern.

Weiterhin können alle Wertschöpfungsstufen 1, 2, 3, 4, 5, 6, 7 der Wertschöpfungskette 0 mit einem wertschöpfungsübergreifenden Management 10 verbunden werden. Dabei kann der Informationsaustausch zwischen den Wertschöpfungsstufen 1, 2, 3, 4, 5, 6, 7 der Wertschöpfungskette 0 direkt mit dem wertschöpfungsübergreifenden Management 10 erfolgen oder auf dem Umweg über das elektronische Datenerfassungsgerät 8, wobei es das elektronische Datenerfassungsgerät 8 auch ermöglicht den standortunabhängigen Speicher 9 zum Informationsaustausch mit dem wertschöpfungsübergreifenden Management 10 zu verbinden.

Weiterhin kann jede Wertschöpfungsstufen 1, 2, 3, 4, 5, 6, 7 der Wertschöpfungskette 0 und/oder der standortunabhängige Speicher 9 jeweils zum Informationsaustausch indirekt über das elektronisches Datenerfassungsgerät 8 mit der Forschung & Entwicklung 11 und/oder der zentralen Datenanalyse 12 verbunden werden.

Insbesondere ist das elektronische Datenerfassungsgerät 8 dazu eingerichtet, ein Datenelement (nicht dargestellt) mittels eines Kommunikationsprotokolls (nicht dargestellt) bereitzustellen, abzurufen und zu nutzen.

Insbesondere kann ein Datenelement (nicht dargestellt) Stoffeigenschaften (nicht dargestellt), Produkteigenschaften (nicht dargestellt), Prozesseigenschaften (nicht dargestellt) und Markteigenschaften (nicht dargestellt) aufweisen, wobei die Informationen (nicht dargestellt) eines Datenelements (nicht dargestellt) zur wertschöpfungskettenübergreifenden Synchronisation (nicht dargestellt) eines Waren- (nicht dargestellt) und Informationsflusses (nicht dargestellt) genutzt werden kann.

Weiterhin die Informationen (nicht dargestellt) eines Datenelements (nicht dargestellt) zur wertschöpfungskettenübergreifenden Optimierung (nicht dargestellt) einer Qualität (nicht dargestellt) eines Prozesses (nicht dargestellt), insbesondere eines Produktionsprozesses (nicht dargestellt), eines Logistikprozesses (nicht dargestellt) oder eines Managementprozesses (nicht dargestellt), innerhalb der Wertschöpfungskette 0 von Bahnware aus Kunststoff (nicht dargestellt) eingesetzt werden.

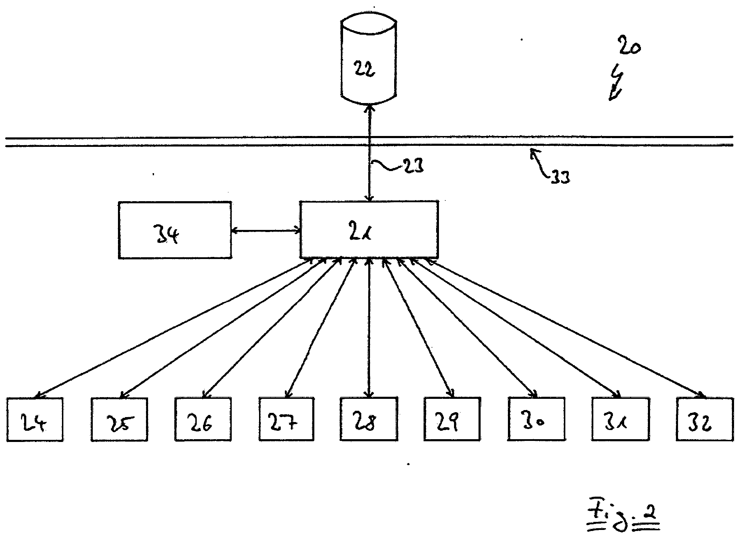

Das System zur Synchronisation von Waren- und Evolutionsströmen 20 in Fig. 2 basiert im Wesentlichen auf einem Datenerfassungsgerät 21 und einem Speicher 22. Das Datenerfassungsgerät 21 und die Sprecher 22 sind mittels einer Datenübermittlungsverbindung 23 so miteinander verbunden, sei es kabelbehaftet oder kabellos, dass sie Informationen (hier nicht dargestellt) in beide Richtungen austauschen können.

Das Datenerfassungsgerät 21 ist dazu eingerichtet, von verschiedensten Prozessen Daten zu erfassen und/oder Daten an die Prozesse zu übermitteln, so beispielsweise - aber nicht abschließend aufgezählt - von oder über einen Rohstoff 24, eine Produktionsanlage 25, einem Bediener 26, einer Rolle bzw. einer Rollen-ID 27, einer Weiterverarbeitungsmaschine 28, einem Labor 29, einer Entität oder einem Prozess aus Transport oder Logistik 30, einem Lager 31 oder einem Management-Prozess 32.

In der Figur ist das Datenerfassungsgerät 21 als eine logische Entität zu verstehen. In der Praxis kann beispielsweise ein einziges Datenerfassungsgerät 21 zum Datenaustausch mit mehreren der Prozesse 24 bis 32 befähigt sein, es ist aber ebenso gut denkbar, dass ein Datenerfassungsgerät 21 nur mit einer Untermenge hiervon kommunizieren kann, beispielsweise sogar auch nur mit einem einzigen Prozess der Prozesse 24 bis 32.

Am Beispiel des Rohstoffs 24 ist so denkbar, dass der Rohstoff eine spezielle Kennzeichnung trägt, beispielsweise kann eine Charge Granulat eine eindeutige Kennung tragen, oder beispielsweise eine Rezeptur erkennbar machen, und ein dafür spezialisiertes oder generell ausgebildetes Datenerfassungsgerät 21 kommuniziert mit dem Datenträger am Rohstoff 24. Das Datenerfassungsgerät 21 erkennt den Kenner (nicht dargestellt) des Rohstoffs 24. Über dem Kenner (also über die ID) des Rohstoffs 24 kann das Datenerfassungsgerät 21 ein Datenelement (nicht dargestellt) erzeugen. Das Datenelement kann sodann vom Datenerfassungsgerät 21 im Speicher 22 gespeichert werden.

Bevorzugt ist der Speicher 22 zentral angeordnet, also räumlich entfernt von den dezentralen Prozessen 24 bis 32, somit auch entfernt von den jeweils zugehörigen Datenerfassungsgeräten 21.

Damit das Datenerfassungsgerät 21 in den Speicher 22 schreiben oder sonst wie auf den Speicher 22 zugreifen kann, muss die Datenübermittlungsverbindung 23 bevorzugt eine Authentifizierungs-Hürde 33 nehmen. Hier kann auf die gängigen AuthentifizierungsMöglichkeiten bei elektronischer Anmeldung aus dem Stand der Technik zurückgegriffen werden.

Damit die vom Datenerfassungsgerät 21 an den Speicher 22 übermittelten Informationen oder Eigenschaften oder Datenelemente für den Bediener besser erkennbar sind, oder die vom Speicher 22 abgerufenen Daten besser erkennbar sind, kann für den Bediener eine Datenvisualisierungs- und Auswertungseinheit 34 vorgesehen sein.

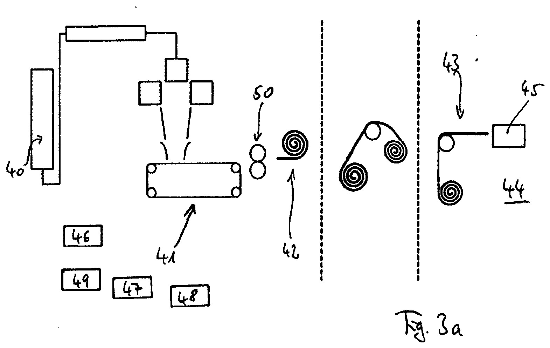

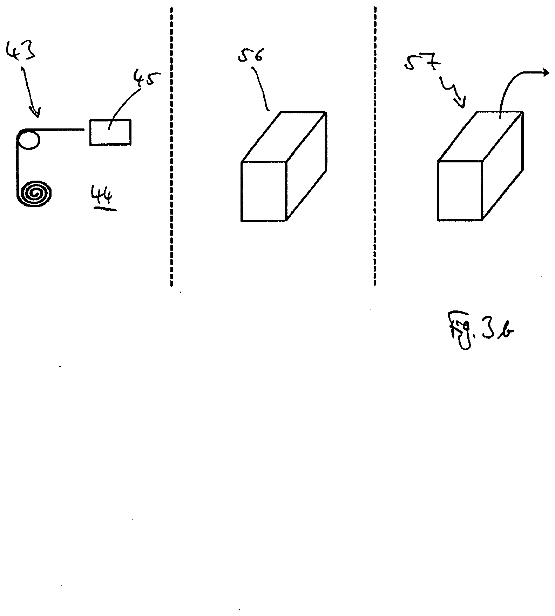

Typischerweise sind ein Silo 40, eine Spinnvliesanlage 41 (hier als Beispiel einer Anlage in Figur 3, aufgeteilt in Teilfiguren 3a/3b, dargestellt) und eine Bahnware 42 in der Prozesskette in einem Netzwerk verbunden, und dieses Netzwerk kommuniziert mit einem Management-System 46. Alternativ sind das Silo 40, die Spinnvliesanlage 41 und die Bahnware 42 in der Prozesskette in Netzwerksegmente aufgeteilt, die wiederum mit dem Management-System 46 verbunden sind.

Je nach Ausprägung kann die Verbindung gesichert sein. Dies kann durch kryptografische Methoden geschehen. Daher erfolgt die Weitergabe über Datenbausteine und Nachrichten, d.h. die Daten liegen der Maschinensteuerung direkt vor oder werden bei Bedarf durch die Steuerung generiert oder genutzt bzw. abonniert.

Alle Daten werden über ein Kommunikationsprotokoll in einem Speicher 49 chronologisch abgespeichert. Die Prozesseigenschaften werden beispielsweise als OPC-UA IEC 1900 62541 / DIN EN 62541 Teil 8, MQTT (MQTT seit 2016 ein ISO Standard (ISO/IEC 20922)). oder AMQP (ISO/IEC 19464), alternativ in einem durch den Hersteller der Softwareschnittstelle defmierten Datenrahmen oder einem weiteren durch den Anmelder gewählten Nachrichtenformat übertragen. Kennzeichnend ist, dass die zeitliche Information dem Protokoll beigefügt ist. Die Speicherung im Speicher 49 erfolgt chronologisch, darüber hinaus nach Art der Daten. Der Ort der Datenspeicherung durch den Speicher 49 und die Nutzung im Management-System 46 können räumlich getrennt ausgeführt sein.

Die Verteilung folgt dem Nutzungszweck und der Art der Daten.

Die Übergabe der Daten in die weiteren Schritte der Prozesskette erfolgt über Kommunikationsprotokolle, die entweder chronologisch, chronologisch/positionsbezogen mit der Bahnware, der Rollenware oder dem Endprodukt weitergeben werden oder mittels einer eindeutigen/individuellen Kennung aus dem Speicher 49 mittels des Management-Systems 46 lokal oder global zur Verfügung gestellt werden können. Die Wahl der Kennung richtet sich auch, aber nicht ausschließlich, nach der Art des Prozesses, kontinuierlichem oder Batch-/ Stückgutprozess .

Merkmal dieser Kommunikationsprotokolle ist, dass diese auf die Ansprüche des empfangenden Partners angepasst werden, sodass nur die jeweils für den Empfänger relevanten Daten zur Nutzung gelangen, jedoch für eine weitere Auswertung 47 durch eine Entwicklungsabteilung 48 in Summe zur Verfügung stehen. Die verarbeitende Instanz kann darüber hinaus die relevanten Daten des gewünschten Prozessschrittes den möglichen Empfängern zur Verfügung stellen. Der Empfänger trifft daraus die Auswahl.

In speziellen Fall der Übergabe einer Vliesrolle von einem Wickler auf einen Umwickler/eine Konfektionsmaschine werden neben den Rollenkennwerten wie Lauflänge, Breite insbesondere Inspektionsdaten übergeben, um eine aussortierende Selektion nach Ausschuss oder B-Ware zu ermöglichen und weitere Optimierungen in der weiteren Verarbeitung zu ermöglichen.

In einem weiteren parallelen Schritt können die Inspektionsdaten in Echtzeit dazu genutzt werden, um die Produktionseinstellung der Spiennvliesanlage 41 zu optimieren. Dazu werden die Prozessdaten im, Speicher 49 analysiert und die Ergebnisse an die Steuerung der Spinnvliesanlage 41 zurückgegeben. Dazu weisen die Kommunikationsprotokolle eine geringe Latenz auf, oder sie weisen Merkmale auf, die eine Berücksichtigung von Latenzen ermöglicht.

Final werden dem Speicher Daten über die letztendliche Verpackung und Lieferung zur Verfügung gestellt, sodass ein vollständiger Datensatz von Produktionsdaten, Produktkennwerten und Verpackungsdaten vorliegt.

Damit können die Lieferkette unterstützt werden um z.B. Transportmittel zu disponieren; und/oder
- mittels eines Kommunikationsprotokolls auftragsrelevante Daten in ein EPA System zurückgespielt werden; und/oder
- ein Datensatz auf einem mobilen Speichermedium oder per Kennung global (Cloud o.ä.) dem Weiterverarbeiter wie beispielsweise der Windelproduktion 43 zur Verfügung gestellt werden ("digitales Rollenprotokoll").

Nach der Herstellung eines Endproduktes hat dieses Endprodukt eine eigene Kennung.

Typischerweise lassen sich mittels dieser Kennung Datensätze zur Analyse und zu Logistikprozessen ermitteln.

Hinsichtlich des Erfindungsaspekts der Produktionsanlage sei an folgendes Beispiel gedacht:
Herstellen eines Spunbond Vlieses aus PP

Zunächst erfolgt ein Fördern aus dem Silo 40, dabei eine Übergabe der zugehörigen Rohstoffdaten an die Spinnvliesanlage 41.

Verfestigen mit einem Kalander 50 und Aufwickeln auf einem Wickler führt zur Bahnware 42. Es folgt die Übergabe der fertigen Rolle an einen Umwickler, insbesondere mit den gemessenen Inspektionsdaten (darin kann das Kriterium "Fehlerfreie Ware ja/nein" enthalten sein), Prozessdaten und den aus den Prozessparametern berechneten Kenndaten. Die Wickelkerne sind codiert.

Es folgt: Umwickeln der Bahnware in die gewünschte Konfektion, gleichzeitiges Markieren der B-Ware, und Entfernen der Ausschussware. Im Umwickler wird der Code des verwendeten Wickelkerns erfasst. Dieser Code ist dann ausreichend, um dem Umwickler Zugang zu allen relevanten Daten aus der Produktionsmaschine zu ermöglichen. Der Umwickler ist zu diesem Zwecke in das Netzwerk der Produktionsanlage eingebunden und ist damit authentifiziert mittels der Kennung die aus dem Code des Wickelkerns abgeleitet werden kann die relevanten Daten zu erhalten. Die fertig produzieren Rollen werden mittels Etiketten markiert. Auf diesen Etiketten ist beispielsweise ein QR- oder Bar-Code die Kennung dieser Rolle.

Es folgt: Übergabe der konfektionierten Bahnware (Rollenware) an eine Windelmaschine. Mittels der auf dem Rollenetikett aufgebrachten Kennung, die durch einen geeigneten Leser erfasst wird, stehen die für die Windelmaschine relevanten Daten über eine Softwareschnittstelle zur Verfügung. Die übertragenen Daten enthalten die physikalischen Eigenschaften (beispielsweise Festigkeit, Dehnung berechnet) und Rollenkenngrößen, Windelproduktion 43 zur Windel 45, Verpackt nach Vorgabe des Auftraggebers (Brand Owner oder White Label) inklusive einer Lot ID (also Chargen-Kennung). Die Lot ID einer Windel identifiziert diese also solche und ermöglicht mittels weiterer Auswertung 47 im Speicher 49 die Darstellung der kompletten Wertschöpfungskette. Dies stellt eine besonders prozesssicher angenehme Nutzung 57 der verkaufsfertigen Windel 56 sicher.

Bei einem Feedback des Endkunden an den Windelhersteller 44 über mangelnde Qualität kann dieser über die Datensätze die volle Rückverfolgbarkeit bis zum Silo erreichen.

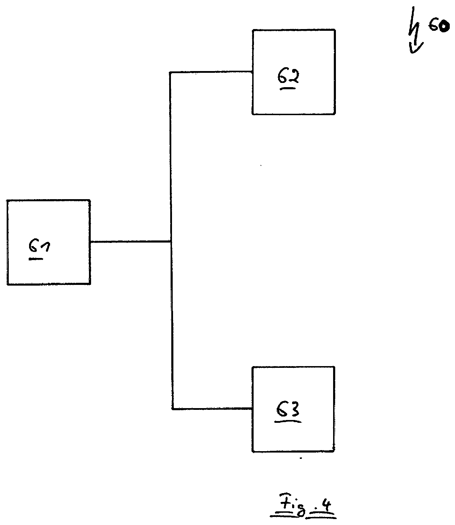

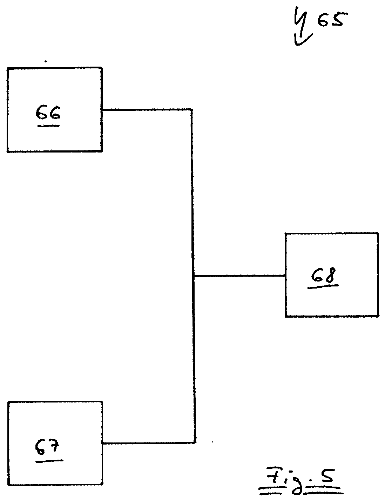

Die Fig. 4 und 5 zeigen den Vereinigungsprozess (zum Beispiel mittels eines Kalanders) bzw. den Teilungsprozess (zum Beispiel mittels eines Slitters).

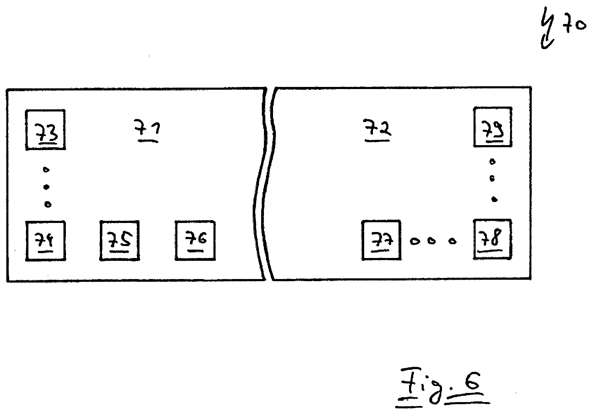

Wie in Fig. 6 schematisch dargestellt ist, kann Bahnware 70 vor allem an einem vorderen Bahnende 71 und/oder an einem hinteren Bahnende 72 redundante Kennungen 73...79 tragen. Die Bahnware kann dann getrennt werden, zum Beispiel mittels eines Slitters, sodass die dabei erzeugten Teile jeweils noch identische Kennungen 73...79 tragen und somit der Prozess stromauf in der Wertschöpfungskette noch nachvollziehbar bleibt.

Idealerweise fügt der Prozess beim Aufteilen von Bahnware 70 mit redundanten identischen Kennern 73...79 den erzeugten Teilen unterschiedliche Teilkenner (nicht dargestellt) hinzu, sodass von dort an die Teile in unterschiedlichen Schicksalen weiter verfolgt werden können.

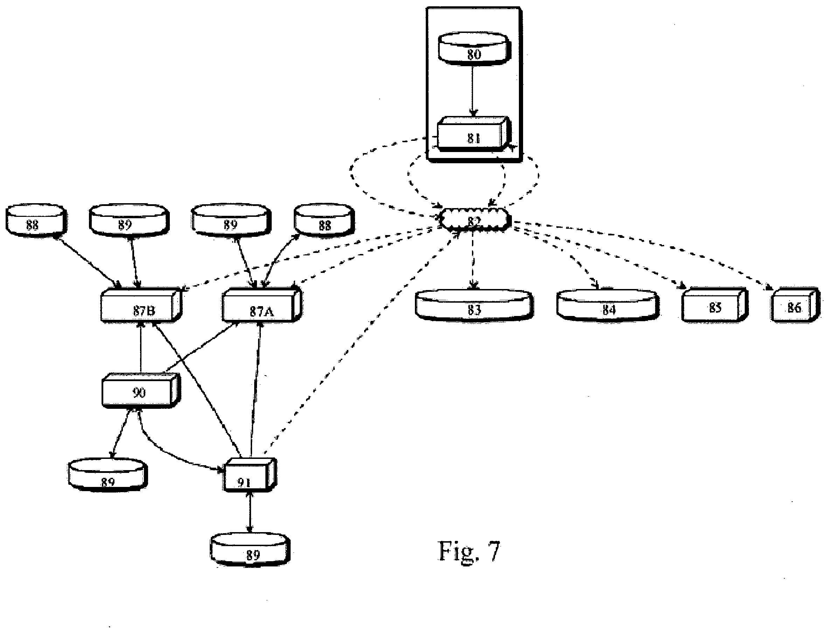

Fig. 7 zeigt ein Schema eines Verfahrens für die Infrastruktur der Datenelemente durch eine erfindungsgemäße Vorrichtung. Ein Anlagen Simulator (Facility Simulator) 80 simuliert eine Anlage und befällt die Datenbank eines Leitrechners (MSSQL/SQlite) mit Datenelementen. Diese Datenelemente werden dann durch eine Cloud Verbindung (Cloud Connector) 81 in Form einer Appliance an einen Nachrichten Broker (Message Broker) 82 übermittelt. Die Cloud Verbindung stellt eine Verbindung zwischen der Antage und einer Cloud dar und die übermittelten Daten beinhaltet unter anderem Transport, Konfiguration, Logs, Data Mapping und Upload von Monitoring Dumps der Datenelemente. Der Nachrichten Broker 82 distribuiert infolgedessen MQTT Messages innerhalb der Cloud. Einerseits kann danach die Datenelemente an Kundenspezifikationen maßgeschneidert vom Nachrichten Broker 82 und verschiedene Kunden 87A, 87B weitergeleitet werden, die wiederum Datenelemente in verschiedene Datenbankmanagementsysteme 88, 89 speichern. Als Datenbankmanagementsysteme können Time Series Datenbanken 88 für eventuelle Visualisierung und SQL Datenbanken 89 in Frage kommen. Eine Identity and Rights Management Software 90 gewährleistet die Sicherheit, dass nur befugte Zugriffe zu den freigegebenen Datenelementen zur vereinbarten Zeit für einen vereinbarten Zweck erfolgen kann. Eine IoT ("Internet of Things" oder auch "Internet der Dinge") Applikation 91 beinhaltet Informationen zu Konfigurationsmanagement, Logging, Error Logging und Verwaltung von Monitoring Dumps.

Der Nachrichten Broker 81 kann andererseits eine Vielzahl von Datenelementen in verschiedene Big Data Datenbanken speichern. Zum Beispiel können, wie in Fig. 7 veranschaulicht, Monitoring Dumps in einen Big Data Blog Storage 83 und andere Datenelemente in ein Big Data Data Lake 84 gespeichert werden. Entsprechend werden Error Log Daten in eine Error Log Data Datenbank 85 und Log Daten in eine Log Data Datenbank 86 gespeichert. Die Infrastruktur ermöglicht daher den Einsatz von Machine Learning (maschinelles Lernen) um die Daten zu analysieren. Im Zuge der Datenschutzrichtlinien ist es außerdem wichtig, dass durch die Infrastruktur eine gewisse Anonymität der Daten für einen Dritten gewährleistet werden kann. Das Verfahren nach Fig. 7 kann weiterhin On-Prem ("On-Premises" bzw. "in den eigenen Räumlichkeiten, vor Ort oder lokal) durchgeführt werden.

### Liste der verwendeten Bezugszeichen

Fig. 1
   0 Wertschöpfungskette
   1 Ausgangsstoff
   2 Produktionsmaschine
   3 Halbzeug aus Bahnware
   4 Weiterverarbeitungsmaschine
   5 Endprodukt
   6 Handel
   7 Endverbraucher
   8 elektronisches Datenerfassungsgerät
   9 standortunabhängiger Speicher
   10 Wertschöpfungsübergreifendes Management
   11 Forschung & Entwicklung
   12 zentrale Datenanalyse
Fig. 2
   20 System
   21 Datenerfassungsgerät
   22 Speicher
   23 Datenermittlungsverbindung
   24 Rohstoff
   25 Produktionsanlage
   26 Bediener
   27 Rolle
   28 Weiterverarbeitungsmaschine
   29 Labor
   30 Transport / Logistik
   31 Lager
   32 Managementprozess
   33 Authentifizierungshürde
   34 Datenvisualisierungs- und Auswertungseinheit
Fig. 3
   40 Silo
   41 Spinnvliesanlage
   42 Bahnware
   43 Windelproduktion
   44 Windelhersteller
   45 Windel
   46 Management-System
   47 weitere Auswertung
   48 Entwicklungsabteilung
   49 Speicher
   50 Kalander
   56 verkaufsfertige Windel
   57 Nutzung der verkaufsfertigen Windel
Fig. 4
   60 Teilungsprozess
   61 zulaufende Rolle
   62 erster weiterlaufender Teil
   63 zweiter weiterlaufender Teil
Fig. 5
   65 Vereinigungsprozess
   66 erster zulaufender Teil
   67 zweiter zulaufender Teil
   68 vereinigt weiterlaufende Rolle
Fig. 6
   70 Bahnware
   71 vorderes Bahnende
   72 hinteres Bahnende
   73...79 Kennung (Identifikator)
Fig. 7
   80 Anlagen Simulator
   81 Cloud Verbindung
   82 Nachrichten Broker
   83 Big Data Blob Storage
   84 Big Data Data Lake
   85 Error Log Data Datenbank
   86 Log Data Datenbank
   87A, 87B Kunde A, Kunde B
   88 Time Series Datenbank
   89 SQL Datenbank
   90 Identity and Rights Management
   91 IoT Applikation

## Patentansprüche

1. Verfahren zum Bereitstellen, Abrufen und Nutzen eines Datenelements in einer Wertschöpfungskette (0) einer Bahnware (42) aus Kunststoff zum Produzieren eines Endprodukts (5),
mittels eines Kommunikationsprotokolls (23) und eines Datenträgers (9) zum stufenübergreifenden Austausch einer Mehrzahl verschiedener Datenelemente zum Produzieren des Endprodukts (5) innerhalb der Wertschöpfungskette (0),
wobei das Datenelement in der Wertschöpfungskette (0) stufenübergreifend verwendet wird, nämlich von einer ersten Stufe mittels des Kommunikationsprotokolls am Datenträger (9) bereitgestellt und von einer zweiten Stufe mittels des Kommunikationsprotokolls vom Datenträger (9) abgerufen und an einer Maschine der zweiten Stufe genutzt wird,
wobei die Bahnware (42) aus Kunststoff ein Spunbond-Vlies oder ein Meltblown-Vlies oder ein Composite-Vlies oder eine Blasfolie oder eine Flachfolie oder eine Kunststoffplatte oder eine Kunststofftafel ist, und
wobei zumindest die erste Stufe (1) zum Austausch von Datenelementen mit einem elektronischen Datenerfassungsgerät (8) mittels einer Datenübertragungsverbindung (23) mit einem Datenträger (9), vorzugsweise einem standortunabhängigen Speicher (9), zum Speichern der Daten verknüpft wird, wobei das Datenelement von zumindest der ersten Stufe (1) der Wertschöpfungskette (0) mittels des elektronischen Datenerfassungsgerätes (8) zum Datenträger (9) weitergeleitet wird, und
wobei das Nutzen des Datenelements seitens der zweiten Stufe zum Weiterverarbeiten desjenigen Produkts erfolgt, anhand dessen Produktion oder Herstellung auf der ersten Stufe das Datenelement generiert und in den Datenspeicher (9) bereitgestellt worden ist, wobei das Datenelement über das Datenerfassungsgerät (8) mit dem Produkt und zumindest einer Produktionsmaschine und/oder Weiterverarbeitungsmaschine (28) und/oder Transportfahrzeug als zumindest zweiter Stufe verknüpft und bereitgestellt und/oder genutzt wird,
***dadurch gekennzeichnet, dass***
ein digitales Rollenprotokoll verwendet wird, welches die einen oder mehreren Datenelemente aufweist und eindeutig mit einer Rolle (27) verknüpft ist, die für den Transport der Bahnware (42) sowie das Aufrollen und das Abrollen von Bahnware (42) eingerichtet ist, und
wobei das digitale Rollenprotokoll alle relevanten Informationen aus der Wertschöpfungskette (0) der Bahnware (42) enthält, die mit der der Rolle zugehörigen Bahnware (42) verknüpft sind.

2. Verfahren nach Anspruch 1, ***dadurch gekennzeichnet, dass***
das Datenelement der zumindest ersten Wertschöpfungsstufe (1) der Wertschöpfungskette (0) und/oder des Datenträgers (9) über das elektronische Datenerfassungsgerät (8) zur Aufbereitung und Analyse an die Forschung und Entwicklung (11) und/oder eine zentralen Datenanalyse (12) weitergeleitet wird.

3. Verfahren nach Anspruch 1 oder 2, ***dadurch gekennzeichnet, dass***
alle Wertschöpfungsstufen (1, 2, 3, 4, 5, 6, 7, 8) zum Austausch von Datenelementen mit dem elektronischen Datenerfassungsgerät (8) mittels einer Datenübertragungsverbindung (23) mit einem Datenträger (9), vorzugsweise einem standortunabhängigen Speicher, zum Speichern der Daten verknüpft werden.

4. Verfahren nach einem der vorstehenden Ansprüche, ***dadurch gekennzeichnet, dass***
der Datenträger (9) ein standortunabhängiger Datenspeicher ist, der ortsübergreifend und/oder parteiübergreifend verfügbar ist, wobei der Datenträger eine ortsübergreifend und/oder parteiübergreifend verfügbare Datenwolke sein kann, und wobei die Datenübertragungsverbindung (23) zwischen dem Datenerfassungsgerät (8) und dem Datenträger (9) kabelhaftet oder kabellos ist.

5. Verfahren nach einem der vorstehenden Ansprüche, ***dadurch gekennzeichnet, dass*** das Datenelement eine Stoffeigenschaft oder Stoffeigenschaften aufweist, insbesondere eine Stoffeigenschaft oder Stoffeigenschaften eines Produkts, insbesondere eines Ausgangsstoffs und/oder eines Halbzeugs und/oder eines Endprodukts.

6. Verfahren nach einem der vorstehenden Ansprüche, ***dadurch gekennzeichnet, dass*** das Datenelement eine Produkteigenschaft oder Produkteigenschaften aufweist, insbesondere eine Produkteigenschaft oder Produkteigenschaften eines Ausgangsstoffs und/oder eines Halbzeugs und/oder eines Endprodukts.

7. Verfahren nach einem der vorstehenden Ansprüche, ***dadurch gekennzeichnet, dass*** der Austausch von einem oder mehreren Datenelementen ortsübergreifend erfolgt, insbesondere ist der Austausch von einem Datenelement weltweit möglich und/oder dass der Austausch von einem oder mehreren Datenelementen parteiübergreifend erfolgt, insbesondere unternehmensübergreifend.

8. Verfahren nach einem der vorstehenden Ansprüche, ***dadurch gekennzeichnet, dass*** der Austausch von einem oder mehreren Datenelementen mit Hilfe einer standardisierten Softwareschnittstelle erfolgt.

9. Verfahren nach einem der vorstehenden Ansprüche, ***dadurch gekennzeichnet, dass*** die Stufen (1, 2, 3, 4, 5, 6, 7, 8) das Datenelement lesen und/oder schreiben können.

10. Verfahren nach einem der vorstehenden Ansprüche, ***dadurch gekennzeichnet, dass*** die zweite Stufe chronologisch nach der ersten Stufe liegt.

11. Verfahren nach einem der vorstehenden Ansprüche, ***dadurch gekennzeichnet, dass*** das Produkt, insbesondere das Endprodukt, mit einer individuellen Produktkennung versehen wird und diese nachfolgend aufweist, und/oder dass eine Produktionsmaschine für Bahnware aus Kunststoff mit einer individuellen Produktionsmaschinenkennung versehen wird und diese nachfolgend aufweist, und/oder dass eine Weiterverarbeitungsmaschine für Bahnware aus Kunststoff mit einer individuellen Weiterverarbeitungsmaschinenkennung versehen wird und diese nachfolgend aufweist, und/oder dass ein Transportfahrzeug für einen Transport des Produkts mit einer individuellen Transportfahrzeugkennung versehen wird und diese nachfolgend aufweist.

12. Verfahren gemäß einem der voranstehenden Ansprüche ***dadurch gekennzeichnet, dass*** es zum Klassifizieren einer Prozessqualität in der mehrere Stufen aufweisenden Wertschöpfungskette einer Bahnware aus Kunststoff, beispielsweise einer Blasfolienbahn, einer Flachfolienbahn oder einer Vliesbahn, zum Produzieren eines Endprodukts, beispielsweise einer Verpackungsfolie, einer Landwirtschaftsfolie, einer Thermoformfolie, einer Kunststoffplatte oder einer Windel, wobei das Klassifizieren anhand von Informationen und/oder Eigenschaften über die Stufen und/oder einen Rohstoff und/oder ein Halbzeug und/oder das Endprodukt erfolgt, geeignet ist,
wobei mindestens eine Information oder Eigenschaft, bevorzugt für mehrere, besonders bevorzugt für alle, ein Gutbereich und/oder ein Schlechtbereich definiert werden,
wobei entlang der Wertschöpfungsstufen Informationen und/oder Eigenschaften ermittelt und - bevorzugt mittels eines Kennzeichens oder einer Identifikators authentifiziert - als Datenelement lokal oder vor allem entfernt in einem Datensatz über ein Kommunikationsprotokoll übertragen und gespeichert werden,
wobei die reine Information und/oder Eigenschaft und/oder der Gutbereich oder Schlechtbereich der Information und/oder Eigenschaft, der jeweiligen Wertschöpfungsstufe gespeichert werden,
wobei anhand des Datensatzes das Klassifizieren eines Prozesses der Wertschöpfungsstufe (1), einer Prozesskette entlang mehrerer Wertschöpfungsstufen, des Endprodukts und/oder eines Herstellers erfolgt.

13. Vorrichtung zum Betreiben des Verfahrens nach einem der vorstehenden Ansprüche 1 bis 12, das ein Datenelement in einer Wertschöpfungskette einer Bahnware aus Kunststoff zum Produzieren eines Endprodukts bereitstellt, abruft und nutzt, **aufweisend**
ein Mittel zum stufenübergreifenden Austausch mittels eines Kommunikationsprotokolls (23) und eines Datenträgers (9) von einer Mehrzahl verschiedener Datenelemente zum Produzieren des Endprodukts innerhalb der Wertschöpfungskette,
wobei die Vorrichtung ein Mittel aufweist, das zum Verwenden des Datenelements in der Wertschöpfungskette ausgebildet ist, nämlich zum Bereitstellen des Datenelements von einer ersten Stufe mittels des Kommunikationsprotokolls am Datenträger und zum Abrufen des Datenelements von einer zweiten Stufe mittels des Kommunikationsprotokolls vom Datenträger und zum Nutzen an einer Maschine der zweiten Stufe,
wobei die Bahnware (42) aus Kunststoff ein Spunbond-Vlies oder ein Meltblown-Vlies oder ein Composite-Vlies oder eine Blasfolie oder eine Flachfolie oder eine Kunststoffplatte oder eine Kunststofftafel ist, und
wobei die Vorrichtung Mittel aufweist, die dazu ausgebildet sind, zum Austausch von Datenelementen mit einem elektronischen Datenerfassungsgerät (8) mittels einer Datenübertragungsverbindung (23) mit dem Datenträger (9), vorzugsweise einem standortunabhängigen Speicher (9), zum Speichern der Daten zu verknüpfen,
wobei die Vorrichtung Mittel aufweist, die dazu ausgebildet sind, das Datenelement von zumindest der ersten Stufe (1) der Wertschöpfungskette (0) mittels des elektronischen Datenerfassungsgerätes (8) zum Datenträger (9) weiterzuleiten, und
wobei die Vorrichtung Mittel aufweist, die dazu ausgebildet sind, das Nutzen des Datenelements seitens der zweiten Stufe zum Weiterverarbeiten desjenigen Produkts erfolgen zu lassen, anhand dessen Produktion oder Herstellung auf der ersten Stufe das Datenelement generiert und in den Datenspeicher bereitgestellt worden ist,
wobei die Vorrichtung Mittel aufweist, um das Datenelement über das Datenerfassungsgerät (8) mit dem Produkt und zumindest einer Produktionsmaschine und/oder Weiterverarbeitungsmaschine und/oder Transportfahrzeug als zumindest zweite Stufe anzuzeigen, zu verknüpfen und bereitzustellen und/oder zu nutzen,
**dadurch gekennzeichnet, dass**
die Vorrichtung Mittel aufweist, die dazu ausgebildet sind, ein digitales Rollenprotokoll zu verwenden, welches die einen oder mehreren Datenelemente aufweist und eindeutig mit einer Rolle (27) verknüpft ist, die für den Transport der Bahnware (42) sowie das Aufrollen und das Abrollen von Bahnware (42) eingerichtet ist, und
wobei das digitale Rollenprotokoll alle relevanten Informationen aus der Wertschöpfungskette (0) der Bahnware (42) enthält, die mit der der Rolle zugehörigen Bahnware (42) verknüpft sind.

14. Vorrichtung nach Anspruch 13, ***dadurch gekennzeichnet, dass*** die Vorrichtung fernsteuerbar ist.

15. Vorrichtung nach einem der Ansprüche 13 und 14, ***dadurch gekennzeichnet, dass*** die Vorrichtung über ein elektronisches Datenerfassungsgerät verfügt, welches zum Schreiben eines Datenelements zum Bereitstellen des Datenelements und/oder zum Lesen eines Datenelements zum Abrufen des Datenelements das Kommunikationsprotokoll zum stufenübergreifenden Austausch einer Mehrzahl verschiedener Datenelemente zum Produzieren des Endprodukts innerhalb der Wertschöpfungskette vorgesehen ist, um das Datenelement in der Wertschöpfungskette einer Bahnware aus Kunststoff, insbesondere eines Spunbond-Vlieses, eines Meltblown-Vlieses, eines Composite-Vlieses, einer Blasfolie, einer Flachfolie, einer Kunststoffplatte oder einer Kunststofftafel, zum Produzieren eines Endprodukts stufenübergreifenden bereitzustellen, abzurufen und zu nutzen.

16. Vorrichtung nach Anspruch 15, ***dadurch gekennzeichnet, dass*** das elektronische Datenerfassungsgerät mobil ist, wobei es eine Batterie, einen Stromanschluss oder einen Spannungsgenerator aufweist.

17. Vorrichtung nach Anspruch 15, ***dadurch gekennzeichnet, dass*** das elektronische Datenerfassungsgerät stationär an einer Produktionsmaschine und/oder einer Weiterverarbeitungsmaschine und/oder einem Transportfahrzeug installiert ist.

18. Vorrichtung nach Anspruch 15, ***dadurch gekennzeichnet, dass*** das elektronische Datenerfassungsgerät stationär am Halbzeug, am Produkt und/oder am Endprodukt installiert ist.

19. Vorrichtung nach einem der Ansprüche 15 bis 18, ***dadurch gekennzeichnet, dass*** ein Trigger zum Senden und/oder Vervollständigen eines Datensatzes vorgesehen ist.

20. Vorrichtung nach Anspruch 19, ***dadurch gekennzeichnet, dass*** der Trigger eine mechanische Auslösung aufweist.

21. Vorrichtung nach Anspruch 20, ***dadurch gekennzeichnet, dass*** der Trigger eine elektronische Auslösung aufweist, insbesondere mittels eines optischen Sensors und/oder eines Funksensors.

22. Vorrichtung nach einem der Ansprüche 19 bis 21, ***dadurch gekennzeichnet, dass*** ein elektronisches Koppelglied zum Datenaustausch mit einer Maschine vorgesehen ist.

## Claims

1. A method for providing, retrieving and using a data element in a value creation chain (0) of a sheet material (42) made of plastic for producing a final product (5), by means of a communication protocol (23) and a data carrier (9) for exchanging a plurality of different data elements across stages for producing the final product (5) within the value creation chain (0),
wherein the data element is used across stages in the value creation chain (0), namely provided from a first stage by means of the communication protocol to the data carrier (9) and retrieved by a second stage by means of the communication protocol from the data carrier (9) and used on a machine of the second stage,
wherein the sheet material (42) made of plastic is a spun-bonded non-woven fabric or a melt-blown non-woven fabric or a composite non-woven fabric or a blown film or a flat film or a plastic board or a plastic panel, and
wherein at least the first stage (1) for exchanging data elements with an electronic data detection device (8) is linked by means of a data transmission connection (23) to a data carrier (9), preferably a location-independent memory (9) for storing the data, wherein the data element is forwarded from at least the first stage (1) of the value creation chain (0) by means of the electronic data detection device (8) to the data carrier (9), and
wherein the use of the data element is carried out on the part of the second stage for further processing that product, on the basis of the production or manufacture of which, at the first stage, the data element was generated and provided to the data memory (9), wherein the data element is linked and provided via the data detection device (8) to the product and at least one production machine and/or further processing machine (28) and/or transport vehicle and/or used as at least a second stage,
**characterised in that**
a digital roll protocol is used, which has the one or more data elements and is clearly linked to a roll (27) which is adapted for transporting the sheet material (42) as well as rolling up and unrolling sheet material (42), and
wherein the digital roll protocol contains all the relevant information from the value creation chain (0) of the sheet material (42), which is linked to the sheet material (42) associated with the roll.

2. The method according to Claim 1, **characterised in that**
the data element of the at least first value creation stage (1) of the value creation chain (0) and/or of the data carrier (9) is forwarded via the electronic data detection device (8) to research and development (11) and/or a central data analysis (12) for processing and analysis.

3. The method according to Claim 1 or 2, **characterised in that**
all value creation stages (1, 2, 3, 4, 5, 6, 7, 8), for exchanging data elements with the electronic data detection device (8), are linked by means of a data transmission connection (23) to a data carrier (9), preferably a location-independent memory, for storing the data.

4. The method according to any one of the preceding claims, **characterised in that**
the data carrier (9) is a location-independent data memory which is available across locations and/or across parties, wherein the data carrier can be a data cloud which is available across locations and/or across parties, and wherein the data transmission connection (23) is wired or wireless between the data detection device (8) and the data carrier (9).

5. The method according to any one of the preceding claims, **characterised in that** the data element has a substance property or substance properties, in particular a substance property or substance properties of a product, in particular of a starting material and/or of a semi-finished product and/or of a final product.

6. The method according to any one of the preceding claims, **characterised in that** the data element has a product property or product properties, in particular a product property or product properties of a starting material and/or of a semi-finished product and/or of a final product.

7. The method according to any one of the preceding claims, **characterised in that** the exchange of one or more data elements is carried out across locations, in particular the exchange of one data element is possible worldwide, and/or **in that** the exchange of one or more data elements is carried out across parties, in particular across companies.

8. The method according to any one of the preceding claims, **characterised in that** the exchange of one or more data elements is carried out with the aid of a standardised software interface.

9. The method according to any one of the preceding claims, **characterised in that** the stages (1, 2, 3, 4, 5, 6, 7, 8) can read and/or write the data element.

10. The method according to any one of the preceding claims, **characterised in that** the second stage lies chronologically after the first stage.

11. The method according to any one of the preceding claims, **characterised in that** the product, in particular the final product, is provided with an individual product identifier and has this subsequently, and/or **in that** a production machine for sheet material made of plastic is provided with an individual production machine identifier and has this subsequently, and/or **in that** a further processing machine for sheet material made of plastic is provided with an individual further processing machine identifier and has this subsequently, and/or **in that** a transport vehicle for transporting the product is provided with an individual transport vehicle identifier and has this subsequently.

12. The method according to any one of the preceding claims, **characterised in that** said method is suitable for classifying a process quality in the value creation chain, which has multiple stages, of a sheet material made of plastic, for example a blown film web, a flat film web or a nonwoven web, for producing a final product, for example a packaging film, an agricultural film, a thermoforming film, a plastic board or a nappy, wherein the classifying is carried out on the basis of information about, and/or properties of, the stages and/or a raw material and/or a semi-finished product and/or the final product,
wherein a good region and/or a bad region are defined for at least one item of information or property, preferably for multiple, particularly preferably for all items of information or properties,
wherein information and/or properties are determined along the value creation stages and - preferably authenticated by means of a sign or an identifier - transmitted and stored as a data element locally or, especially, removed in a data record via a communication protocol,
wherein the pure information and/or property, and/or the good region or bad region of the information and/or property of the respective value creation stage is/are stored,
wherein the classifying of a process of the value creation stage (1), a process chain along multiple value creation stages, of the final product and/or of a manufacturer is carried out on the basis of the data record.

13. A device for operating the method according to any one of the preceding Claims 1 to 12, which provides, retrieves and uses a data element in a value creation chain of a sheet material made of plastic for producing a final product, having
a means for exchanging, by means of a communication protocol (23) and a data carrier (9), a plurality of different data elements across stages for producing the final product within the value creation chain,
wherein the device has a means which is configured for using the data element in the value creation chain, namely for providing the data element from a first stage by means of the communication protocol to the data carrier and for retrieving the data element by a second stage by means of the communication protocol from the data carrier and for using said data element on a machine of the second stage,
wherein the sheet material (42) made of plastic is a spun-bonded non-woven fabric or a melt-blown non-woven fabric or a composite non-woven fabric or a blown film or a flat film or a plastic board or a plastic panel, and
wherein the device has means which are configured, for exchanging data elements to link an electronic data detection device (8) by means of a data transmission connection (23) to the data carrier (9), preferably a location-independent memory (9), for storing the data, wherein the device has means which are configured to forward the data element from at least the first stage (1) of the value creation chain (0) by means of the electronic data detection device (8) to the data carrier (9), and
wherein the device has means which are configured to have the use of the data element carried out on the part of the second stage for further processing that product, on the basis of the production or manufacture of which, at the first stage, the data element was generated and provided to the data memory,
wherein the device has means for displaying, linking and providing the data element, via the data detection device (8), in association with the product and with at least one production machine and/or further processing machine and/or transport vehicle, and/or using the data in at least a second stage,
**characterised in that**
the device has means which are configured to use a digital roll protocol which has the one or more data elements and is clearly linked to a roll (27) which is adapted for transporting the sheet material (42) as well as rolling up and unrolling sheet material (42), and
wherein the digital roll protocol contains all the relevant information from the value creation chain (0) of the sheet material (42), which is linked to the sheet material (42) associated with the roll.

14. The device according to Claim 13, **characterised in that** the device can be controlled remotely.

15. The device according to any one of Claims 13 and 14, **characterised in that** the device has an electronic data detection device which is provided for writing a data element, for providing the data element and/or for reading a data element, for retrieving the data element by means of a communication protocol for exchanging a plurality of different data elements across stages for producing the final product within the value creation chain, in order to provide, retrieve and use, across stages, the data element in the value creation chain of a sheet material made of plastic, in particular a spun-bonded non-woven fabric, a melt-blown non-woven fabric, a composite non-woven fabric, a blown film, a flat film, a plastic board or a plastic panel, for producing a final product.

16. The device according to Claim 15, **characterised in that** the electronic data detection device is mobile, wherein it has a battery, a power connection or a voltage generator.

17. The device according to Claim 15, **characterised in that** the electronic data detection device is installed stationarily on a production machine and/or a further processing machine and/or a transport vehicle.

18. The device according to Claim 15, **characterised in that** the electronic data detection device is installed stationarily on the semi-finished product, on the product and/or on the final product.

19. The device according to any one of Claims 15 to 18, **characterised in that** a trigger is provided for transmitting and/or completing a data record.

20. The device according to Claim 19, **characterised in that** the trigger has a mechanical release.

21. The device according to Claim 20, **characterised in that** the trigger has an electronic release, in particular by means of an optical sensor and/or a radio-wave sensor.

22. The device according to any one of Claims 19 to 21, **characterised in that** an electronic coupling member for exchanging data with a machine is provided.

## Revendications

1. Procédé de mise à disposition, de consultation et d'utilisation d'un élément de données dans une chaîne (0) de création de valeur d'un produit en bande continue (42) en matériau synthétique pour la production d'un produit fini (5),
au moyen d'un protocole de communication (23) et d'un support de données (9) pour l'échange sur plusieurs niveaux d'une multitude d'éléments de données différents en vue de la production du produit fini (5) dans la chaîne (0) de création de valeur,
dans lequel l'élément de données est utilisé sur plusieurs niveaux dans la chaîne (0) de création de valeur, à savoir mis à disposition par un premier niveau au moyen du protocole de communication sur le support de données (9) et consulté sur le support de données (9) par un deuxième niveau au moyen du protocole de communication et utilisé sur une machine du deuxième niveau,
dans lequel le produit en bande continue (42) en matériau synthétique est un non-tissé filé-lié, un non-tissé obtenu par fusion-soufflage ou un non-tissé composite ou une feuille soufflée ou une feuille plane ou une plaque en matériau synthétique ou une feuille en matériau synthétique et
dans lequel au moins le premier niveau (1), en vue de l'échange des éléments de données avec un appareil (8) électronique d'acquisition de données, est lié au moyen d'une liaison de transmission de données (23) à un support de données (9), de préférence une mémoire (9) indépendante de l'endroit, pour la sauvegarde des données, l'élément de données étant transféré par au moins le premier niveau (1) de la chaîne (0) de création de valeur au moyen de l'appareil (8) électronique d'acquisition de données au support de données (9) et
dans lequel l'élément de données est utilisé par le deuxième niveau en vue de la transformation ultérieure du produit, à l'aide de la production ou de la fabrication duquel l'élément de données a été généré au premier niveau et mis à disposition dans la mémoire de données (9), l'élément de données étant lié, par l'intermédiaire de l'appareil (8) d'acquisition de données, au produit et à au moins une machine de production et/ou à une machine de transformation ultérieure (28) et/ou à un véhicule de transport, en tant qu'au moins deuxième niveau et mis à disposition de ceux-ci et/ou utilisé par ceux-ci,
**caractérisé en ce que**
un protocole de rouleau numérique est utilisé, lequel présente un ou plusieurs éléments de données et est lié de manière univoque à un rouleau (27) qui est conçu pour le transport du produit en bande continue (42) ainsi que pour l'enroulement et le déroulement du produit en bande continue (42) et
le protocole de rouleau numérique contenant toutes les informations pertinentes de la chaîne (0) de création de valeur du produit en bande continue (42) qui sont liées au produit en bande continue (42) associé au rouleau.

2. Procédé selon la revendication 1, **caractérisé en ce que**
l'élément de données dudit au moins un premier niveau (1) de création de valeur de la chaîne (0) de création de valeur et/ou du support de données (9) est transféré par l'intermédiaire de l'appareil (8) électronique d'acquisition de données au département de recherche et développement (11) et/ou à une analyse (12) centrale de données en vue du traitement et de l'analyse.

3. Procédé selon la revendication 1 ou 2, **caractérisé en ce que**
tous les niveaux (1, 2, 3, 4, 5, 6, 7, 8), en vue de l'échange des éléments de données avec l'appareil (8) électronique d'acquisition de données, sont liés au moyen d'une liaison de transmission de données (23) à un support de données (9), de préférence une mémoire indépendante de l'endroit, pour la sauvegarde des données.

4. Procédé selon l'une des revendications précédentes, **caractérisé en ce que**
le support de données (9) est un support de données indépendant de l'endroit, qui est à disposition pour tous les endroits et/ou pour toutes les parties, le support de données pouvant être un nuage de données à disposition pour tous les endroits et/ou pour toutes les parties et la liaison de transmission de données (23) entre l'appareil (8) d'acquisition de données et le support de données (9) pouvant être câblée ou sans câble.

5. Procédé selon l'une des revendications précédentes, **caractérisé en ce que** l'élément de données présente une ou des propriétés de matière, en particulier une ou des propriétés de matière d'un produit,
en particulier d'un produit de départ et/ou d'un produit semi-fini et/ou d'un produit fini.

6. Procédé selon l'une des revendications précédentes, **caractérisé en ce que** l'élément de données présente une ou des propriétés de produit, en particulier une ou des propriétés de produit d'une substance de départ et/ou d'un produit semi-fini et/ou d'un produit fini.

7. Procédé selon l'une des revendications précédentes, **caractérisé en ce que** l'échange d'un ou de plusieurs éléments de données s'effectue pour tous les endroits, en particulier l'échange d'un élément de données est possible dans le monde entier et/ou **en ce que** l'échange d'un ou de plusieurs éléments de données s'effectue pour toutes les parties, en particulier pour toutes les entreprises.

8. Procédé selon l'une des revendications précédentes, **caractérisé en ce que** l'échange d'un ou de plusieurs éléments de données s'effectue à l'aide d'une interface logicielle standardisée.

9. Procédé selon l'une des revendications précédentes, **caractérisé en ce que** les niveaux (1, 2, 3, 4, 5, 6, 7, 8) peuvent lire et/ou écrire l'élément de données.

10. Procédé selon l'une des revendications précédentes, **caractérisé en ce que** le deuxième niveau se situe chronologiquement après le premier niveau.

11. Procédé selon l'une des revendications précédentes, **caractérisé en ce que** le produit, en particulier le produit fini, est pourvu d'un identifiant individuel de produit et présente celui-ci dans la suite et/ou **en ce qu'**une machine de production d'un produit en bande continue en matériau synthétique est pourvue d'un identifiant individuel de machine de production et présente celui-ci dans la suite et/ou **en ce qu'**une machine de transformation ultérieure de produit en bande continue en matériau synthétique est pourvue d'un identifiant individuel de machine de transformation ultérieure et présente celui-ci dans la suite et/ou **en ce qu'**un véhicule de transport pour un transport du produit est pourvu d'un identifiant individuel de véhicule de transport et présente celui-ci dans la suite.

12. Procédé selon l'une des revendications précédentes, **caractérisé en ce qu'**il convient pour la classification d'une qualité de procédé dans la chaîne de création de valeur présentant plusieurs niveaux d'un produit en bande continue en matériau synthétique, par exemple d'une bande de feuille soufflée, d'une bande de feuille plate ou d'une bande de non-tissé, pour la production d'un produit fini, par exemple d'une feuille d'emballage, d'une feuille agricole, d'une feuille thermoformée, d'une plaque en matériau synthétique ou d'une couche, la classification s'effectuant à l'aide d'informations et/ou de propriétés sur les niveaux et/ou sur une matière première et/ou sur un produit semi-fini et/ou sur le produit fini,
dans lequel, pour au moins une information ou une propriété, de préférence pour plusieurs informations ou propriétés, de manière particulièrement préférée pour toutes les informations ou propriétés, une bonne zone et/ou une mauvaise est/sont définie(s)
dans lequel des informations et/ou des propriétés sont déterminées le long des niveaux de création de valeur et transmises et sauvegardées - de préférence de manière authentifiée au moyen d'un signe distinctif ou d'un identifiant - en tant qu'élément de données localement ou surtout à distance dans un ensemble de données par l'intermédiaire d'un protocole de communication,
dans lequel l'information pure et/ou la propriété pure et/ou la bonne ou la mauvaise zone de l'information et/ou de la propriété de chaque niveau de création de valeur sont enregistrée(s),
dans lequel la classification d'un procédé du niveau (1) de création de valeur, d'une chaîne de procédé le long de plusieurs niveaux de création de valeur, du produit fini et/ou d'un fabricant est effectuée à l'aide du jeu de données.

13. Dispositif de mise en œuvre du procédé selon l'une des revendications précédentes 1 à 12, qui met à disposition, consulte et utilise un élément de données dans une chaîne de création de valeur d'un produit en bande continue en matériau synthétique en vue de la production d'un produit fini, présentant
un moyen pour l'échange sur tous les niveaux, au moyen d'un protocole de communication (23) et d'un support de données (9), d'une multitude d'éléments de données différents en vue de la production du produit fini dans la chaîne de création de valeur,
le dispositif présentant un moyen conçu pour l'utilisation de l'élément de données dans la chaîne de création de valeur, à savoir pour la mise à disposition de l'élément de données par le premier niveau au moyen du protocole de communication sur le support de données et pour la consultation de l'élément de données sur le support de données par un deuxième niveau au moyen du protocole de communication et pour l'utilisation au niveau d'une machine du deuxième niveau,
le produit en bande continue (42) en matériau synthétique étant un non-tissé filé-lié, un non-tissé obtenu par fusion-soufflage ou un non-tissé composite ou une feuille soufflée ou une feuille plane ou une plaque en matériau synthétique ou une feuille en matériau synthétique et
le dispositif présentant des moyens qui sont conçus, en vue de l'échange des éléments de données, pour lier un appareil (8) électronique d'acquisition de données, au moyen d'une liaison de transmission de données (23) au support de données (9), de préférence une mémoire (9) indépendante du lieu, pour la sauvegarde des données,
le dispositif présentant des moyens qui sont conçus pour transférer l'élément de données au moins du premier niveau (1) de la chaîne (0) de création de valeur, au moyen de l'appareil (8) électronique d'acquisition de données, au support de données (9) et
le dispositif présentant des moyens qui sont conçus pour permettre l'utilisation de l'élément de données par le deuxième niveau en vue de la transformation ultérieure du produit, à l'aide de la production ou de la fabrication duquel l'élément de données a été généré au premier niveau et mis à disposition dans la mémoire de données,
le dispositif présentant des moyens pour afficher, relier et mettre à disposition l'élément de données, par l'intermédiaire du dispositif (8) d'acquisition de données, en association avec le produit et avec au moins une machine de production et/ou une machine de transformation ultérieure et/ou un véhicule de transport et/ou pour son utilisation en tant qu'au moins un deuxième niveau,
**caractérisé en ce que**
le dispositif présente des moyens qui sont conçus pour utiliser un protocole de rouleau numérique, lequel présente un ou plusieurs éléments de données et est lié de manière univoque à un rouleau (27) qui est conçu pour le transport du produit en bande continue (42) ainsi que pour l'enroulement et le déroulement du produit en bande continue (42) et
le protocole de rouleau numérique contenant toutes les informations pertinentes de la chaîne (0) de création de valeur du produit en bande continue (42) qui sont liées au produit en bande continue (42) lié au rouleau.

14. Dispositif selon la revendication 13, **caractérisé en ce que** le dispositif peut être commandé à distance.

15. Dispositif selon l'une des revendications 13 et 14, **caractérisé en ce que** le dispositif dispose d'un appareil électronique d'acquisition de données, qui est prévu pour l'écriture d'un élément de données en vue de la mise à disposition de l'élément de données et/ou pour la lecture d'un élément de données en vue de la consultation de l'élément de données au moyen d'un protocole de communication pour l'échange sur tous les niveaux d'une multitude d'éléments de données différents en vue de la production d'un produit fini dans la chaîne de création de valeur, afin de mettre à disposition, de consulter et d'utiliser sur tous les niveaux l'élément de données dans la chaîne de création de valeur d'un produit en bande continue en matériau synthétique, en particulier d'un non-tissé filé-lié, d'un non-tissé obtenu par fusion-soufflage, d'un non-tissé composite, d'une feuille soufflée, d'une feuille plate, d'une plaque en matériau synthétique ou d'une feuille en matériau synthétique, en vue de la production d'un produit fini.

16. Dispositif selon la revendication 15, **caractérisé en ce que** l'appareil électronique d'acquisition de données est mobile et présente une batterie, une prise ou un générateur de tension.

17. Dispositif selon la revendication 15, **caractérisé en ce que** l'appareil électronique d'acquisition de données est installé de manière stationnaire sur une machine de production et/ou sur une machine de transformation ultérieure et/ou sur un véhicule de transport.

18. Dispositif selon la revendication 15, **caractérisé en ce que** l'appareil électronique d'acquisition de données est installé de manière stationnaire sur le produit semi-fini, sur le produit et/ou sur le produit fini.

19. Dispositif selon l'une des revendications 15 à 18, **caractérisé en ce qu'**un déclencheur pour l'envoi et/ou la finalisation d'un jeu de données est prévu.

20. Dispositif selon la revendication 19, **caractérisé en ce que** le déclencheur présente une activation mécanique.

21. Dispositif selon la revendication 20, **caractérisé en ce que** le déclencheur présente une activation électronique, en particulier au moyen d'un capteur optique et/ou d'un capteur sans fil.

22. Dispositif selon l'une des revendications 19 à 21, **caractérisé en ce qu'**un élément de couplage électronique pour l'échange de données avec une machine est prévu.
